(19) Europäisches Patentamt / European Patent Office / Office européen des brevets

(11) **EP 3 929 736 A1**

(12) **EUROPEAN PATENT APPLICATION**

(43) Date of publication:
**29.12.2021 Bulletin 2021/52**

(51) Int Cl.:
**G06F 9/30** *(2018.01)*  **G06F 17/16** *(2006.01)*
**G06F 9/38** *(2018.01)*

(21) Application number: **20214433.3**

(22) Date of filing: **16.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.06.2020 US 202016914347**

(71) Applicant: **INTEL Corporation
Santa Clara, CA 95054 (US)**

(72) Inventors:
- **Adelman, Menachem**
  **3229624 Haifa (IL)**
- **Valentine, Robert**
  **36054 Kiryat Tivon (IL)**
- **Ziv, Barukh**
  **32982 Haifaiiii (IL)**

- **Pollak, Yaroslav**
  **3604618 Kiryat Tivon (IL)**
- **Stupp, Gideon**
  **4481300 Oranit (IL)**
- **Gradstein, Amit**
  **30500 Binyamina (IL)**
- **Rubanovich, Simon**
  **34792 Haifa (IL)**
- **Sperber, Zeev**
  **3092832 Zichron Yackov (IL)**
- **Charney, Mark**
  **Lexington, Massachusetts 02421 (US)**
- **Hughes, Christopher**
  **Santa Clara, California 95051 (US)**
- **Heinecke, Alexander**
  **San Jose, Massachusetts 95134 (US)**

(74) Representative: **Samson & Partner Patentanwälte mbB
Widenmayerstraße 6
80538 München (DE)**

(54) **APPARATUSES, METHODS, AND SYSTEMS FOR INSTRUCTIONS FOR MOVING DATA BETWEEN TILES OF A MATRIX OPERATIONS ACCELERATOR AND VECTOR REGISTERS**

(57)     Systems, methods, and apparatuses relating to one or more instructions that utilize direct paths for loading data into a tile from a vector register and/or storing data from a tile into a vector register are described. In one embodiment, a system includes a matrix operations accelerator circuit comprising a two-dimensional grid of processing elements, a plurality of registers that represents a two-dimensional matrix coupled to the two-dimensional grid of processing elements, and a coupling to a cache; and a hardware processor core comprising: a vector register, a decoder to decode a single instruction into a decoded single instruction, the single instruction including a first field that identifies the two-dimensional matrix, a second field that identifies a set of elements of the two-dimensional matrix, and a third field that identifies the vector register, and an execution circuit to execute the decoded single instruction to cause a store of the set of elements from the plurality of registers that represents the two-dimensional matrix into the vector register by a coupling of the hardware processor core to the matrix operations accelerator circuit that is separate from the coupling to the cache.

FIG. 25

## Description

### TECHNICAL FIELD

The disclosure relates generally to computer processor architecture, and, more specifically, to circuitry to implement an instruction for moving data between tiles of a matrix operations accelerator and vector registers.

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macro-instructions.

### BRIEF DESCRIPTION OF THE DRAWINGS

The present disclosure is illustrated by way of example and not limitation in the figures of the accompanying drawings, in which like references indicate similar elements and in which:

Figure 1A illustrates an embodiment of configured tiles according to embodiments of the disclosure.
Figure 1B illustrates an embodiment of configured tiles according to embodiments of the disclosure.
Figure 2 illustrates several examples of matrix storage according to embodiments of the disclosure.
Figure 3 illustrates an embodiment of a system utilizing a matrix (tile) operations accelerator according to embodiments of the disclosure.
Figures 4 and 5 show different embodiments of how memory is shared using a matrix operations accelerator.
Figure 6 illustrates an embodiment of matrix multiply accumulate operation using tiles ("TMMA").
Figure 7 illustrates an embodiment of a subset of the execution of an iteration of a chained fused multiply accumulate instruction.
Figure 8 illustrates an embodiment of a subset of the execution of an iteration of a chained fused multiply accumulate instruction.
Figure 9 illustrates an embodiment of a subset of the execution of an iteration of a chained fused multiply accumulate instruction.
Figure 10 illustrates an embodiment of a subset of the execution of an iteration of chained fused multiply accumulate instruction.
Figure 11 illustrates power-of-two sized SIMD implementations wherein the accumulators use input sizes that are larger than the inputs to the multipliers according to an embodiment.
Figure 12 illustrates an embodiment of a system utilizing matrix operations circuitry.
Figure 13 illustrates an embodiment of a processor core pipeline supporting matrix operations using tiles.
Figure 14 illustrates an embodiment of a processor core pipeline supporting matrix operations using tiles.
Figure 15 illustrates an example of a matrix expressed in row major format and column major format.
Figure 16 illustrates an example of usage of matrices (tiles).
Figure 17 illustrates an embodiment a method of usage of matrices (tiles).
Figure 18 illustrates support for configuration of the usage of tiles according to an embodiment.
Figure 19 illustrates an embodiment of a description of the matrices (tiles) to be supported.
Figures 20(A)-(D) illustrate examples of register(s).
Figure 21 illustrates an embodiment of a system utilizing a matrix (tile) operations accelerator according to embodiments of the disclosure.
Figure 22 illustrates an embodiment of a system comprising a matrix (tile) operations accelerator that utilizes one or more direct paths for loading data into a tile from a vector register and/or storing data from a tile into a vector register according to embodiments of the disclosure.
Figure 23 illustrates a hardware processor coupled to storage that includes one or more "tile to vector register" and/or a "vector register to tile" instructions according to embodiments of the disclosure.
Figure 24 illustrates a method of processing a "tile to vector register" instruction according to embodiments of the disclosure.
Figure 25 is a block diagram illustrating use of a TILEMOVROWE instruction according to embodiments of the disclosure.

Figure 26 is a block diagram illustrating use of a TILEMOVALLE instruction according to embodiments of the disclosure.

Figure 27 illustrates an embodiment of a system comprising a matrix (tile) operations accelerator that utilizes one or more direct paths for loading data into a tile from a vector register and/or storing data from a tile into a vector register that includes conversion circuitry according to embodiments of the disclosure.

Figure 28 illustrates a hardware processor coupled to storage that includes one or more "tile to vector register" and/or a "vector register to tile" instructions and a matrix (tile) operations accelerator that utilizes one or more direct paths for loading data into a tile from a vector register and/or storing data from a tile into a vector register that includes conversion circuitry according to embodiments of the disclosure.

Figure 29 illustrates a method of processing a "vector register to tile" instruction according to embodiments of the disclosure.

Figure 30 is a block diagram illustrating use of a TILEXMOVE instruction according to embodiments of the disclosure.

Figure 31A is a block diagram illustrating a generic vector friendly instruction format and class A instruction templates thereof according to embodiments of the disclosure.

Figure 31B is a block diagram illustrating the generic vector friendly instruction format and class B instruction templates thereof according to embodiments of the disclosure.

Figure 32A is a block diagram illustrating fields for the generic vector friendly instruction formats in Figures 31A and 31B according to embodiments of the disclosure.

Figure 32B is a block diagram illustrating the fields of the specific vector friendly instruction format in Figure 32A that make up a full opcode field according to one embodiment of the disclosure.

Figure 32C is a block diagram illustrating the fields of the specific vector friendly instruction format in Figure 32A that make up a register index field according to one embodiment of the disclosure.

Figure 32D is a block diagram illustrating the fields of the specific vector friendly instruction format in Figure 32A that make up the augmentation operation field 3150 according to one embodiment of the disclosure.

Figure 33 is a block diagram of a register architecture according to one embodiment of the disclosure

Figure 34A is a block diagram illustrating both an exemplary in-order pipeline and an exemplary register renaming, out-of-order issue/execution pipeline according to embodiments of the disclosure.

Figure 34B is a block diagram illustrating both an exemplary embodiment of an in-order architecture core and an exemplary register renaming, out-of-order issue/execution architecture core to be included in a processor according to embodiments of the disclosure.

Figure 35A is a block diagram of a single processor core, along with its connection to the on-die interconnect network and with its local subset of the Level 2 (L2) cache, according to embodiments of the disclosure.

Figure 35B is an expanded view of part of the processor core in Figure 35A according to embodiments of the disclosure.

Figure 36 is a block diagram of a processor that may have more than one core, may have an integrated memory controller, and may have integrated graphics according to embodiments of the disclosure.

Figure 37 is a block diagram of a system in accordance with one embodiment of the present disclosure.

Figure 38 is a block diagram of a more specific exemplary system in accordance with an embodiment of the present disclosure.

Figure 39, shown is a block diagram of a second more specific exemplary system in accordance with an embodiment of the present disclosure.

Figure 40, shown is a block diagram of a system on a chip (SoC) in accordance with an embodiment of the present disclosure.

Figure 41 is a block diagram contrasting the use of a software instruction converter to convert binary instructions in a source instruction set to binary instructions in a target instruction set according to embodiments of the disclosure.

## DETAILED DESCRIPTION

In the following description, numerous specific details are set forth. However, it is understood that embodiments may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Matrices may be increasingly important in many computing tasks such as machine learning and other bulk data processing. Deep Learning is a class of machine learning algorithms. Deep learning architectures, such as deep neural networks, may be applied to fields including computer vision, speech recognition, natural language processing, audio recognition, social network filtering, machine translation, bioinformatics and drug design.

Inference and training, two tools used for deep learning, may utilize low precision arithmetic. Maximizing throughput of deep learning algorithms and computations may assist in meeting the needs of deep learning processors, for example, those performing deep learning in a data center.

Matrix-matrix multiplication (a.k.a., GEMM or General Matrix Multiplication) is a compute-heavy operation on certain processors. Special hardware for matrix multiplication (e.g., GEMM) is a good option for improving the peak compute (and energy efficiency) of certain applications, such as deep learning. Some of these applications, including deep learning, can operate on input data elements with relatively few bits without losing accuracy, as long as the output elements have enough bits (e.g., more than the inputs).

In certain processors, handling matrices is a difficult and/or instruction intensive task. For example, rows of a matrix could be put into a plurality of packed data (e.g., SIMD or vector) registers and then operated on individually. For example, an add two 8x2 (e.g., row by column) matrices may require a load or gather into four packed data registers depending upon data sizes. Then a first add of packed data registers corresponding to a first row from each matrix is performed and a second add of packed data registers corresponding to a second row from each matrix is performed. Then the resulting packed data registers are scattered back to memory. While for small matrices this scenario may be acceptable, it is often not acceptable with larger matrices.

## Discussion

Described herein are mechanisms to support matrix operations in computer hardware such as central processing units (CPUs), graphic processing units (GPUs), and accelerators. The matrix operations utilize 2-dimensional (2-D) data structures representing one or more packed regions of memory such as registers. Throughout this description, these 2-D data structures are referred to as tiles. Note that a matrix may be smaller than a tile (use less than all of a tile) or utilize a plurality of tiles (the matrix is larger than the size of any one tile). Throughout the description, matrix (tile) language is used to indicate operations performed using tiles that impact a matrix; whether or not that matrix is larger than any one tile is not typically relevant.

Each tile may be acted upon by different operations such as those that are detailed herein and include, but are not limited to: matrix (tile) multiplication, tile add, tile subtract, tile diagonal, tile zero, tile transform, tile dot product, tile broadcast, tile row broadcast, tile column broadcast, tile multiplication, tile multiplication and accumulation, tile move, etc. Additionally, support for operators such as the use of a scale and/or bias may be used with these operations or in support of non-numeric applications in the future, for instance, OpenCL "local memory," data compression/decompression, etc. Also described herein are instructions for performing matrix operation (e.g., TILEPARTIALDOTPRODUCT) instructions.

Portions of storage (such as memory (non-volatile and volatile), registers, cache, etc.) are arranged into tiles of different horizontal and vertical dimensions. For example, a tile may have horizontal dimension of 4 (e.g., four rows of a matrix) and a vertical dimension of 8 (e.g., 8 columns of the matrix). Typically, the horizontal dimension is related to element sizes (e.g., 2-, 4-, 8-, 16-, 32-, 64-, 128-bit, etc.). Multiple datatypes (single precision floating point, double precision floating point, integer, etc.) may be supported.

Exemplary usage of configured tiles

In some embodiments, tile parameters can be configured. For example, a given tile may be configured to provide tile options. Exemplary tile options include but are not limited to: a number of rows of the tile, a number of columns of the tile, whether the tile is VALID, and whether the tile consists of a PAIR of equal-sized tiles.

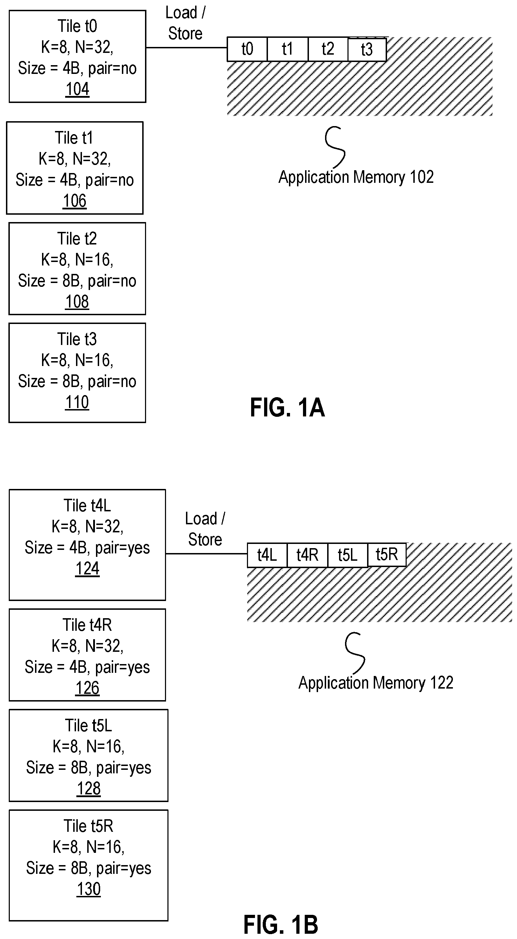

Figure 1A illustrates an embodiment of configured tiles. As shown, 4 kB of application memory 102 have stored thereon 4 1kB titles, tile t0 104, tile t1 106, tile t2 108, and tile t3 110. In this example, the 4 tiles do not consist of pairs, and each have elements arranged in rows and columns. Tile t0 104 and tile t1 106 have K rows and N columns of 4-byte elements (e.g., single precision data), where K equals 8 and N=32. Tile t2 108 and tile t3 110 have K rows and N/2 columns of 8-byte elements (e.g., double precision data). As the double precision operands are twice the width of single precision, this configuration is consistent with a palette, used to provide tile options, supplying at least 4 names with total storage of at least 4 kB. In operation, the tiles can be loaded from and stored to memory using load and store operations. Depending upon the instruction encoding scheme used, the amount of available application memory, as well as the size, number, and configuration of available tiles varies.

Figure 1B illustrates an embodiment of configured tiles. As shown, 4 kB of application memory 122 have stored thereon 2 pairs of IkB-titles, the first pair being tile t4L 124 and tile t4R 126, and the second pair being tile t5L 128 and tile t5R 130. As shown the pairs of tiles are divided into a left tile and a right tile. In other embodiments, the pair of tiles are divided into an even tile and an odd tile. In this example, the 4 tiles each have elements arranged in rows and columns. Tile t4L 124 and tile t4R 126 have K rows and N columns of 4-byte elements (e.g., single precision floating point data), where K equals 8 and N equals 32. Tile t5L 128 and tile t5R 130 have K rows and N/2 columns of 8-byte elements (e.g., double precision floating point data). As the double precision operands are twice the width of single precision, this configuration is consistent with a palette, used to provide tile options, supplying at least 2 names with total storage of at least 4 kB. The four tiles of Figure 1A use 4 names, each naming a 1 kB tile, whereas the 2 pairs of tiles in Figure 1B can use 2 names to specify the paired tiles. In some embodiments, tile instructions accept a name of a paired tile as an operand. In operation, the tiles can be loaded from and stored to memory using load and store operations. Depending upon the instruction encoding scheme used, the amount of available application memory, as well as the size, number, and configuration of available tiles varies.

In some embodiments, tile parameters are definable. For example, a "palette" is used to provide tile options. Exemplary options include, but are not limited to: the number of tile names, the number of bytes in a row of storage, the number of rows and columns in a tile, etc. For example, a maximum "height" (number of rows) of a tile may be defined as:

Tile Max Rows = Architected Storage / (The Number of Palette Names * The Number of Bytes per row).

As such, an application can be written such that a fixed usage of names will be able to take advantage of different storage sizes across implementations.

Configuration of tiles is done using a tile configuration ("TILECONFIG") instruction, where a particular tile usage is defined in a selected palette. This declaration includes the number of tile names to be used, the requested number of rows and columns per name (tile), and, in some embodiments, the requested datatype of each tile. In some embodiments, consistency checks are performed during the execution of a TILECONFIG instruction to determine that it matches the restrictions of the palette entry.

Exemplary tile storage types

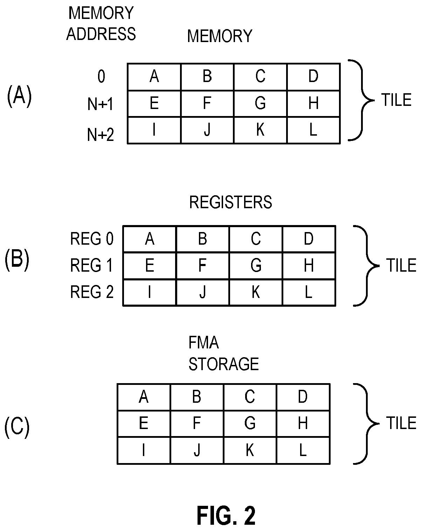

Figure 2 illustrates several examples of matrix storage. In (A), a tile is stored in memory. As shown, each "row" consists of four packed data elements. To get to the next "row," a stride value is used. Note that rows may be consecutively stored in memory. Strided memory accesses allows for access of one row to then next when the tile storage does not map the underlying memory array row width.

Tile loads from memory and stores to memory are typically strided accesses from the application memory to packed rows of data. Exemplary TILELOAD and TILESTORE instructions, or other instruction references to application memory as a TILE operand in load-op instructions, are, in some embodiments, restartable to handle (up to) 2*rows of page faults, unmasked floating point exceptions, and/or interrupts per instruction.

In (B), a matrix is stored in a tile comprised of a plurality of registers such as packed data registers (single instruction, multiple data (SIMD) or vector registers). In this example, the tile is overlaid on three physical registers. Typically, consecutive registers are used, however, this need not be the case.

In (C), a matrix is stored in a tile in non-register storage accessible to a fused multiply accumulate (FMA) circuit used in tile operations. This storage may be inside of a FMA, or adjacent to it. Additionally, in some embodiments, discussed below, the storage may be for a data element and not an entire row or tile.

The supported parameters for the TMMA architecture are reported via CPUID. In some embodiments, the list of information includes a maximum height and a maximum SIMD dimension. Configuring the TMMA architecture requires specifying the dimensions for each tile, the element size for each tile and the palette identifier. This configuration is done by executing the TILECONFIG instruction.

Successful execution of a TILECONFIG instruction enables subsequent TILE operators. A TILERELEASEALL instruction clears the tile configuration and disables the TILE operations (until the next TILECONFIG instructions executes). In some embodiments, XSAVE, XSTORE, etc. are used in context switching using tiles. In some embodiments, 2 XCR0 bits are used in XSAVE, one for TILECONFIG metadata and one bit corresponding to actual tile payload data.

TILECONFIG not only configures the tile usage, but also sets a state variable indicating that the program is in a region of code with tiles configured. An implementation may enumerate restrictions on other instructions that can be used with a tile region such as no usage of an existing register set, etc.

Exiting a tile region is typically done with the TILERELEASEALL instruction. It takes no parameters and swiftly invalidates all tiles (indicating that the data no longer needs any saving or restoring) and clears the internal state corresponding to being in a tile region.

In some embodiments, tile operations will zero any rows and any columns beyond the dimensions specified by the tile configuration. For example, tile operations will zero the data beyond the configured number of columns (factoring in the size of the elements) as each row is written. For example, with 64-byte rows and a tile configured with 10 rows and 12 columns, an operation writing FP32 elements would write each of the first 10 rows with 12*4 bytes with output/result data and zero the remaining 4*4 bytes in each row. Tile operations also fully zero any rows after the first 10 configured rows. When using 1K tile with 64-byte rows, there would be 16 rows, so in this example, the last 6 rows would also be zeroed.

In some embodiments, a context restore instruction (e.g., XRSTOR), when loading data, enforces that the data beyond the configured rows for a tile will be maintained as zero. If there is no valid configuration, all rows are zeroed. XRSTOR of tile data can load garbage in the columns beyond those configured. It should not be possible for XRSTOR to clear beyond the number of columns configured because there is not an element width associated with the tile configuration.

Context save (e.g., XSAVE) exposes the entire TILE storage area when writing it to memory. If XRSTOR loaded garbage data into the rightmost part of a tile, that data will be saved by XSAVE. XSAVE will write zeros for rows beyond the number specified for each tile.

In some embodiments, tile instructions are restartable. The operations that access memory allow restart after page faults. The computational instructions that deal with floating point operations also allow for unmasked floating-point exceptions, with the masking of the exceptions controlled by a control and/or status register.

To support restarting instructions after these events, the instructions store information in the start registers detailed below.

**Matrix (Tile) Operation Systems**

Exemplary Hardware Support

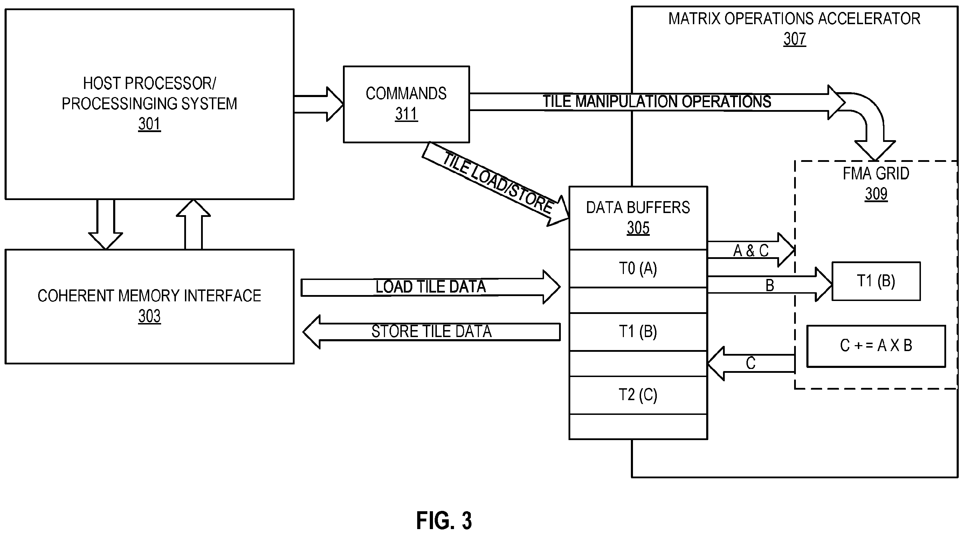

Figure 3 illustrates an embodiment of a system utilizing a matrix (tile) operations accelerator. In this illustration, a host processor/processing system 301 communicates commands 311 (e.g., matrix manipulation operations such as arithmetic or matrix manipulation operations, or load and store operations) to a matrix operations accelerator 307. However, this is shown this way for discussion purposes only. As detailed later, this accelerator 307 may be a part of a processing core. Typically, commands 311 that are tile manipulation operator instructions will refer to tiles as register-register ("reg-reg") or register-memory ("reg-mem") format. Other commands such as TILESTORE, TILELOAD, TILECONFIG, etc., do not perform data operations on a tile. Commands may be decoded instructions (e.g., micro-ops) or macro-instructions for the accelerator 307 to handle.

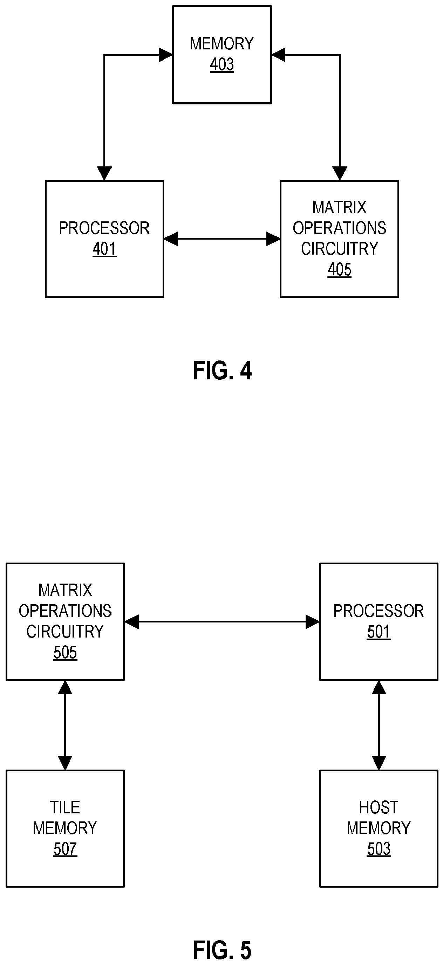

In this example, a coherent memory interface 303 is coupled to the host processor/processing system 301 and matrix operations accelerator 307 such that they can share memory. Figures 4 and 5 show different embodiments of how memory is shared using a matrix operations accelerator. As shown in Figure 4, the host processor 401 and matrix operations accelerator circuitry 405 share the same memory 403. Figure 5 illustrates an embodiment where the host processor 501 and matrix operations accelerator 505 do not share memory but can access each other's memory. For example, processor 501 can access tile memory 507 and utilize its host memory 503 as normal. Similarly, the matrix operations accelerator 505 can access host memory 503, but more typically uses its own memory 507. Note these memories may be of different types.

In some embodiments, tiles are supported using an overlay over physical registers. For example, a tile may utilize 16 1,024-bit registers, 32 512-bit registers, etc. depending on the implementation. In some embodiments, the matrix operations utilize 2-dimensional (2-D) data structures representing one or more packed regions of memory such as registers. Throughout this description, these 2-D data structures are referred to as tiles or tile registers.

In some embodiments, the matrix operations accelerator 307 includes a plurality of FMAs 309 coupled to data buffers 305 (in some implementations, one or more of these buffers 305 are stored in the FMAs of the grid as shown). The data buffers 305 buffer tiles loaded from memory and/or tiles to be stored to memory (e.g., using a tileload or tilestore instruction). Data buffers may be, for example, a plurality of registers. Typically, these FMAs are arranged as a grid of chained FMAs 309 which are able to read and write tiles. In this example, the matrix operations accelerator 307 is to perform a matrix multiply operation using tiles T0, T1, and T2. At least one of tiles is housed in the FMA grid 309. In some embodiments, all tiles in an operation are stored in the FMA grid 309. In other embodiments, only a subset is stored in the FMA grid 309. As shown, T1 is housed and T0 and T2 are not. Note that A, B, and C refer to the matrices of these tiles which may or may not take up the entire space of the tile.

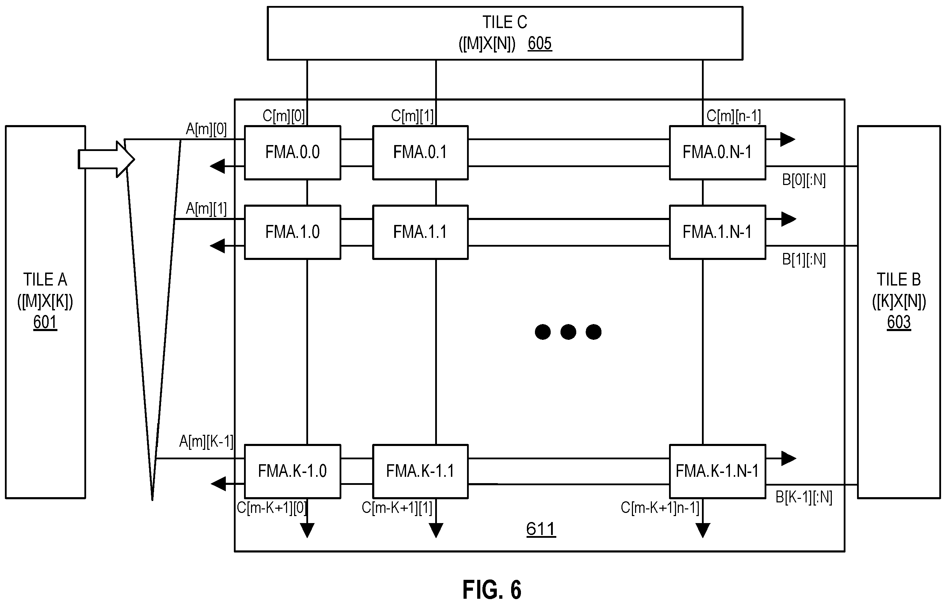

Figure 6 illustrates an embodiment of matrix multiply accumulate operation using tiles ("TMMA").

The number of rows in the matrix (TILE A 601) matches the number of serial (chained) FMAs comprising the computation's latency in certain embodiments. An implementation is free to recirculate on a grid of smaller height, but the computation remains the same.

The source/destination vector comes from a tile of N rows (TILE C 605) and the grid of FMAs 611 performs N vector-matrix operations resulting in a complete instruction performing a matrix multiplication of tiles. Tile B 603 is the other vector source and supplies "broadcast" terms to the FMAs in each stage.

In operation, in some embodiments, the elements of matrix B (stored in a tile B 603) are spread across the rectangular grid of FMAs. Matrix B (stored in tile A 601) has its elements of a row transformed to match up with the columnar dimension of the rectangular grid of FMAs. At each FMA in the grid, an element of A and B are multiplied and added to the incoming summand (from above in the Figure) and the outgoing sum is passed to the next row of FMAs (or the final output).

The latency of a single step is proportional to K (row height of matrix B) and dependent TMMAs typically have enough source-destination rows (either in a single tile or across tile) to hide that latency. An implementation may also split the SIMD (packed data element) dimension M (row height of matrix A) across time steps, but this simply changes the constant that K is multiplied by. When a program specifies a smaller K than the maximum enumerated by the TMMA, an implementation is free to implement this with "masking" or "early outs."

The latency of an entire TMMA is proportional to N*K. The repeat rate is proportional to N. The number of MACs per TMMA instruction is N*K*M.

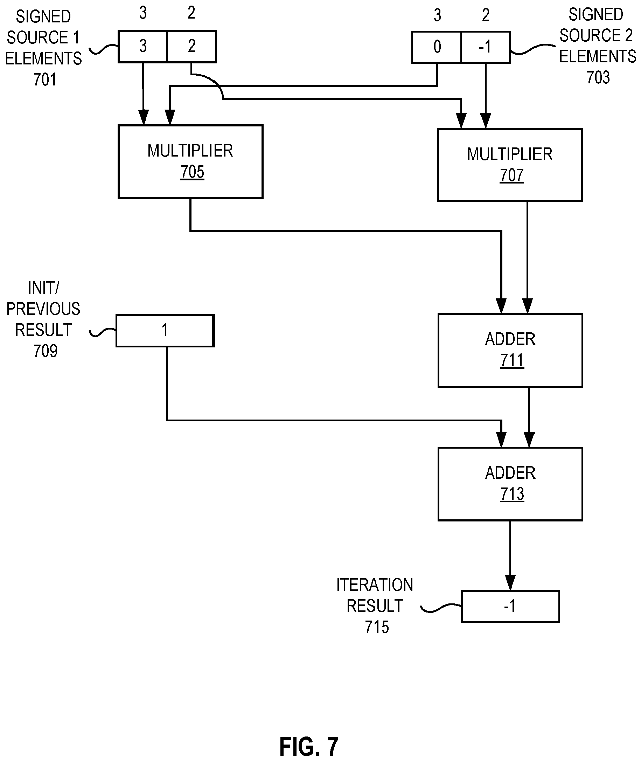

Figure 7 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1 701) and a second signed source (source 2 703) each have four packed data elements. Each of these packed data elements stores signed data such as floating-point data. A third signed source (source 3 709) has two packed data elements, each of which stores signed data. The sizes of the first and second signed sources 701 and 703 are half that of the third signed source (initial value or previous result) 709. For example, the first and second signed sources 701 and 703 could have 32-bit packed data elements (e.g., single precision floating point) while the third signed source 709 could have 64-bit packed data elements (e.g., double precision floating point).

In this illustration, only the two most significant packed data element positions of the first and second signed sources 701 and 703 and the most significant packed data element position of the third signed source 709 are shown. Of course, the other packed data element positions would also be processed.

As illustrated, packed data elements are processed in pairs. For example, the data of the most significant packed data element positions of the first and second signed sources 701 and 703 are multiplied using a multiplier circuit 705, and the data from second most significant packed data element positions of the first and second signed sources 701 and 703 are multiplied using a multiplier circuit 707. In some embodiments, these multiplier circuits 705 and 707 are reused for other packed data elements positions. In other embodiments, additional multiplier circuits are used so that the packed data elements are processed in parallel. In some contexts, parallel execution is done using lanes that are the size of the signed third source 709. The results of each of the multiplications are added using addition circuitry 711.

The result of the addition of the results of the multiplications is added to the data from most significant packed data element position of the signed source 3 709 (using a different adder 713 or the same adder 711).

Finally, the result of the second addition is either stored into the signed destination 715 in a packed data element position that corresponds to the packed data element position used from the signed third source 709 or passed on to the next iteration if there is one. In some embodiments, a writemask is applied to this storage such that if a corresponding writemask (bit) is set, the storage happens, and, if not set, the storage does not happen.

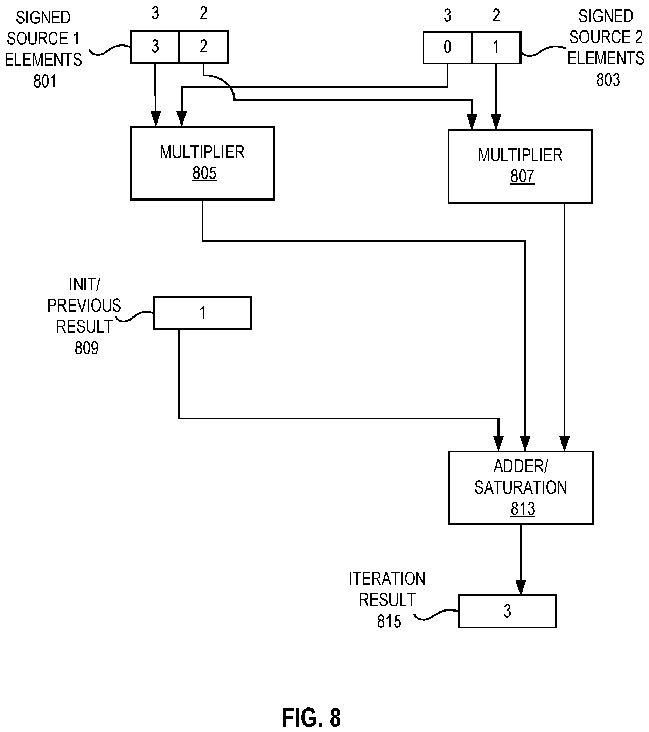

Figure 8 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1 801) and a second signed source (source 2 803) each have four packed data elements. Each of these packed data elements stores signed data such as integer data. A third signed source (source 3 809) has two packed data elements, each of which stores signed data. The sizes of the first and second signed sources 801 and 803 are half that of the third signed source 809. For example, the first and second signed sources 801 and 803 could have 32-bit packed data elements (e.g., single precision floating point) the third signed source 809 could have 64-bit packed data elements (e.g., double precision floating point).

In this illustration, only the two most significant packed data element positions of the first and second signed sources 801 and 803 and the most significant packed data element position of the third signed source 809 are shown. Of course, the other packed data element positions would also be processed.

As illustrated, packed data elements are processed in pairs. For example, the data of the most significant packed data element positions of the first and second signed sources 801 and 803 are multiplied using a multiplier circuit 805, and the data from second most significant packed data element positions of the first and second signed sources 801 and 803 are multiplied using a multiplier circuit 807. In some embodiments, these multiplier circuits 805 and 807 are reused for other packed data elements positions. In other embodiments, additional multiplier circuits are used so that the packed data elements are processed in parallel. In some contexts, parallel execution is done using lanes that are the size of the signed third source (initial value or previous iteration result) 809. The results of each of the multiplications are added to the signed third source 809 using addition/saturation circuitry 813.

Addition/saturation (accumulator) circuitry 813 preserves a sign of an operand when the addition results in a value that is too big. In particular, saturation evaluation occurs on the infinite precision result between the multi-way-add and the write to the destination or next iteration. When the accumulator 813 is floating point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

Unsigned saturation means the output values are limited to a maximum unsigned number for that element width (all Is). Signed saturation means a value is limited to the be in the range between a minimum negative number and a max positive number for that element width (for bytes for example, the range is from -128 (= - 2^7) to 127(=2^7-1)).

The result of the addition and saturation check is stored into the signed result 815 in a packed data element position that corresponds to the packed data element position used from the signed third source 809 or passed on to the next iteration if there is one. In some embodiments, a writemask is applied to this storage such that if a corresponding writemask (bit) is set, the storage happens, and, if not set, the storage does not happen.

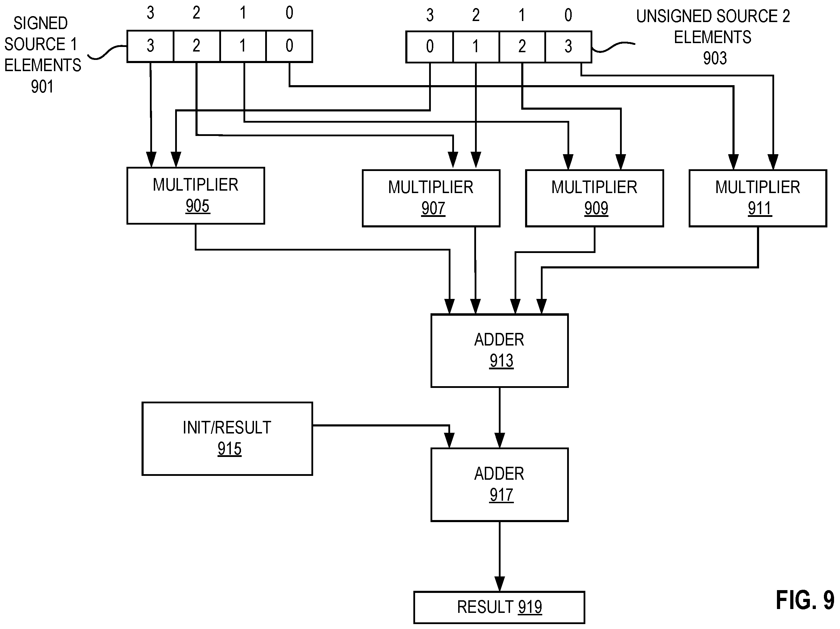

Figure 9 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source (source 1 901) and a second unsigned source (source 2 903) each have four packed data elements. Each of these packed data elements has data such as floating point or integer data. A third signed source (initial value or result 915) has a packed data element of which stores signed data. The sizes of the first and second sources 901 and 903 are a quarter of the third signed source 915. For example, the first and second sources 901 and 903 could have 16-bit packed data elements (e.g., word) and the third signed source 915 could have 64-bit packed data elements (e.g., double precision floating point or 64-bit integer).

In this illustration, the four most significant packed data element positions of the first and second sources 901 and 903 and the most significant packed data element position of the third signed source 915 are shown. Of course, other packed data element positions would also be processed if there are any.

As illustrated, packed data elements are processed in quadruplets. For example, the data of the most significant packed data element positions of the first and second sources 901 and 903 are multiplied using a multiplier circuit 905, data from second most significant packed data element positions of the first and second sources 901 and 903 are multiplied using a multiplier circuit 907, data from third most significant packed data element positions of the first and second sources 901 and 903 are multiplied using a multiplier circuit 909, and data from the least significant packed data element positions of the first and second sources 901 and 903 are multiplied using a multiplier circuit 911. In some embodiments, the signed packed data elements of the first source 901 are sign extended and the unsigned packed data elements of the second source 903 are zero extended prior to the multiplications.

In some embodiments, these multiplier circuits 905-911 are reused for other packed data elements positions. In other embodiments, additional multiplier circuits are used so that the packed data elements are processed in parallel. In some contexts, parallel execution is done using lanes that are the size of the signed third source 915. The results of each of the multiplications are added using addition circuitry 913.

The result of the addition of the results of the multiplications is added to the data from most significant packed data element position of the signed source 3 915 (using a different adder 917 or the same adder 913).

Finally, the result 919 of the second addition is either stored into the signed destination in a packed data element position that corresponds to the packed data element position used from the signed third source 915 or passed to the next iteration. In some embodiments, a writemask is applied to this storage such that if a corresponding writemask (bit) is set, the storage happens, and, if not set, the storage does not happen.

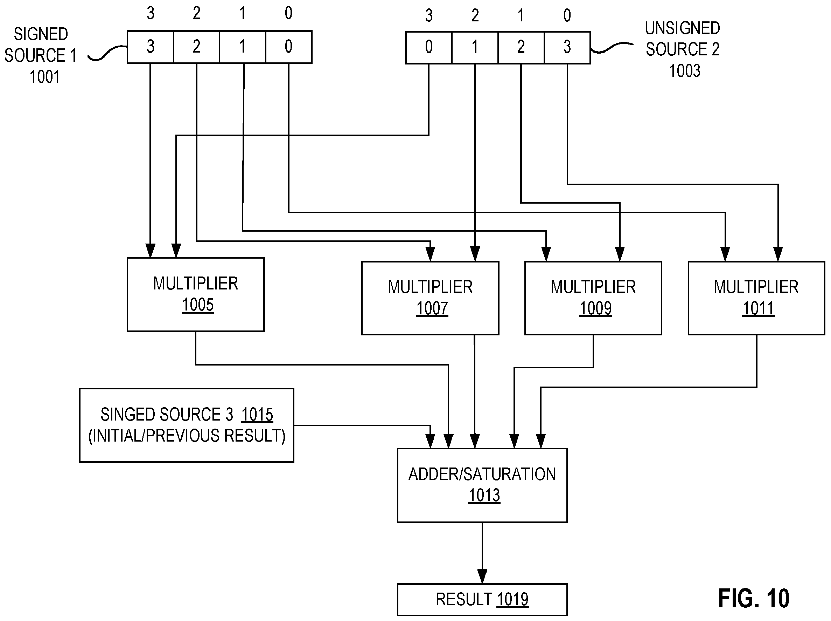

Figure 10 illustrates an embodiment of a subset of the execution of an iteration of chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source 1001 and a second unsigned source 1003 each have four packed data elements. Each of these packed data elements stores data such as floating point or integer data. A third signed source 1015 (initial or previous result) has a packed data element of which stores signed data. The sizes of the first and second sources are a quarter of the third signed source 1015 (initial or previous result). For example, the first and second sources could have 16-bit packed data elements (e.g., word) and the third signed source 1015 (initial or previous result) could have 64-bit packed data elements (e.g., double precision floating point or 64-bit integer).

In this illustration, the four most significant packed data element positions of the first signed source 1001 and the second unsigned source 1003 and the most significant packed data element position of the third signed source 1015 are shown. Of course, other packed data element positions would also be processed if there are any.

As illustrated, packed data elements are processed in quadruplets. For example, the data of the most significant packed data element positions of the first signed source 1001 and the second unsigned source 1003 are multiplied using a multiplier circuit 1005, data from second most significant packed data element positions of the first signed source 1001 and the second unsigned source 1003 are multiplied using a multiplier circuit 1007, data from third most significant packed data element positions of the first signed source 1001 and the second unsigned source 1003 are multiplied using a multiplier circuit 1009, and data from the least significant packed data element positions of the first signed source 1001 and the second unsigned source 1003 are multiplied using a multiplier circuit 1011. In some embodiments, the signed packed data elements of the first signed source 1001 are sign extended and the unsigned packed data elements of the second unsigned source 1003 are zero extended prior to the multiplications.

In some embodiments, these multiplier circuits 1005-1011 are reused for other packed data elements positions. In other embodiments, additional multiplier circuits are used so that the packed data elements are processed in parallel. In some contexts, parallel execution is done using lanes that are the size of third signed source 1015 (initial or previous result). The result of the addition of the results of the multiplications is added to the data from most significant packed data element position of third signed source 1015 (initial or previous result) using adder/saturation 1013 circuitry.

Addition/saturation (accumulator) circuitry 1013 preserves a sign of an operand when the addition results in a value that is too big or too small for signed saturation. In particular, saturation evaluation occurs on the infinite precision result between the multi-way-add and the write to the destination. When the accumulator 1013 is floating point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

The result 1019 of the addition and saturation check is stored into the signed destination in a packed data element position that corresponds to the packed data element position used from third signed source 1015 (initial or previous result) or passed to the next iteration. In some embodiments, a writemask is applied to this storage such that if a corresponding writemask (bit) is set, the storage happens, and, if not set, the storage does not happen.

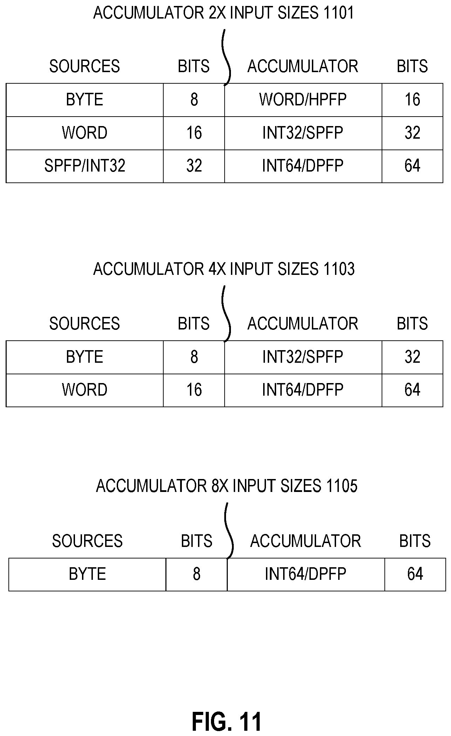

**Figure 11** illustrates power-of-two sized SIMD implementations wherein the accumulators use input sizes that are larger than the inputs to the multipliers according to an embodiment. Note the source (to the multipliers) and accumulator values may be signed or unsigned values. For an accumulator having 2X input sizes (in other words, the accumulator input value is twice the size of the packed data element sizes of the sources), table 1101 illustrates different configurations. For byte sized sources, the accumulator uses word or half-precision floating-point (HPFP) values that are 16-bit in size. For word sized sources, the accumulator uses 32-bit integer or single-precision floating-point (SPFP) values that are 32-bit in size. For SPFP or 32-bit integer sized sources, the accumulator uses 64-intenger or double-precision floating-point (DPFP) values that are 64-bit in size.

For an accumulator having 4X input sizes (in other words, the accumulator input value is four times the size of the packed data element sizes of the sources), table 1103 illustrates different configurations. For byte sized sources, the accumulator uses 32-bit integer or single-precision floating-point (SPFP) values that are 32-bit in size. For word sized sources, the accumulator uses 64-bit integer or double-precision floating-point (DPFP) values that are 64-bit in size in some embodiments.

For an accumulator having 8X input sizes (in other words, the accumulator input value is eight times the size of the packed data element sizes of the sources), table 1105 illustrates a configuration. For byte sized sources, the accumulator uses 64-bit integer.

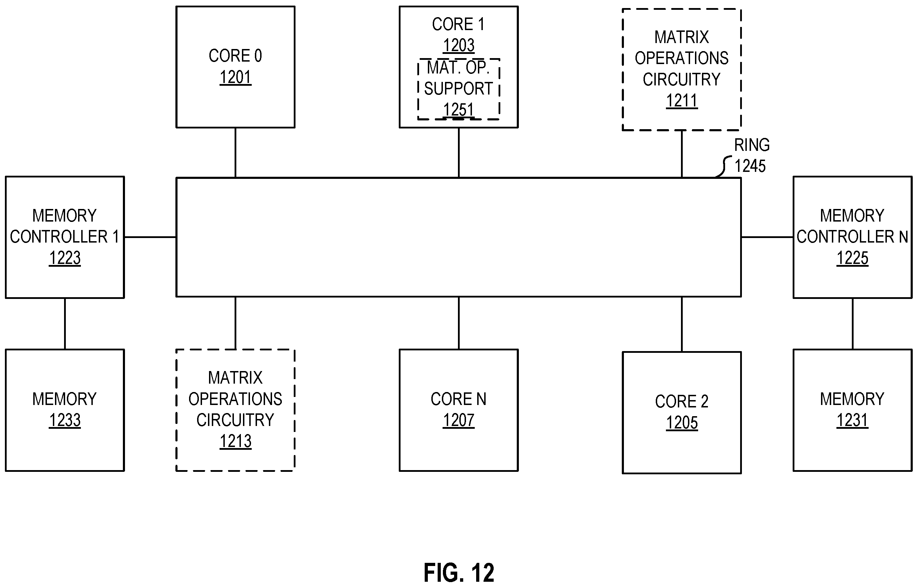

As hinted at earlier, matrix operations circuitry may be included in a core, or as an external accelerator. **Figure 12** illustrates an embodiment of a system utilizing matrix operations circuitry. In this illustration, multiple entities are coupled with a ring interconnect 1245.

A plurality of cores, core 0 1201, core 1 1203, core 2 1205, and core N 1207 provide non-tile-based instruction support. In some embodiments, matrix operations circuitry 1251 is provided in a core 1203, and in other embodiments matrix operations circuitry 1211 and 1213 are accessible on the ring interconnect 1245.

Additionally, one or more memory controllers 1223-1225 are provided to communicate with memory 1233 and 1231 on behalf of the cores and/or matrix operations circuitry.

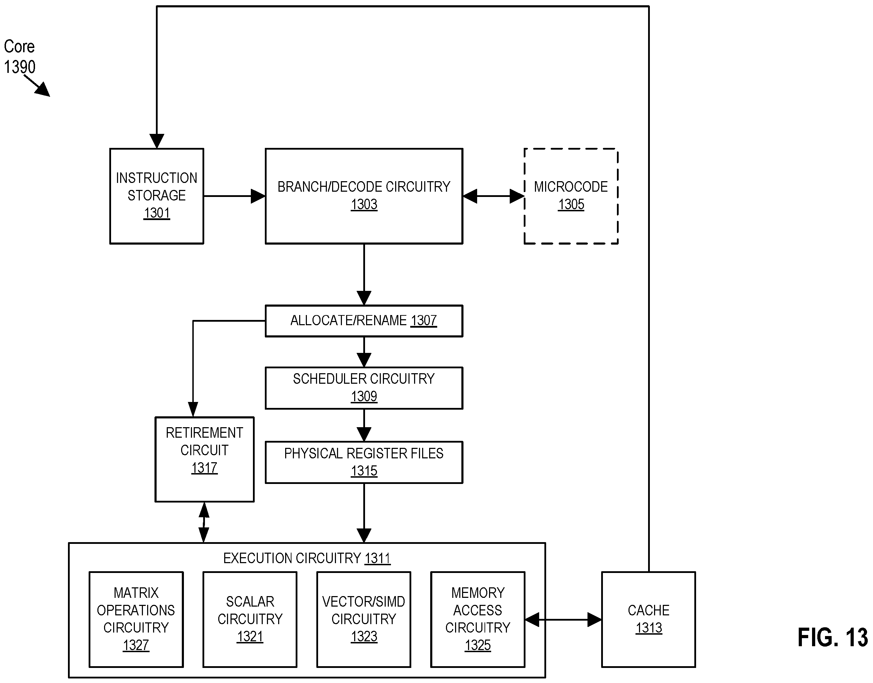

**Figure 13** illustrates an embodiment of a processor core pipeline supporting matrix operations using tiles. Branch prediction and decode circuitry 1303 performs branch predicting of instructions, decoding of instructions, and/or both from instructions stored in instruction storage 1301. For example, instructions detailed herein may be stored in instruction storage. In some implementations, separate circuitry is used for branch prediction and in some embodiments, at least some instructions are decoded into one or more micro-operations, microcode entry points, microinstructions, other instructions, or other control signals using microcode 1305. The branch prediction and decode circuitry 1303 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1303 is coupled to allocate/rename 1307 circuitry which is coupled, in some embodiments, to scheduler circuitry 1309. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1309 represents any number of different schedulers, including reservations stations, central instruction window, etc. The scheduler circuitry 1309 is coupled to, or includes, physical register file(s) 1315. Each of the physical register file(s) 1315 represents one or more physical register files, different ones of which store one or more different data types, such as scalar integer, scalar floating point, packed integer, packed floating point, vector integer, vector floating point, status (e.g., an instruction pointer that is the address of the next instruction to be executed), tiles, etc. In one embodiment, the physical register file(s) 1315 comprises vector registers circuitry, write mask registers circuitry, and scalar registers circuitry. These register circuits may provide architectural vector registers, vector mask registers, and general-purpose registers. The physical register file(s) 1315 is overlapped by a retirement circuit 1317 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1317 and the physical register file(s) 1315 are coupled to the execution circuitry 1311.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (LI) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1311 is a set of one or more execution circuits, including scalar circuitry 1321, vector/SIMD circuitry 1323, and matrix operations circuitry 1327, as well as memory access circuitry 1325 to access cache 1313. The execution circuits perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scalar circuitry 1321 performs scalar operations, the vector/SIMD circuitry 1323 performs vector/SIMD operations, and matrix operations circuitry 1327 performs matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1303 performs a decode stage; 3) the allocate/rename 1307 circuitry performs an allocation stage and renaming stage; 4) the scheduler circuitry 1309 performs a schedule stage; 5) physical register file(s) (coupled to, or included in, the scheduler circuitry 1309 and allocate/rename 1307 circuitry and a memory unit perform a register read/memory read stage; the execution circuitry 1311 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1390 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

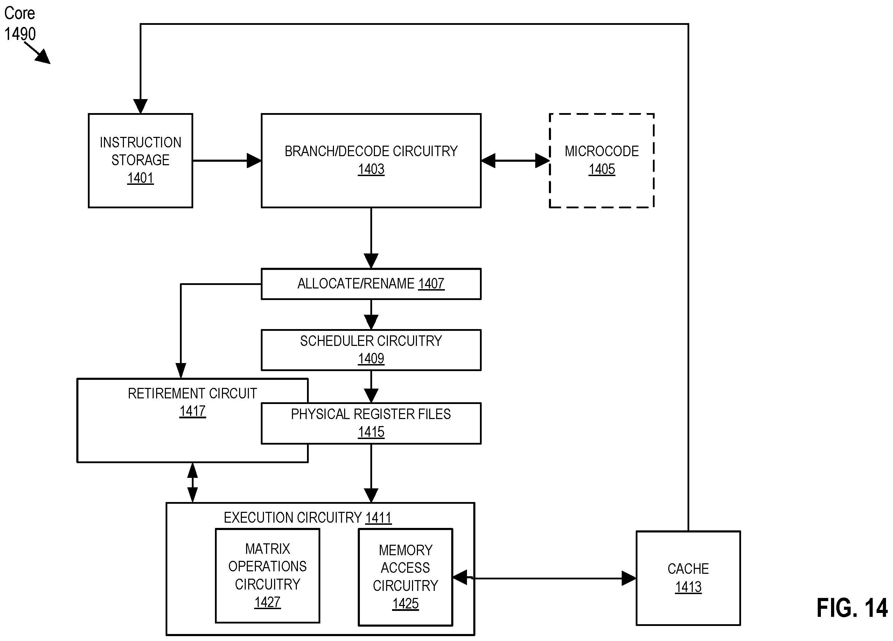

**Figure 14** illustrates an embodiment of a processor core pipeline supporting matrix operations using tiles. Branch prediction and decode circuitry 1403 performs branch predicting of instructions, decoding of instructions, and/or both from instructions stored in instruction storage 1401. For example, instructions detailed herein may be stored in instruction storage. In some implementations, separate circuitry is used for branch prediction and in some embodiments, at least some instructions are decoded into one or more micro-operations, microcode entry points, microinstructions, other instructions, or other control signals using microcode 1405. The branch prediction and decode circuitry 1403 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1403 is coupled to allocate/rename 1407 circuitry which is coupled, in some embodiments, to scheduler circuitry 1409. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1409 represents any number of different schedulers, including reservations stations, central instruction window, etc. The scheduler unit(s) scheduler circuitry 1409 is coupled to, or includes, physical register file(s) 1415. Each of the physical register file(s) 1415 represents one or more physical register files, different ones of which store one or more different data types, such as scalar integer, scalar floating point, packed integer, packed floating point, vector integer, vector floating point, status (e.g., an instruction pointer that is the address of the next instruction to be executed), tiles, etc. In one embodiment, the physical register file(s) 1415 comprises vector registers circuitry, write mask registers circuitry, and scalar registers circuitry. These register circuits may provide architectural vector registers, vector mask registers, and general-purpose registers. The physical register file(s) 1415 is overlapped by a retirement circuit 1417 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1417 and the physical register file(s) 1415 are coupled to the execution circuitry 1411.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (LI) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1411 a set of one or more execution circuits 1427 and a set of one or more memory access circuits 1425 to access cache 1413. The execution circuits 1427 perform matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1403 performs a decode stage; 3) the allocate/rename 1407 circuitry performs an allocation stage and renaming stage; 4) the scheduler circuitry 1409 performs a schedule stage; 5) physical register file(s) (coupled to, or included in, the scheduler circuitry 1409 and allocate/rename 1407 circuitry and a memory unit perform a register read/memory read stage; the execution circuitry 1411 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

Layout

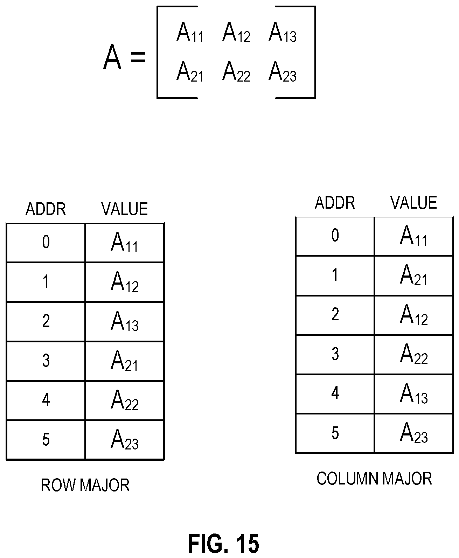

Throughout this description, data is expressed using row major data layout. Column major users should translate the terms according to their orientation. Figure 15 illustrates an example of a matrix expressed in row major format and column major format. As shown, matrix A is a 2x3 matrix. When this matrix is stored in row major format, the data elements of a row are consecutive. When this matrix is stored in column major format, the data elements of a column are consecutive. It is a well-known property of matrices that AT * BT = (BA) T, where superscript T means transform. Reading column major data as row major data results in the matrix looking like the transform matrix.

In some embodiments, row-major semantics are utilized in hardware, and column major data is to swap the operand order with the result being transforms of matrix, but for subsequent column-major reads from memory it is the correct, non-transformed matrix.

For example, if there are two column-major matrices to multiply:

$$\underline{a\ b} \qquad \underline{g\ i\ k} \qquad \underline{ag+bh\ ai+bj\ ak+bl}$$

$$\underline{c\ d}\ * \quad \underline{h\ j\ l} = \qquad \underline{cg+dh\ ci+dj\ ck+dl}$$

$$\underline{e\ f} \qquad\qquad\qquad \underline{eg+fh\ ei+fj\ ek+fl}$$

$$\underline{(3x2)}\ \ \underline{(2x3)} \qquad \underline{(3x3)}$$

The input matrices would be stored in linear memory (column-major) as:

$\underline{a\ c\ e\ b\ d\ f}$
$\underline{and}$
$\underline{g\ h\ i\ j\ k\ l}.$

*Reading* those matrices as row-major with dimensions 2x3 and 3x2, they would appear as:

$\underline{a\ c\ e}$ and $\underline{g\ h}$
$\underline{b\ d\ f}$ $\underline{i\ j}$
kl

Swapping the order and matrix multiplying:

$$\underline{g\ h} \qquad \underline{a\ c\ e} \qquad \underline{ag+bh\ cg+dh\ eg+fh}$$

$$\underline{i\ j} \qquad * \quad \underline{b\ d\ f} = \qquad \underline{ai+bj\ ci+dj\ ei+fj}$$

$$\underline{k\ l} \qquad\qquad\qquad \underline{ak+bl\ ck+dl\ ek+fl}$$

The transform matrix is out and can then be stored in in row-major order:
ag+bh cg+dh eg+fh ai+bi ci+di ei+fi ak+bl ck+dl ek+fl
and used in subsequent column major computations, it is the correct un-transformed matrix:

$$\underline{ag+bh} \qquad \underline{ai+bj} \qquad \underline{ak+bl}$$

$$\underline{cg+dh} \qquad \underline{ci+dj} \qquad \underline{ck+dl}$$

$$\underline{eg+fh} \qquad \underline{ei+fj} \qquad \underline{ek+fl}$$

Exemplary Usage

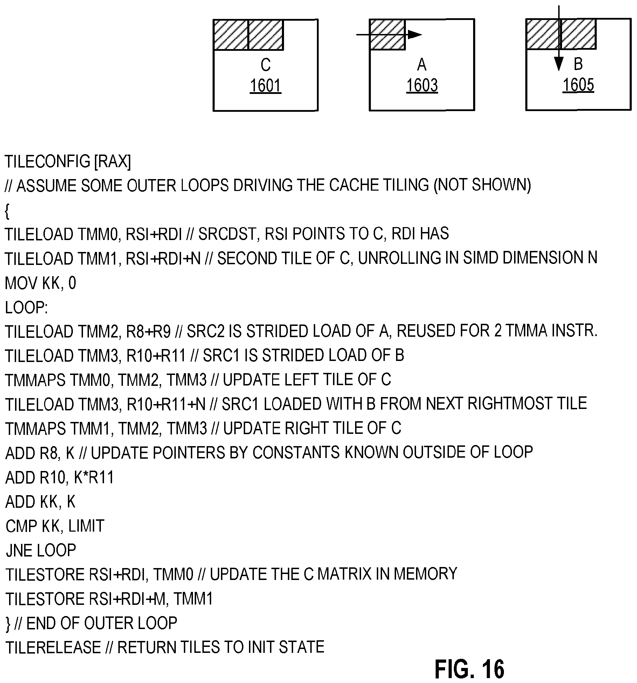

**Figure 16** illustrates an example of usage of matrices (tiles). In this example, matrix C 1601 includes two tiles, matrix A 1603 includes one tile, and matrix B 1605 includes two tiles. This figure shows an example of the inner loop of an algorithm to compute a matrix multiplication. In this example, two result tiles, tmm0 and tmm1, from matrix C 1601 are used to accumulate the intermediate results. One tile from the matrix A 1603 (tmm2) is re-used twice as it multiplied by two tiles from matrix B 1605. Pointers to load a new A matrix (tile) and two new B matrices (tiles) from the directions indicated by the arrows. An outer loop, not shown, adjusts the pointers for the C tiles.
The exemplary code as shown includes the usage of a tile configuration instruction and is executed to configure tile usage, load tiles, a loop to process the tiles, store tiles to memory, and release tile usage.

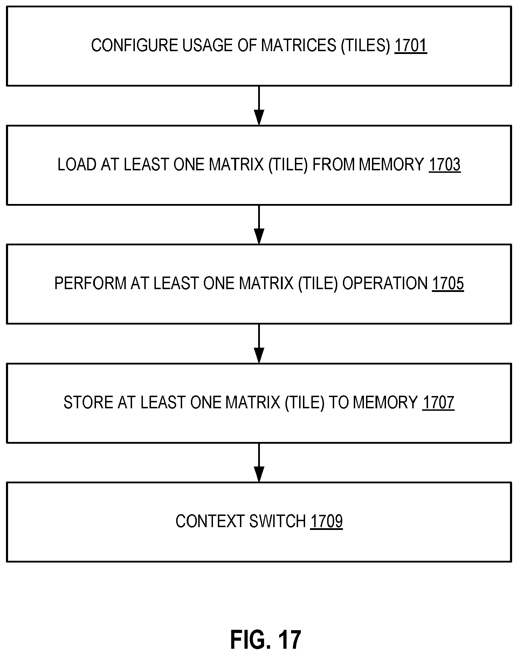

**Figure 17** illustrates an embodiment of usage of matrices (tiles). At 1701, tile usage is configured. For example, a TILECONFIG instruction is executed to configure tile usage including setting a number of rows and columns per tile. Typically, at least one matrix (tile) is loaded from memory at 1703. At least one matrix (tile) operation is performed at 1705 using the matrices (tiles). At 1707, at least one matrix (tile) is stored out to memory and a context switch can occur at 1709.

Exemplary Configuration

Tile Configuration Hardware Support

As discussed above, tile usage typically needs to be configured prior to use. For example, full usage of all rows and columns may not be needed. Not only does not configuring these rows and columns save power in some embodiments, but the configuration may be used to determine if an operation will generate an error. For example, a matrix multiplication of the form (N x M) * (L x N) will typically not work if M and L are not the same.

Prior to using matrices using tiles, in some embodiments, tile support is to be configured. For example, how many rows and columns per tile, tiles that are to be used, etc. are configured. A TILECONFIG instruction is an improvement to a computer itself as it provides for support to configure the computer to use a matrix accelerator (either as a part of a processor core, or as an external device). In particular, an execution of the TILECONFIG instruction causes a configuration to be retrieved from memory and applied to matrix (tile) settings within a matrix accelerator.

Tile Usage Configuration

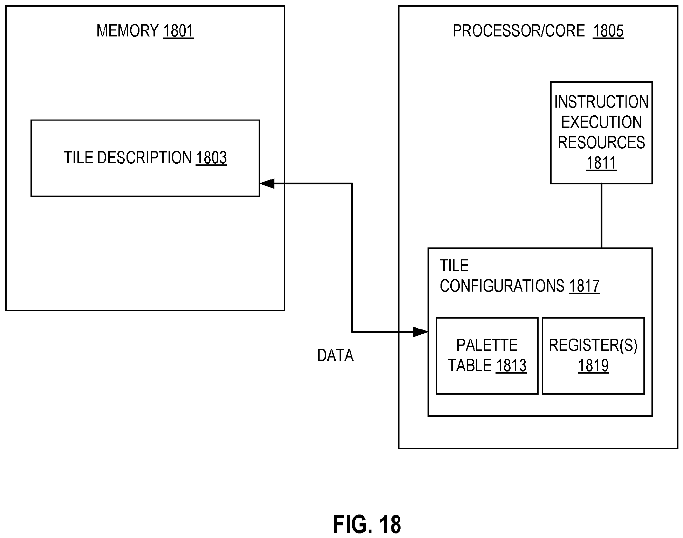

**Figure 18** illustrates support for configuration of the usage of tiles according to an embodiment. A memory 1801 contains the tile description 1803 of the matrices (tiles) to be supported.

Instruction execution resources 1811 of a processor/core 1805 stores aspects of a tile description 1803 into tile configurations 1817. The tile configurations 1817 include palette table 1813 to detail what tiles for a palette are configured (the number of rows and columns in each tile) and a marking that matrix support is in use. In particular, instruction execution resources 1811 are configured to use tiles as specified by the tile configurations 1817. The instruction execution resources 1811 may also include a machine specific register or configuration register to indicate tile usage. Additional values such as in-use and start values are also set. The tile configurations 1817 utilize register(s) 1819 to store tile usage and configuration information.

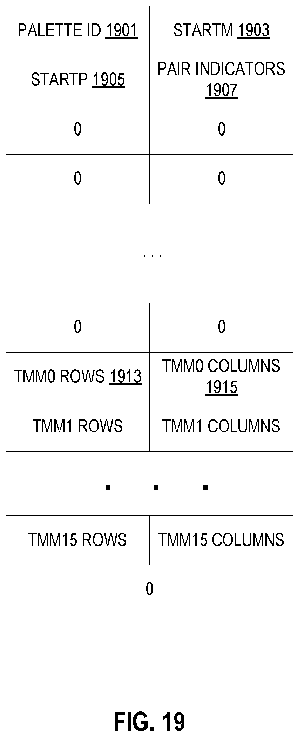

**Figure 19** illustrates an embodiment of a description of the matrices (tiles) to be supported. This is the description that is to be stored upon an execution of a STTILECFG instruction. In this example, each field is a byte. In byte [0], a palette ID 1901 is stored. The palette ID is used to index a palette table 1813 which stores, per palette ID, a number of bytes in a tile, and bytes per row of the tiles that are associated with this ID as defined by the configuration.

Byte 1 stores a value to be stored in a "startRow" register 1903 and byte 2 stores a value to be stored in a register, startP 1905. To support restarting instructions after these events, the instructions store information these registers. To support restarting instructions after break events such as those detailed above, the instructions store information in these registers. The startRow value indicates the row that should be used for restart. The startP value indicates the position within the row for store operations when pairs are used and, in some embodiments, indicates the lower half of the row (in the lower tile of a pair) or higher half of the row (in the higher tile of a pair). Generally, the position in the row (the column) is not needed.

With the exception of TILECONFIG and STTILECFG, successfully executing matrix (tile) instructions will set both startRow and startP to zero.

Any time an interrupted matrix (tile) instruction is not restarted, it is the responsibility of software to zero the startRow and startP values. For example, unmasked floating point exception handlers might decide to finish the operation in software and change the program counter value to another instruction, usually the next instruction. In this case the software exception handler must zero the startRow and startP values in the exception presented to it by the operating system before resuming the program. The operating system will subsequently reload those values using a restore instruction.

Byte 3 stores an indication of pairs (1b per tile) of tiles 1907.

Bytes 16-17 store the number of rows 1913 and columns 1915 for tile 0, bytes 18-19 store the number of rows and columns for tile 1, etc. In other words, each 2-byte group specifies a number of rows and columns for a tile. If a group of 2 bytes is not used to specify tile parameters, they should have the value zero. Specifying tile parameters for more tiles than the implementation limit or the palette limit results in a fault. Unconfigured tiles are set to an initial state with 0 rows, 0 columns.

Finally, the configuration in memory typically ends with an ending delineation such as all zeros for several consecutive bytes.

Exemplary tile and tile configuration storage

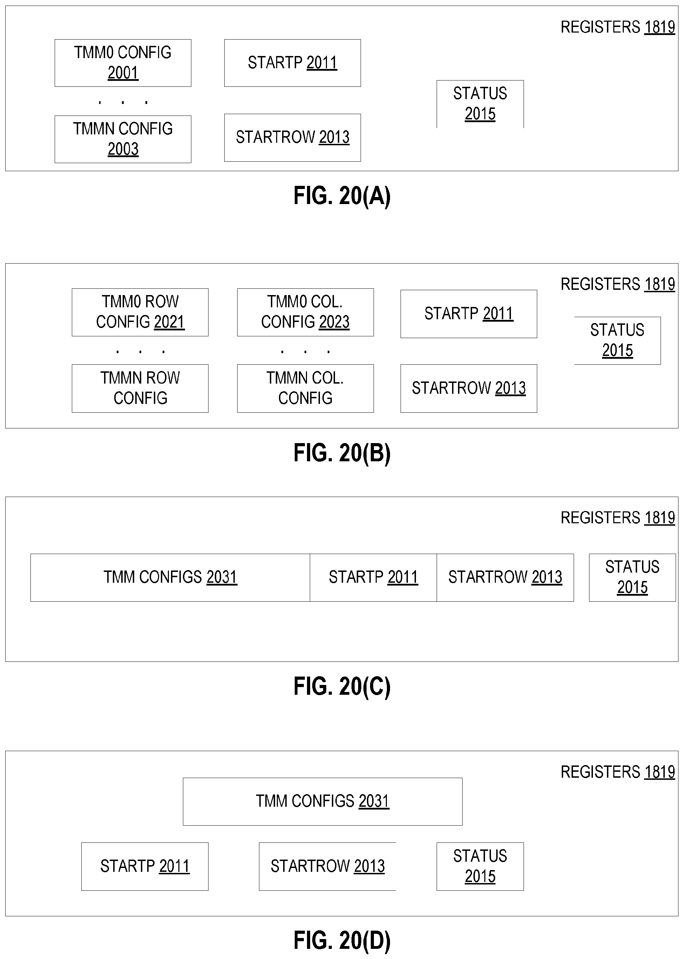

**Figures 20(A)-(D)** illustrate examples of register(s) 1819. **Figure 20(A)** illustrates a plurality of registers 1819. As shown each tile (TMM0 2001 ... TMMN 2003) has a separate register with each register storing a row and column size for that particular tile. StartP 2011 and StartRow 2013 are stored in separate registers. One or more status registers 2015 are set (e.g., TILES CONFIGURED = 1) to indicate tiles are configured for use.

**Figure 20(B)** illustrates a plurality of registers 1819. As shown each tile has separate registers for its rows and columns. For example, TMM0 rows configuration 2021, TMM0 columns configuration 2023, StartP 2011 and StartRow 2013 are stored in separate registers. One or more status registers 2015 are set (e.g., TILES CONFIGURED = 1) to indicate tiles are configured for use.

**Figure 20(C)** illustrates a single register 1819. As shown, this register stores tile configurations (rows and columns per tile) 2031, StartP 2011, and StartRow 2013 are stored in single register as packed data registers. One or more status registers 2015 are set (e.g., TILES CONFIGURED = 1) to indicate tiles are configured for use.

**Figure 20(D)** illustrates a plurality of registers 1819. As shown, a single register stores tile configuration (rows and columns per tile) 2031. StartP and StartRow are stored in separate registers 2011 and 2013. One or more status registers 2015 are set (e.g., TILES CONFIGURED = 1) to indicate tiles are configured for use.

Other combinations are contemplated such as combining the start registers into a single register where they are shown separately, etc.

## Data Movement Between Registers and Tiles

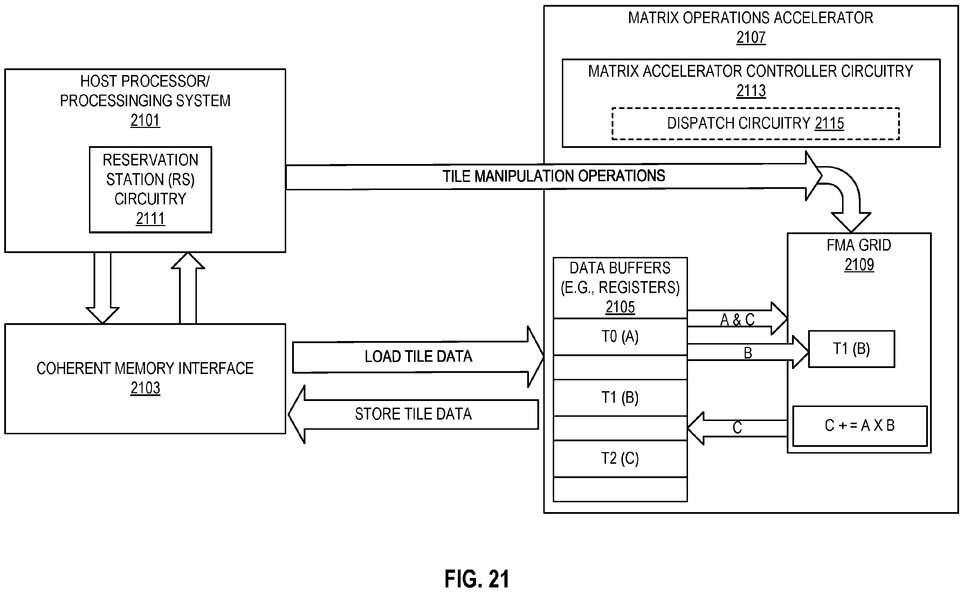

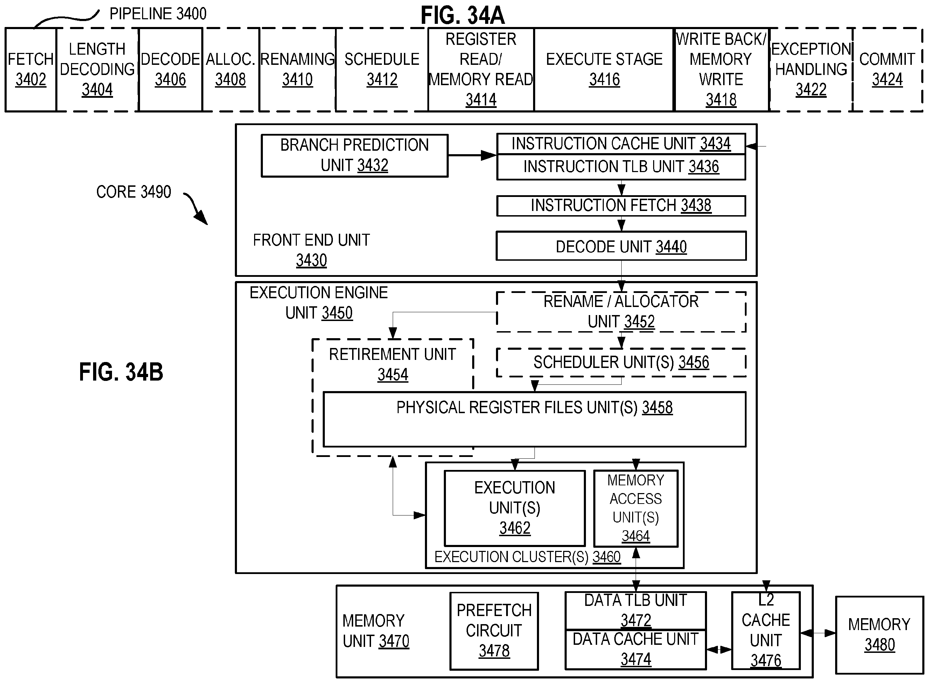

**Figure 21** illustrates an embodiment of a system utilizing a matrix (tile) operations accelerator 2107 according to embodiments of the disclosure. In certain embodiments, a host processor/processing system 2101 (for example, a hardware processor core, e.g., processor core 3490 in Figure 34B) communicates commands (e.g., matrix manipulation operations such as arithmetic or matrix manipulation operations, load, and/or store operations) to a matrix operations accelerator 2107. However, this is shown this way for discussion purposes only. As detailed herein, accelerator 2107 may be a part of a processing core. Commands that are tile manipulation operator instructions may refer to tiles as register-register ("reg-reg") or register-memory ("reg-mem") format. Other commands such as TILESTORE, TILELOAD, TILECONFIG, etc., do not perform data operations on a tile in certain embodiments. Commands may be decoded instructions (e.g., micro-operations) or macro-instructions for the accelerator 2107 to handle. In one embodiment, a hardware processor core sends micro-ops to matrix (tile) operations accelerator 2107 in response to a matrix operations instruction being executed by the hardware processor core.

In one embodiment, reservation station (RS) circuitry 2111 sends commands (e.g., micro-ops) to matrix operations accelerator 2107. In certain embodiments, matrix operations accelerator 2107 is a tile matrix unit (TMU). In certain embodiments, matrix operations accelerator 2107 includes a matrix accelerator controller circuitry 2113. In one embodiment, matrix accelerator controller (e.g., circuitry 2113) is to control the operations and flow of data in, out, and/or within matrix operations accelerator 2107. Matrix operations accelerator 2107 (e.g., matrix accelerator controller circuitry 2113) may include dispatch circuitry 2115, for example, to control the dispatching of received requests (e.g., commands) from host processor/processing system 2101 to one or more components of the matrix operations accelerator 2107.

Depicted matrix operations accelerator 2107 includes data buffers (e.g., registers) 2105. In certain embodiments, data buffers (e.g., registers) 2105 are configurable to store a respective matrix, for example, into a first plurality of registers (e.g., tile) that represents a first two-dimensional matrix (e.g., tile marked as T0 storing matrix A in storage 2105), a second two-dimensional matrix (e.g., tile marked as T1 storing matrix B in storage 2105), a third two-dimensional matrix (e.g., tile marked as T3 storing matrix C in storage 2105), etc. System (e.g., host processor/processing system 2101) may include an (e.g., coherent) memory interface 2103 (e.g., data cache unit) to send and receive data (e.g., in contrast to commands) between host processor/processing system 2101 (e.g., as an Out of Order (OoO) core) and matrix operations accelerator 2107.

In certain embodiments, matrix operations accelerator 2107 utilize a grid of processing elements 2109 (e.g., fused multiply add (FMA) circuits) to perform operations. In one embodiment, dispatch circuitry 2115 controls the sending of data (e.g., one or more values from a tile) from data buffers 2105 (e.g., registers forming a tile) to the grid of processing elements 2109. In certain embodiments, the grid of processing elements 2109 is a two-dimensional grid of processing elements, e.g., two-dimensional grid of FMAs in Figure 6.

As shown in Figure 21, certain embodiments herein utilize a (e.g., coherent) memory interface (e.g., memory interface 2103 in Figure 21) to transfer data between memory (e.g., cache) and/or host processor 2101 (e.g., host processor 2101) and matrix operations accelerator (e.g., matrix operations accelerator 2107, for example, the data buffers 2105 (e.g., registers forming a tile) (e.g., tile registers) thereof). However, in certain embodiments, it may be desirable to allow (e.g., via one or more instructions) access (e.g., direct access) to the data buffers 2105 (e.g., registers forming a tile). In certain embodiments, a programmer of code for a processor is limited to the instruction set architecture (ISA) of that processor. Thus, certain embodiments herein provide an ISA that includes one or more (e.g., macro) instructions that allow movement of data (e.g., without utilizing an indirect path, such as, but not limited to, the path including memory interface 2103) between one or more registers of a processor and the data buffers (e.g., registers forming a tile) of a matrix operations accelerator. Certain embodiments herein are directed to instructions for moving data between tiles and packed data registers (e.g., vector registers having a plurality of elements).

Certain workloads (e.g., artificial intelligence workloads) involve both matrix compute (e.g., multiplication) and elementwise compute. One technical problem is how to connect matrix operations accelerator (e.g., matrix multiplication hardware thereof) that uses dedicated tile registers (e.g., Advanced Matrix eXtensions (AMX) tile registers) with general purpose single-instruction, multiple data (SIMD) hardware that uses vector registers (e.g., Advanced Vector eXtensions (AVX) registers, such as, but not limited to AVX512). Embodiments herein provide a solution to this problem by utilizing one or more (e.g., macro) instructions that allow movement of data (e.g., without utilizing an indirect path, such as, but not limited to, the path including memory interface 2103) between one or more registers of a processor and the data buffers (e.g., registers forming a tile) of a matrix operations accelerator (e.g., execution circuitry). In certain embodiments, a coupling (e.g., direct path) between (e.g., 2D) tiles and (e.g., vector) registers utilized by these instruction(s) (e.g., the interface being a path not including memory interface 2103) allows a faster access time than traversing through memory (e.g., cache). Certain embodiments herein include conversion circuitry on the coupling (e.g., direct path) to allow one or more instructions to (e.g., also) perform datatype (e.g., number format) conversions. A coupling may be a one or more wires or electrical conducting channels within a substrate (e.g., silicon).

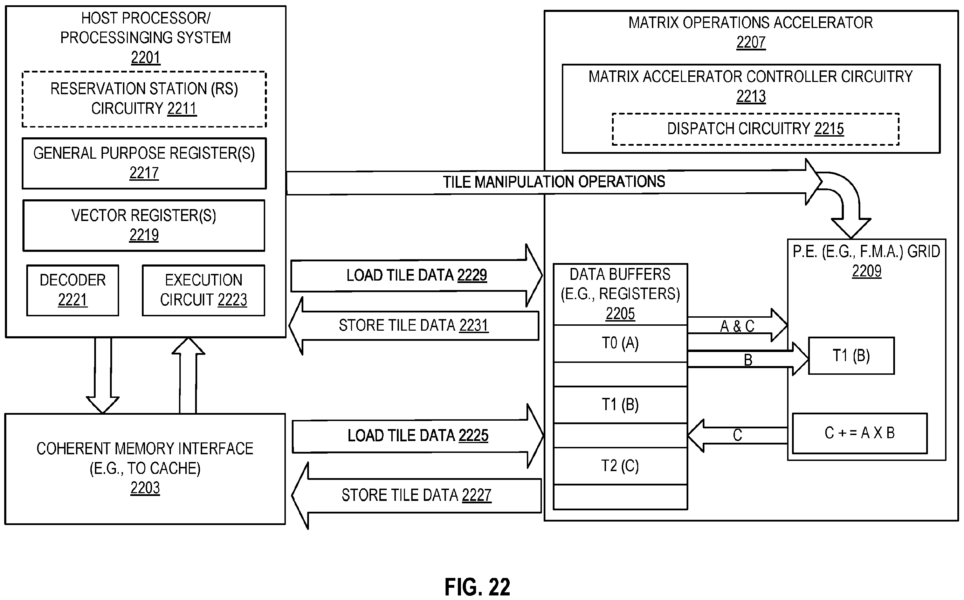

Figure 22 illustrates an embodiment of a system comprising a matrix (tile) operations accelerator 2207 that utilizes one or more direct paths (e.g., load to tile connection path 2229 and/or store from tile connection path 2231) for loading data into a tile from a vector register 2219 and/or storing data from a tile 2205 into a vector register 2219 according to embodiments of the disclosure. In certain embodiments, a host processor/processing system 2201 (for example, a hardware processor core, e.g., processor core 3490 in Figure 34B) communicates commands (e.g., matrix manipulation operations such as arithmetic or matrix manipulation operations, load, and/or store operations) to a matrix operations accelerator 2207. However, this is shown this way for discussion purposes only. As detailed herein, accelerator 2207 may be a part of a processing core. Commands that are tile manipulation operator instructions may refer to tiles as register-register ("reg-reg") or register-memory ("reg-mem") format. Other commands such as TILESTORE, TILELOAD, TILECONFIG, etc., do not perform data operations on a tile in certain embodiments. Commands may be decoded instructions (e.g., micro-operations) or macro-instructions for the accelerator 2207 to handle. In one embodiment, a hardware processor core sends micro-ops to matrix (tile) operations accelerator 2207 in response to a matrix operations instruction being executed by the hardware processor core.

In one embodiment, reservation station (RS) circuitry 2211 sends commands (e.g., micro-ops) to matrix operations accelerator 2207. In certain embodiments, matrix operations accelerator 2207 is a tile matrix unit (TMU). In certain embodiments, matrix operations accelerator 2207 includes a matrix accelerator controller circuitry 2213. In one embodiment, matrix accelerator controller (e.g., circuitry 2213) is to control the operations and flow of data in, out, and/or within matrix operations accelerator 2207. Matrix operations accelerator 2207 (e.g., matrix accelerator controller circuitry 2213) may include dispatch circuitry 2215, for example, to control the dispatching of received requests (e.g., commands) from host processor/processing system 2201 to one or more components of the matrix operations accelerator 2207.

In certain embodiments, matrix operations accelerator 2207 utilize a grid of processing elements 2209 (e.g., fused multiply add (FMA) circuits) to perform operations. In one embodiment, dispatch circuitry 2215 controls the sending of data (e.g., one or more values from a tile) from data buffers 2205 (e.g., registers forming a tile) to the grid of processing elements 2209. In certain embodiments, the grid of processing elements 2209 is a two-dimensional grid of processing elements, e.g., two-dimensional grid of FMAs in Figure 6.

Depicted matrix operations accelerator 2207 includes data buffers (e.g., registers) 2205. In certain embodiments, data buffers (e.g., registers) 2205 are configurable to store a respective matrix, for example, into a first plurality of registers (e.g., tile) that represents a first two-dimensional matrix (e.g., tile marked as T0 storing matrix A in storage 2205), a second two-dimensional matrix (e.g., tile marked as T1 storing matrix B in storage 2205), a third two-dimensional matrix (e.g., tile marked as T3 storing matrix C in storage 2205), etc. System (e.g., host processor/processing system 2201) may include an (e.g., coherent) memory interface 2203 (e.g., data cache unit) to send and receive data (e.g., in contrast to commands) between host processor/processing system 2201 (e.g., as an Out of Order (OoO) core) and matrix operations accelerator 2207 (e.g., including load to tile connection path 2225 from memory interface 2203 and/or store from tile connection path 2227 from memory interface 2203).

As shown in Figure 22, certain embodiments herein utilize a (e.g., coherent) memory interface (e.g., memory interface 2203 in Figure 22) to transfer data between memory (e.g., cache) and/or host processor 2201 (e.g., host processor 2201) and matrix operations accelerator (e.g., matrix operations accelerator 2207, for example, the data buffers 2205 (e.g., registers forming a tile) (e.g., tile registers) thereof). However, in certain embodiments, it may be desirable to allow (e.g., via one or more instructions) access (e.g., direct access) to the data buffers 2205 (e.g., registers forming a tile). In certain embodiments, a programmer of code for a processor is limited to the instruction set architecture (ISA) of that processor. Thus, certain embodiments herein provide an ISA that includes one or more (e.g., macro) instructions that allow movement of data (e.g., without utilizing an indirect path, such as, but not limited to, the path including memory interface 2203) between one or more registers of a processor and the data buffers (e.g., registers forming a tile) of a matrix operations accelerator. Certain embodiments herein are directed to instructions for moving data between tiles and packed data registers (e.g., vector registers having a plurality of elements), for example, between vector register(s) 2219 and data buffers 2205 (e.g., registers forming a tile). Embodiments herein provide an ISA that includes one or more instructions that utilizes one or more direct paths (e.g., load to tile connection path 2229 and/or store from tile connection path 2231) for loading data into a tile from a vector register 2219 and/or storing data from a tile (e.g., in data buffers 2205) into a vector register 2219. Host processor may include (e.g., scalar) general purpose registers 2217, e.g., separate from any registers used for 128 bit vector instructions (e.g., "SSE" instructions/registers), (e.g., 256 bit or 512 bit) vector instructions with 3 operand instruction format (e.g., "AVX" instructions/registers), and/or matrix instructions (e.g., "matrix accelerator" instructions/tiles).

The instructions disclosed herein are improvements to the functioning of a processor (e.g., of a computer) itself. Instruction decode circuitry (e.g., a decoder 2221) not having such an instruction as a part of its instruction set would not decode as discussed herein. An execution circuit (e.g., execution circuit 2223) not having such an instruction as a part of its instruction set would not execute as discussed herein. For example, a single instruction that, when a processor decodes the single instruction into a decoded single instruction and that decoded single instruction is executed by the processor, causes a store of one or more elements from the plurality of registers that represents the two-dimensional matrix into the vector register by a coupling of the hardware processor core to the matrix operations accelerator circuit that is separate from the coupling to a memory interface (e.g., or via a cache). For example, a single instruction that, when a processor decodes the single instruction into a decoded single instruction and that decoded single instruction is executed by the processor, causes a store of one or more elements from the vector register into the plurality of registers that represents the two-dimensional matrix by a coupling of the hardware processor core to the matrix operations accelerator circuit that is separate from the coupling to a memory interface (e.g., or via a cache).

In certain embodiments, a memory interface operates under a cache coherency protocol, for example, with the additional time utilized to maintain that cache coherency (e.g., setting bits, performing snoops, etc.) being avoided by utilizing a coupling between one or more registers of a processor and data buffers (e.g., registers forming a tile) of a matrix operations accelerator as discussed herein. For example, where cache (e.g., line) coherency may generally refer to each cache (e.g., cache memory) and/or other (e.g., system) memory in the coherence domain observing all modifications of that same cache data (e.g., a cache line, and more particularly, each instance of that cache line that is to contain the same data). For example, a modification may be said to be observed by a cache when any subsequent read would return the newly (e.g., current) written value. In certain embodiments, a cache controller (e.g., cache coherency controller) is included in a computing system to maintain cache coherency. In one embodiment, the cache controller is a cache controller circuit. Cache coherency may be maintained according to a cache coherence protocol, e.g., the four state modified (M), exclusive (E), shared (S), and invalid (I) (MESI) protocol or the five state modified (M), exclusive (E), shared (S), invalid (I), and forward (F) (MESIF) protocol. Cache controller(s) may provide, for multiple copies of a data item (e.g., stored in any memory), an update to other copies of the data item when one copy of that data item is changed, e.g., to ensure the data values of shared items (e.g., operands) are propagated throughout the computing system in a timely fashion.

Note that the figures herein may not depict all data communication connections. One of ordinary skill in the art will appreciate that this is to not obscure certain details in the figures. Note that a double headed arrow in the figures may not require two-way communication, for example, it may indicate one-way communication (e.g., to or from that component or device). Any or all combinations of communications paths may be utilized in certain embodiments herein.

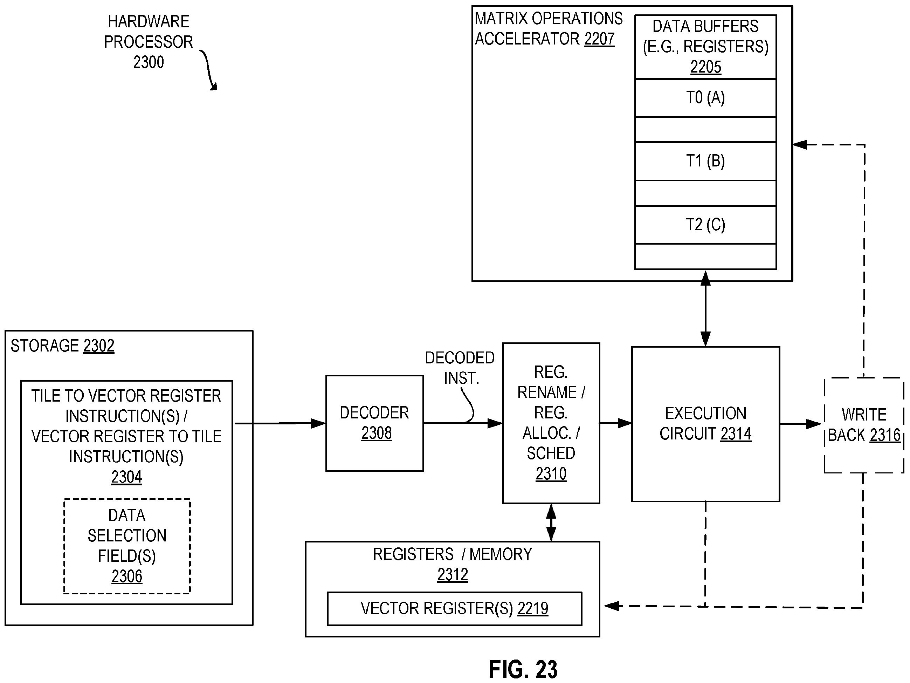

**Figure 23** illustrates a hardware processor 2300 coupled to storage 2302 that includes one or more "tile to vector register" and/or a "vector register to tile" instructions 2304 according to embodiments of the disclosure. The instructions 2304 may include one or more data selection fields 2306 (e.g., operands) that identify (e.g., all or a proper subset of elements of) vector register(s) 2219 and/or data buffers 2205 (e.g., registers forming a tile).

In certain embodiments, (e.g., where the processor/core supports out-of-order (OoO) execution), the processor includes a register rename/allocator circuit 2310 coupled to register file/memory circuit 2312 (e.g., unit) to allocate resources and perform register renaming on registers (e.g., registers associated with the initial sources and final destination of the instruction). In certain embodiments, (e.g., for out-of-order execution), the processor includes one or more scheduler circuits 2310 coupled to the decoder 2308. The scheduler circuit(s) may schedule one or more operations associated with decoded instructions, including one or more operations decoded from "tile to vector register" and/or a "vector register to tile" instructions 2304, e.g., for execution on the execution circuit 2314.

As one example, a decoded "tile to vector register" instruction 2304 is to cause execution circuit 2314 to move data from a tile of data buffers 2205 of matrix operations accelerator 2207 into vector register(s) 2219, e.g., without sending that data through a (e.g., cache coherent) memory interface.

As another example, a decoded "vector to tile register" instruction 2304 is to cause execution circuit 2314 to move data from vector register(s) 2219 into a tile of data buffers 2205 of matrix operations accelerator 2207, e.g., without sending that data through a (e.g., cache coherent) memory interface.

In certain embodiments, a write back circuit 2316 is included to write back results of an instruction to a destination (e.g., write them to a register(s) 2219 and/or a tile of data buffers 2205), for example, so those results are visible within a processor (e.g., visible outside of the execution circuit that produced those results).

One or more of these components (e.g., decoder 2308, register rename / register allocator / scheduler 2310, execution circuit 2314, registers (e.g., register file)/memory 2312, or write back circuit 2316) may be in a single core of a hardware processor (e.g., and multiple cores each with an instance of these components).

As discussed below, a (I) first category of embodiments are those for moving data from one or more tiles to one or more vector registers and a (II) second category of embodiments are those for moving data from one or more vector registers to one or more tiles.

*(I) Moving data from one or more tiles to one or more vector registers*

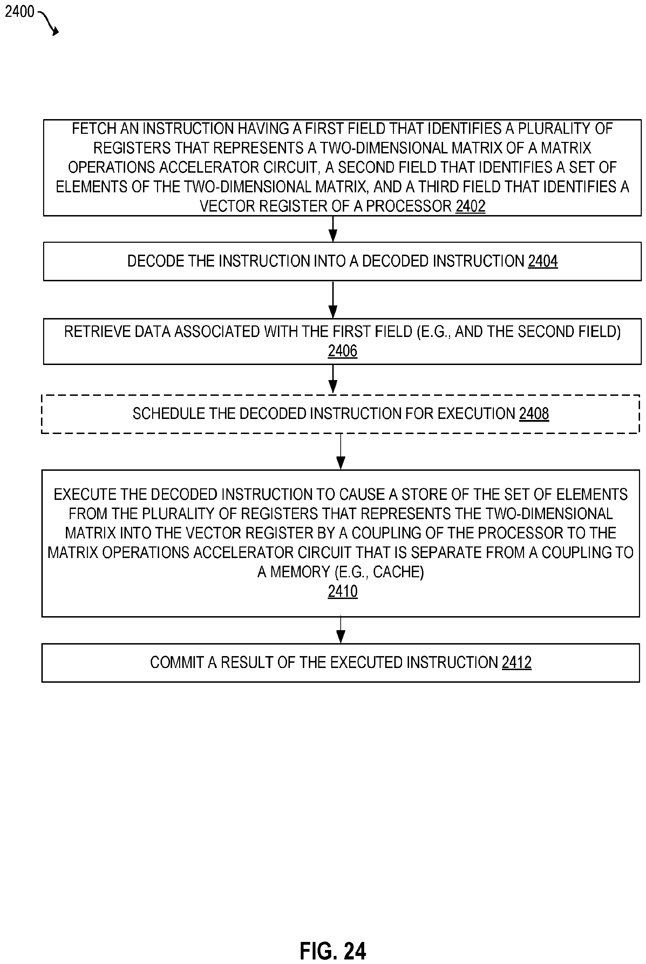

**Figure 24** illustrates a method 2400 of processing a "tile to vector register" instruction according to embodiments of the disclosure. A processor (e.g., or processor core) may perform method 2400, e.g., in response to receiving a request to execute an instruction from software. Depicted method 2400 includes processing a "tile to vector register" instruction by: fetch an instruction (e.g., having a first field that identifies a plurality of registers that represents a two-dimensional matrix of a matrix operations accelerator circuit, a (optional) second field that identifies a set (e.g., a contiguous plurality of) of elements of the two-dimensional matrix, and a third field that identifies a vector register(s) of the processor) 2402, decode the instruction into a decoded instruction 2404, retrieve data associated with the first field (e.g., and second field) 2406, (optionally) schedule the decoded instruction for execution 2408, execute the decoded instruction to cause a store of the set of elements from the plurality of registers that represents the two-dimensional matrix into the vector register by a coupling of the processor to the matrix operations accelerator circuit that is separate from a coupling to a memory (e.g., cache) 2410, and commit a result of the executed instruction 2412.

Embodiments herein includes instructions to move a row(s) or a column(s) (or a combination thereof) from a tile to a vector register. The row or column can be selected either by an immediate operand or by a general purpose (e.g., general purpose register 2217 in Figure 22) or SIMD register (e.g., vector register 2219 in Figure 22).

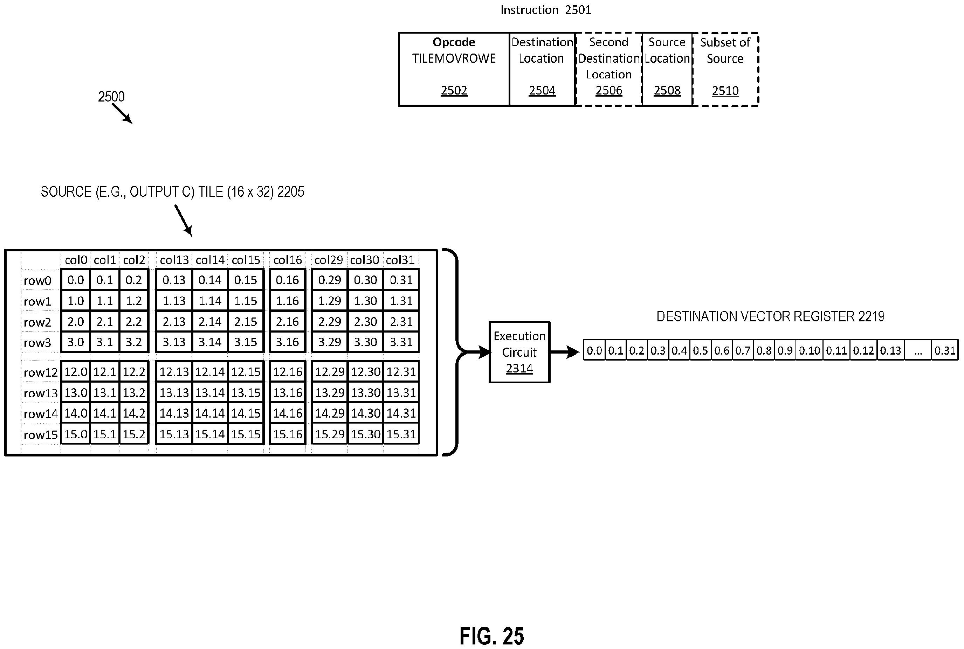

**Figure 25** is a block diagram illustrating use of a TILEMOVROWE instruction according to embodiments of the disclosure. As shown, instruction 2501 includes an opcode 2502 (e.g. TILEMOVROWE), which indicates that the processor is to move (e.g., store) of one or more elements from the tile 2205 (e.g., plurality of registers that represents the two-dimensional matrix) into the destination vector register 2219, for example, by a coupling of the processor to the matrix operations accelerator circuit that is separate from a coupling to a memory (e.g., cache), a source location field 2508 identifying the tile 2205 (e.g., and another (optional) field 2510 identifying a proper subset of elements of the tile), a destination location field 2504 identifying the destination vector register 2219, and (optionally) a second destination location field 2506 identifying additional destination vector register(s). In one embodiment, a field is a (e.g., scalar or vector) register or an immediate value.

Also shown is system 2500 for executing the TILEMOVROWE instruction. The system includes specified source matrix (tile) 2205, execution circuit 2314, and specified destination vector register 2219. It should be understood that a similar format may be utilized for column instead of row moves, e.g., with a mnemonic of TILEMOVCOLE (where COL refers to a column embodiment).

In certain embodiments, if the requested row (or column) is above the number of rows (or columns) in the tile, execution of the instruction will fault. In certain embodiments, if the requested row (or column) is above the number of rows (or columns) in the tile, execution of the instruction causes a write to a (e.g., the destination) vector register with a preselected value (e.g., all zeros).

In certain embodiments, if the destination vector register has more elements (e.g., is wider) than the requested portion of the tile, execution of the instruction will fault. In certain embodiments, if the destination vector register has more elements (e.g., is wider) than the requested portion of the tile, execution of the instruction causes a write to a (e.g., the destination) vector register with zeros beyond the width defined, e.g., for the requested tile's row (or column).

In certain embodiments, if the requested portion of the tile has more elements (e.g., is wider) than the destination vector register, only a proper subset (e.g., the lower part or the upper part) of the row (or column) will be moved into the destination vector register. In certain embodiments, (e.g., if the requested portion of the tile has more elements (e.g., is wider) than the destination vector register), an instruction encodes in a field thereof (e.g., in an immediate or register operand) the requested offset (e.g., element index) in the tile row (or column), for example, allowing a move of different elements of that row (or column) into the shorter vector register. In one embodiment, if the requested offset is beyond the tile's width, the instruction could fault (e.g., generate a fault indication, including, but not limited to, raising a flag) in one implementation or return zeros (e.g., in the destination vector register) for the out-of-bounds data in a different implementation.

The following tables includes example instruction formats, including an opcode (e.g., mnemonic thereof) and operands, followed by the operations for that instruction. Although certain values are discussed, those are examples and other values may be utilized.

TABLE 1: TILEMOVEROWE (for a move (MOV) of data from a TILE to a ROW in a vector (e.g., E being an EVEX vector) register (e.g., 512 bits wide)) using an immediate (imm8, e.g., having a value of 0 to 15 in a 16 row embodiment) for row selection, tsrc to indicate the source tile, and zdest to indicate the destination vector register.

*TABLE 1: TILEMOVEROWE*

```
TILEMOVROWE zdest, tsrc, imm8
row_index := imm8

for i in 0 ... palette_table [palette_id].bytes_per_row:
    zdest.byte[i] := tsrc.row[row_index].byte[i]
zdest[MAX_VL-1:512] := 0
```

TABLE 2: TILEMOVEROWE (for a move (MOV) of data from a TILE to a ROW in a vector (e.g., E being an EVEX vector) register (e.g., 512 bits wide)) using a scalar (e.g., general) purpose register (e.g., 32-bit register (r32)) for row selection, tsrc to indicate the source tile, and zdest to indicate the destination vector register.

*TABLE 2: TILEMOVEROWE*

```
TILEMOVROWE zdest, tsrc, r32
row_index := r32

for i in 0 ... palette_table[palette_id].bytes_per_row;
    zdest.byte[i] := tsrc.row[row_index].byte [i]
zdestLMAX_VL-1:612] := 0
```

TABLE 3: TILEMOVEROWE (for a move (MOV) of data from a TILE to a ROW in a vector (e.g., E being an EVEX vector) register (e.g., 512 bits wide)) using a (e.g., different) vector register (e.g., XMM register (e.g., 128 bit)) for row selection, tsrc to indicate the source tile, and zdest to indicate the destination vector register. In one embodiment, first element of the vector register is used to store the row selection value.

*TABLE 3: TILEMOVEROWE*

```
TILEMOVROWE zdest, tsrc, xmm
row_index := r32

for i in 0 ... palette_table[palette_id],bytes_per_row:
    zdest.byte[i] := tsrc.row[row_index].byte[i]
zdestLMAX_VL-1:612] := 0
```

Another instruction embodiment is to transfer the entire tile contents into a group of vector registers, e.g., instead of only selecting a proper subset of rows (or columns).

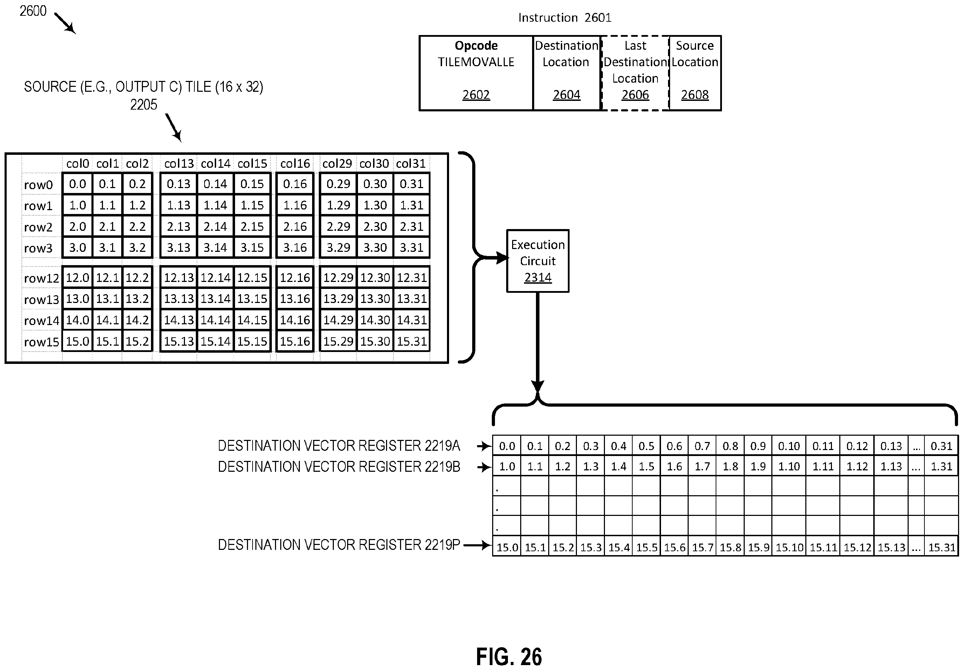

**Figure 26** is a block diagram illustrating use of a TILEMOVALLE instruction according to embodiments of the disclosure. As shown, instruction 2601 includes an opcode 2602 (e.g. TILEMOVALLE), which indicates that the processor is to move (e.g., store) all (e.g., active) elements from the tile 2205 (e.g., plurality of registers that represents the two-dimensional matrix) into a plurality of destination vector registers (e.g., starting with register 2219A as the first register), for example, by a coupling of the processor to the matrix operations accelerator circuit that is separate from a coupling to a memory (e.g., cache), a source location field 2608 identifying the tile 2205 (e.g., one or more elements of the tile), and a destination location field 2604 identifying the (e.g., first) destination vector register 2219A, and (optionally) a second destination location field 2606 identifying another (e.g., the last utilized) destination vector register(s) (e.g., vector register 2219P in Figure 26). In one embodiment, a field may be included to indicate a number of vector registers to be utilized.

Also shown is system 2600 for executing the TILEMOVALLE instruction. The system includes specified source matrix (tile) 2205, execution circuit 2314, and specified destination vector register(s), e.g., utilizing vector registers 2219A-2219P for the example in Figure 26.

*Datatype Conversions*

In certain embodiments, it may be desirable to perform datatype (e.g., number format) conversions on the data that is to be moved. Certain embodiments herein include conversion circuitry on the coupling (e.g., direct path) between data buffers (e.g., registers forming a tile) of a matrix operations accelerator and one or more registers of a processor to allow one or more data move instructions to (e.g., also) perform datatype (e.g., number format) conversions. Number format may include a fixed-point format or a floating-point format. An integer may be represented in a binary format. A signed integer may be represented in a two's (2's) complement format (e.g., where the leading being zero indicates a positive integer and a leading one indicates a negative integer). In one embodiment, a WORD is 16 bits, a double WORD (DWORD) is 32 bits, a quad WORD (QWORD) is 64 bits, etc.

A (e.g., real) number may be represented in floating-point format, e.g., to represent, with a fixed number of digits, numbers of different orders of magnitude. One example of a numerical format is where a number is generally approximated to a fixed number of significant digits (the significand) and scaled using an exponent in some fixed base (e.g., a base of two, ten, or sixteen). An example of a numerical format where S represents a sign bit, M a mantissa, and E an exponent is as follows:

$$x = significand \; x \; base^{exponent} \quad (1)$$

An example of a floating-point format is as follows:

$$x = (-1)^S \; x \; 1.M \; x \; 2^{E-bias} \quad (2)$$

In accordance with the IEEE 754 standard for binary FP arithmetic, the mantissa is an unsigned number (e.g., a binary fraction) and a normalized floating-point number has a single one in the most-significant-bit (MSB) position. In certain embodiments, this bit (e.g., to the left of the decimal point) is implicit and therefore the mantissa does not need to store it. In certain embodiments, the exponent is represented here as a non-negative integer from which a constant bias is subtracted. Examples of floating-point formats are floating point 16 (e.g., binary 16 or BF16 or packed half (PH)), floating point 32 (e.g., binary32 or packed single (PS)), floating point 64 (e.g., binary64 or packed double (PD)), floating point 128 (e.g., binary128), and floating point 256 (e.g., binary256), although any number of sign, significand (e.g., mantissa thereof), or exponent bits may be used in certain embodiments. In one embodiment, binary 16 format has one bit for the sign bit, 5 bits for the exponent, and 11 bits implicit (10 explicitly stored) for the significand. In one embodiment, binary32 format has one bit for the sign bit, 8 bits for the exponent, and 24 bits implicit (23 explicitly stored) for the significand. In one embodiment, binary64 format has one bit for the sign bit, 11 bits for the exponent, and 53 bits implicit (52 explicitly stored) for the significand. In one embodiment, binary 128 format has one bit for the sign bit, 15 bits for the exponent, and 113 bits implicit (112 bits explicitly stored) for the significand. In one embodiment, binary256 format has one bit for the sign bit, 19 bits for the exponent, and 237 bits implicit (236 bits explicitly stored) for the significand. In one embodiment, brain floating point 16 (bfloat16 or BF16) has one bit for the sign bit, 8 bits for the exponent, and 8 bits implicit (7 bits explicitly stored) for the significand.

In certain embodiments, (e.g., datatype) conversion circuitry is added on a coupling (e.g., path) connecting the tile to the vector register. In one embodiment, execution of a single instruction causes a move (e.g., as discussed herein) as well as a conversion operation on the to-be-moved data, e.g., to allow software to avoid executing a separate, dedicated conversion instruction. In certain embodiments, if the destination number format (e.g., datatype) has a different width than the source number format (e.g., datatype) (e.g., floating point 32 (FP32) to floating point 16 (FP16)), a move+convert instruction can either perform the conversion in-place without shrinking or expanding the destination data, or permute the resulting elements (e.g., by removing the extra zeroes between values) to be contiguous in the vector register.

The following tables includes example instruction formats, including an opcode (e.g., mnemonic thereof) and operands, followed by the operations for that instruction. Although certain values are discussed, those are examples and other values may be utilized.

TABLE 4: TCVTROWD2PSE (for a move of data from a tile (T) to a ROW in a vector (e.g., E being an EVEX vector) register (e.g., 512 bits wide) that also converts (CON) the data from a double word (D) integer format to (2) a packed single (PS) floating-point format using an immediate (imm8, e.g., having a value of 0 to 15 in a 16 row embodiment) for row selection, tsrc to indicate the source tile, and zdest to indicate the destination vector register.

*TABLE 4: TCVTROWD2PSE*

```
TCVTROWD2PSE zdest, tsrc, imm8
row_index := imm8

for i in 0 ... palette_table[palette_id].bytes_per_row/4:
    zdest.f32[i] := CONVERT_INT32_T0_FP32(tsrc.row(row-index_dword[i], RNE)
zdest[MAX_VL-1:512] := 0
```

TABLE 5: TCVTROWD2PSE (for a move of data from a tile (T) to a ROW in a vector (e.g., E being an EVEX vector) register (e.g., 512 bits wide) that also converts (CON) the data from a double word (D) integer format to (2) a packed single (PS) floating-point format using a scalar (e.g., general) purpose register (e.g., 32-bit register (r32)) for row selection, tsrc to indicate the source tile, and zdest to indicate the destination vector register.

*TABLE 5: TCVTROWD2PSE*

```
TCVTROWD2PSE zdest, tsrc, r32
row_index := r32

for i in 0 ... palette_table[palette_id].bytes_per_row/4:
    zdest.f32[i] := C0NVERT_INT32_T0_FP32(tsrc.row[row_index].dword[i], RNE)
zdest[MAX_VL-1:512] := 0
```

TABLE 6: TCVTROWPS2BF16E (for a move of data from a tile (T) to a ROW in a vector (e.g., E being an EVEX vector) register (e.g., 512 bits wide) that also converts (CON) the data from a packed single (PS) floating-point format to (2) a binary float (BF16) floating-point format using an immediate (imm8, e.g., having a value of 0 to 15 in a 16 row embodiment) for row selection, tsrc to indicate the source tile, and zdest to indicate the destination vector register.

*TABLE 6: TCVTROWPS2BF16E*

```
TCVTROWPS2BF16E zdest, tsrc, imm8
row_index := imm8

for i in 0 ... palette_table[palette_id].bytes_per_row/4:
    zdest.word[2*i+0] := 0
    zdest.bf16[2*i+1] := CONVERT_FP32_T0_BF16(tsrc.row[row_index].fp32[i], RNE)
zdest[MAX_VL-1:512] := 0
```

TABLE 7: TCVTROWPS2BF16E (for a move of data from a tile (T) to a ROW in a vector (e.g., E being an EVEX vector) register (e.g., 512 bits wide) that also converts (CON) the data from a packed single (PS) floating-point format to (2) a binary float (BF16) floating-point format using a scalar (e.g., general) purpose register (e.g., 32-bit register (r32)) for row selection, tsrc to indicate the source tile, and zdest to indicate the destination vector register.

*TABLE 7: TCVTROWPS2BF16E*

```
TCVTROWPS2BF16E zdest, tsrc, r32
row_index := r32

for i in 0 ... palette_table[palette_id].bytes_per_row/4:
    zdest.word[2*i+0] := 0
    zdest.bf16[2*i+1] := C0MVERT_FP32_T0_BF16(tsrc.row[row_index].fp32[i], RNE)
zdest[MAX_VL-1:512] := 0
```

TABLE 8: TCVTROWPS2PHE (for a move of data from a tile (T) to a ROW in a vector (e.g., E being an EVEX vector) register (e.g., 512 bits wide) that also converts (CON) the data from a packed single (PS) floating-point format to (2) a packed single (PS) floating-point format using an immediate (imm8, e.g., having a value of 0 to 15 in a 16 row embodiment) for row selection, tsrc to indicate the source tile, and zdest to indicate the destination vector register.

*TABLE 8: TCVTROWPS2PHE*

```
TCVTROWPS2PHE zdest, tsrc, imm8
row_index := imm8

for i in 0 ... palette_table[palette_id].bytes_per_row/4:
    zdest.word[2*i+0] := 0
    zdest.f16[2*i+1] := CONVERT_FP32_T0_FP16(tsrc.row[row_index].fp32[i], RNE)
zdest[MAX_VL-1:512] := 0
```

TABLE 9: TCVTROWPS2PHE (for a move of data from a tile (T) to a ROW in a vector (e.g., E being an EVEX vector) register (e.g., 512 bits wide) that also converts (CON) the data from a packed single (PS) floating-point format to (2) a packed single (PS) floating-point format using a scalar (e.g., general) purpose register (e.g., 32-bit register (r32)) for row selection, tsrc to indicate the source tile, and zdest to indicate the destination vector register.

*TABLE 9: TCVTROWPS2PHE*

```
TCVTROWPS2PHE zdest, tsrc, r32
row_index := r32

for i in 0 ... palette_table[palette_id].bytes_per_row/4:
    zdest.word[2*i+0] := 0
    zdest.f16[2*i+1] := CONVERT_FP32_T0_FP16(tsrc.row[row_index].fp32[i], RNE)
zdest[MAX_VL-1:512] := 0
```

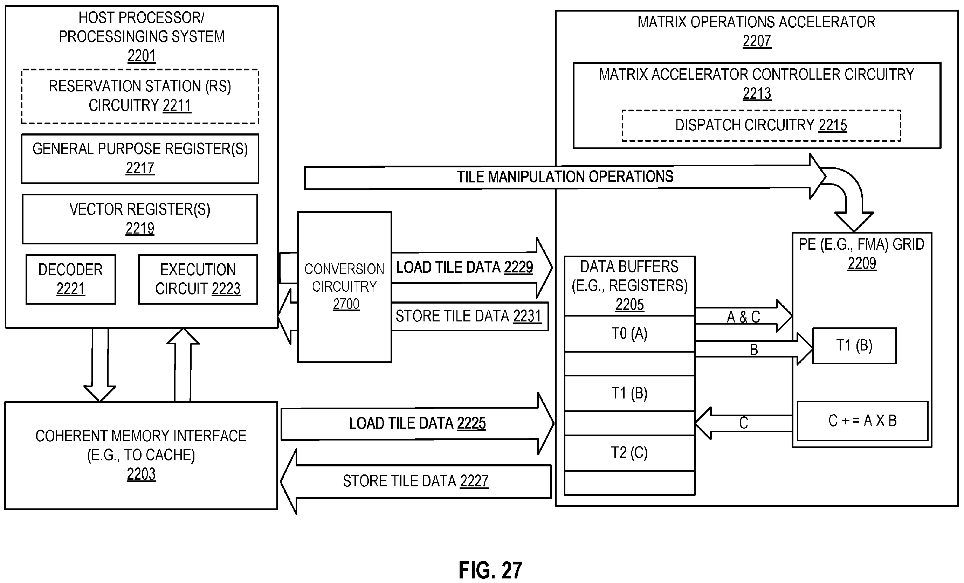

**Figure 27** illustrates an embodiment of a system comprising a matrix (tile) operations accelerator 2207 that utilizes one or more direct paths for loading data into a tile 2205 from a vector register 2219 and/or storing data from a tile 2205 into a vector register 2219 that includes conversion circuitry 2700 according to embodiments of the disclosure. Conversion circuitry 2700 may receive one or more values as input in a first format (e.g., first number format) and convert (e.g., for each element in parallel) the values into a second format (e.g., second number format), for example, without utilizing any of vector registers 2219 for the conversion process. In certain embodiments, a host processor/processing system 2201 (for example, a hardware processor core, e.g., processor core 3490 in Figure 34B) communicates commands (e.g., matrix manipulation operations such as arithmetic or matrix manipulation operations, load, and/or store operations) to a matrix operations accelerator 2207. However, this is shown this way for discussion purposes only. As detailed herein, accelerator 2207 may be a part of a processing core. Commands that are tile manipulation operator instructions may refer to tiles as register-register ("reg-reg") or register-memory ("reg-mem") format. Other commands such as TILESTORE, TILELOAD, TILECONFIG, etc., do not perform data operations on a tile in certain embodiments. Commands may be decoded instructions (e.g., micro-operations) or macro-instructions for the accelerator 2207 to handle. In one embodiment, a hardware processor core sends micro-ops to matrix (tile) operations accelerator 2207 in response to a matrix operations instruction being executed by the hardware processor core.

In one embodiment, reservation station (RS) circuitry 2211 sends commands (e.g., micro-ops) to matrix operations accelerator 2207. In certain embodiments, matrix operations accelerator 2207 is a tile matrix unit (TMU). In certain embodiments, matrix operations accelerator 2207 includes a matrix accelerator controller circuitry 2213. In one embodiment, matrix accelerator controller (e.g., circuitry 2213) is to control the operations and flow of data in, out, and/or within matrix operations accelerator 2207. Matrix operations accelerator 2207 (e.g., matrix accelerator controller circuitry 2213) may include dispatch circuitry 2215, for example, to control the dispatching of received requests (e.g., commands) from host processor/processing system 2201 to one or more components of the matrix operations accelerator 2207.

In certain embodiments, matrix operations accelerator 2207 utilize a grid of processing elements 2209 (e.g., fused multiply add (FMA) circuits) to perform operations. In one embodiment, dispatch circuitry 2215 controls the sending of data (e.g., one or more values from a tile) from data buffers 2205 (e.g., registers forming a tile) to the grid of processing elements 2209. In certain embodiments, the grid of processing elements 2209 is a two-dimensional grid of processing elements, e.g., two-dimensional grid of FMAs in Figure 6.

Depicted matrix operations accelerator 2207 includes data buffers (e.g., registers) 2205. In certain embodiments, data buffers (e.g., registers) 2205 are configurable to store a respective matrix, for example, into a first plurality of registers (e.g., tile) that represents a first two-dimensional matrix (e.g., tile marked as T0 storing matrix A in storage 2205), a second two-dimensional matrix (e.g., tile marked as T1 storing matrix B in storage 2205), a third two-dimensional matrix (e.g., tile marked as T3 storing matrix C in storage 2205), etc. System (e.g., host processor/processing system 2201) may include an (e.g., coherent) memory interface 2203 (e.g., data cache unit) to send and receive data (e.g., in contrast to commands) between host processor/processing system 2201 (e.g., as an Out of Order (OoO) core) and matrix operations accelerator 2207 (e.g., including load to tile connection path 2225 from memory interface 2203 and/or store from tile connection path 2227 from memory interface 2203).

As shown in Figure 22, certain embodiments herein utilize a (e.g., coherent) memory interface (e.g., memory interface 2203 in Figure 22) to transfer data between memory (e.g., cache) and/or host processor 2201 (e.g., host processor 2201) and matrix operations accelerator (e.g., matrix operations accelerator 2207, for example, the data buffers 2205 (e.g., registers forming a tile) (e.g., tile registers) thereof). However, in certain embodiments, it may be desirable to allow (e.g., via one or more instructions) access (e.g., direct access) to the data buffers 2205 (e.g., registers forming a tile). In certain embodiments, a programmer of code for a processor is limited to the instruction set architecture (ISA) of that processor. Thus, certain embodiments herein provide an ISA that includes one or more (e.g., macro) instructions that allow movement of data (e.g., without utilizing an indirect path, such as, but not limited to, the path including memory interface 2203) between one or more registers of a processor and the data buffers (e.g., registers forming a tile) of a matrix operations accelerator. Certain embodiments herein are directed to instructions for moving data between tiles and packed data registers (e.g., vector registers having a plurality of elements), for example, between vector register(s) 2219 and data buffers 2205 (e.g., registers forming a tile). Embodiments herein provide an ISA that includes one or more instructions that utilizes one or more direct paths (e.g., load to tile connection path 2229 and/or store from tile connection path 2231) for loading data into a tile from a vector register 2219 and/or storing data from a tile (e.g., in data buffers 2205) into a vector register 2219. Host processor may include (e.g., scalar) general purpose registers 2217, e.g., separate from any registers used for 128 bit vector instructions (e.g., "SSE" instructions/registers), (e.g., 256 bit or 512 bit) vector instructions with 3 operand instruction format (e.g., "AVX" instructions/registers), and/or matrix instructions (e.g., "matrix accelerator" instructions/tiles).

The instructions disclosed herein are improvements to the functioning of a processor (e.g., of a computer) itself. Instruction decode circuitry (e.g., a decoder 2221) not having such an instruction as a part of its instruction set would not decode as discussed herein. An execution circuit (e.g., execution circuit 2223) not having such an instruction as a part of its instruction set would not execute as discussed herein. For example, a single instruction that, when a processor decodes the single instruction into a decoded single instruction and that decoded single instruction is executed by the processor, causes a store of one or more elements from the plurality of registers that represents the two-dimensional matrix into the vector register by a coupling of the hardware processor core to the matrix operations accelerator circuit that is separate from the coupling to a memory interface (e.g., or via a cache). For example, a single instruction that, when a processor decodes the single instruction into a decoded single instruction and that decoded single instruction is executed by the processor, causes a store of one or more elements from the vector register into the plurality of registers that represents the two-dimensional matrix by a coupling of the hardware processor core to the matrix operations accelerator circuit that is separate from the coupling to a memory interface (e.g., or via a cache).

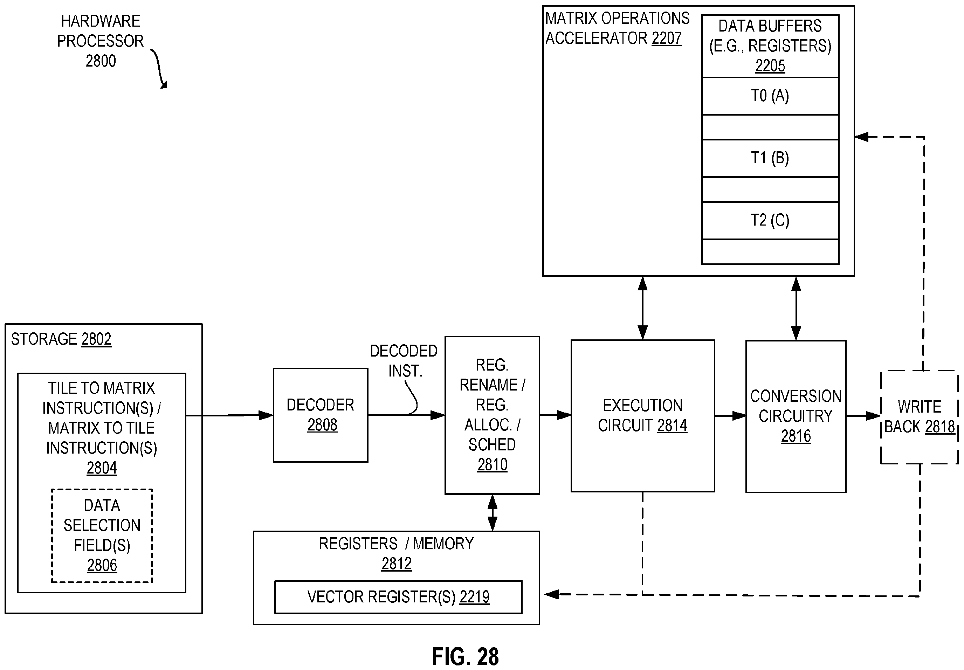

**Figure 28** illustrates a hardware processor 2800 coupled to storage 2802 that includes one or more "tile to vector register" and/or a "vector register to tile" instructions 2804 and a matrix (tile) operations accelerator 2207 that utilizes one or more direct paths for loading data into a tile 2205 from a vector register 2219 and/or storing data from a tile 2205 into a vector register 2219 that includes conversion circuitry 2816 according to embodiments of the disclosure. Conversion circuitry 2816 may receive one or more values as input in a first format (e.g., first number format) and convert (e.g., for each element in parallel) the values into a second format (e.g., second number format), for example, without utilizing any of vector registers 2219 and/or execution circuit 2814 for the conversion process. The instructions 2804 may include one or more data selection fields 2806 (e.g., operands) that identify (e.g., all or a proper subset of elements of) vector register(s) 2219 and/or data buffers 2205 (e.g., registers forming a tile).

In certain embodiments, (e.g., where the processor/core supports out-of-order (OoO) execution), the processor includes a register rename/allocator circuit 2810 coupled to register file/memory circuit 2812 (e.g., unit) to allocate resources and perform register renaming on registers (e.g., registers associated with the initial sources and final destination of the instruction). In certain embodiments, (e.g., for out-of-order execution), the processor includes one or more scheduler circuits 2810 coupled to the decoder 2808. The scheduler circuit(s) may schedule one or more operations associated with decoded instructions, including one or more operations decoded from "tile to vector register" and/or a "vector register to tile" instructions 2804, e.g., for execution on the execution circuit 2814.

As one example, a decoded "tile to vector register" instruction 2804 is to cause execution circuit 2814 to move data from a tile of data buffers 2205 of matrix operations accelerator 2207 to conversion circuitry 2816 for conversion and those converted values into vector register(s) 2219, e.g., without sending that data through a (e.g., cache coherent) memory interface.

As another example, a decoded "vector to tile register" instruction 2804 is to cause execution circuit 2814 to move data from vector register(s) 2219 to conversion circuitry 2816 for conversion and those converted values into a tile of data buffers 2205 of matrix operations accelerator 2207, e.g., without sending that data through a (e.g., cache coherent) memory interface.

In certain embodiments, a write back circuit 2818 is included to write back results of an instruction to a destination (e.g., write them to a register(s) 2219 and/or a tile of data buffers 2205), for example, so those results are visible within a processor (e.g., visible outside of the execution circuit that produced those results).

One or more of these components (e.g., decoder 2808, register rename / register allocator / scheduler 2810, execution circuit 2814, registers (e.g., register file)/memory 2812, or write back circuit 2818) may be in a single core of a hardware processor (e.g., and multiple cores each with an instance of these components).

Embodiments of tile-to-vector instructions allow post-processing of a matrix result with other (e.g., SIMD) hardware used for elementwise operations. For example, in a neural network the layer inputs can be matrix multiplied with weights using tiles (e.g., and matrix operation accelerator and its instructions), and then (vector registers (e.g., AVX512 SIMD registers) and vector instructions can be used to perform an activation function. Embodiments herein enable a transfer between tiles (e.g., AMX registers) and vector (e.g., AVX512) registers without requiring a (e.g., slow) passage through memory. Certain embodiments herein are further leveraged by keeping two sets of tiles, and interleaving the matrix operations (e.g., multiplication) using one set with vector processing of the results of the other set which contains the results of a previous matrix operation (e.g., multiplication).

In certain embodiments, exposing tile-to-vector transfers as instruction(s) discussed herein also gives software flexibility to use the instruction(s) as a building block for more complex sequences, such as convert+store from tile or scattering tile rows to arbitrary memory locations without the same stride as in other tile store instructions.

*(II) Moving data from one or more vector registers to one or more tiles*

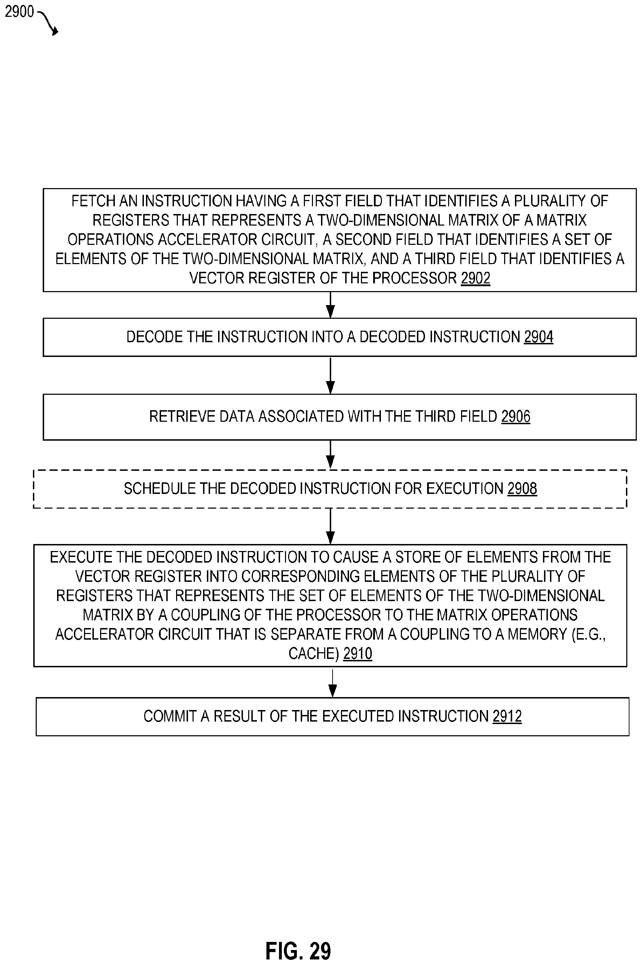

**Figure 29** illustrates a method 2900 of processing a "vector register to tile" instruction according to embodiments of the disclosure. A processor (e.g., or processor core) may perform method 2900, e.g., in response to receiving a request to execute an instruction from software. Depicted method 2900 includes processing a "vector register to tile" instruction by: fetch an instruction (e.g., having a first field that identifies a plurality of registers that represents a two-dimensional matrix of a matrix operations accelerator circuit, a (optional) second field that identifies a set of elements of the two-dimensional matrix, and a third field that identifies a vector register(s) of the processor) 2902, decode the instruction into a decoded instruction 2904, retrieve data associated with the third field 2906, (optionally) schedule the decoded instruction for execution 2908, execute the decoded instruction to cause a store of (e.g., all) elements from the vector register into corresponding elements of the plurality of registers that represents the set of elements of the two-dimensional matrix by a coupling of the processor to the matrix operations accelerator circuit that is separate from a coupling to a memory (e.g., cache) 2910, and commit a result of the executed instruction 2912.

Embodiments herein includes instructions to move the values from a vector register into a row(s) or a column(s) (or a combination thereof) in a tile. The row or column can be selected either by an immediate operand or by a general purpose (e.g., general purpose register 2217 in Figure 22) or SIMD register (e.g., vector register 2219 in Figure 22).

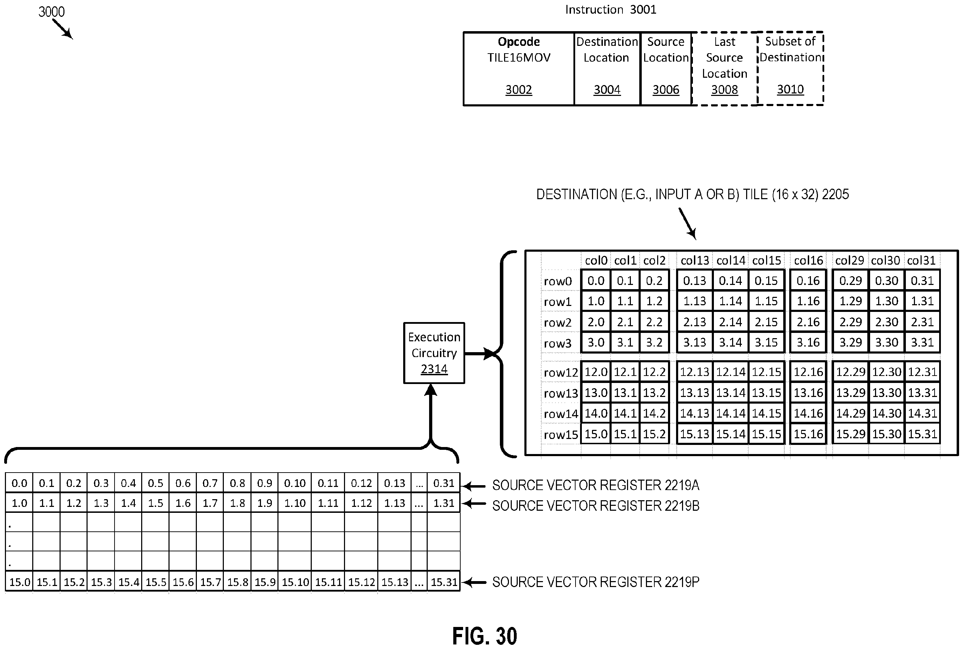

**Figure 30** is a block diagram illustrating use of a TILEXMOVE instruction according to embodiments of the disclosure. In certain embodiments, the "X" is a positive integer that indicates a number of vector registers to source data from, e.g., having a value of 1-16 in certain embodiments. As shown, instruction 3001 includes an opcode 3002 (e.g. TILE16MOV), which indicates that the processor is to move (e.g., store) all (e.g., active) elements from the source vector register(s) 2219 (e.g., starting with register 2219A as the first register) into tile 2205 (e.g., plurality of registers that represents the two-dimensional matrix), for example, by a coupling of the processor to the matrix operations accelerator circuit that is separate from a coupling to a memory (e.g., cache), a source location field 3006 identifying the source vector register (e.g., first source register 2219A), and a destination location field 3004 identifying the destination tile 2205, and (optionally) a second source location field 3008 identifying another (e.g., the last utilized) source vector register(s) (e.g., vector register 2219P in Figure 30). Instruction 3001 may include a field 3010 identifying a proper subset of elements of the destination tile 2205 to store data sourced from the vector register(s), e.g., from one or more of vector registers 2219A-2219P. In one embodiment, a field may be included to indicate a number of vector registers to be utilized.

Also shown is system 3000 for executing the TILE16MOV instruction. The system includes specified destination vector register(s) (e.g., utilizing vector registers 2219A-2219P for the example in Figure 30), specified destination matrix (tile) 2205, and execution circuit 2314.

In certain embodiments, a "vector register to tile" instruction allows use of vector (e.g., SIMD) hardware and instructions to process (e.g., pre-process) data from memory before writing it into a tile, for example, without having to perform an additional pass through memory. Examples pre-processing operations include datatype conversion, decompression, loads from arbitrary addresses, etc.

In certain embodiments, a "vector register to tile" instruction writes one row (or column) of a tile while not modifying the others. In certain embodiments, a "vector register to tile" instruction writes multiple rows (or columns) using several vector registers as sources. In certain embodiments, a "vector register to tile" instruction writes the entire tile rather than updating a proper subset of the rows (or columns), e.g., to allows simplification of the tile renaming (e.g., as discussed herein) due to not having to track partial tile updates.

The number of rows to be written can be determined according to the tile dimensions or hard-coded in the instruction (e.g., within the opcode). In certain embodiments, if the (e.g., requested portion of the) tile is larger (e.g., wider) than the set of vector registers, execution of a "vector register to tile" instruction causes a fault, retaining of the previous (e.g., old) tile values, or zeroing out of the out-of-bounds elements. In certain embodiments, if the tile dimensions are smaller than the set of vector registers, execution of a "vector register to tile" instruction causes a fault or ignoring (e.g., not moving them into the tile) of the out-of-bounds elements in the group of vector registers.

Below is an example for an instruction that writes a block of 16 vector registers to a (e.g., full) tile. TABLE 10: TILE16MOVE (for a move of data from 16 (16) vector (e.g., E being an EVEX vector) registers (e.g., each 512 bits wide) into a tile (T) using tdst to indicate the destination tile, and zsrc to indicate the source (e.g., base) vector register. The ~ below may be a logical NOT operation per bit (e.g., a bit flip).

*TABLE 10: TILE16MOVE*

```
TILE16MOVE tdst, zsrc

N := 16
src_base := zsrc & -(N-1)

# reg[] is an array of the ZMM registers
for i in 0 ... tdst.rows:
    write_row_and_zero(tdst, i, reg[src_base+i], tdst.colsb)
zero_upper_rows(tdst, tdst.rows)
zero_tileconfig_start()
```

Further exemplary architectures, systems, etc. that the above may be used in are detailed below.

At least some embodiments of the disclosed technologies can be described in view of the following examples:

Example 1. An apparatus comprising:

a matrix operations accelerator circuit comprising:

a two-dimensional grid of processing elements,
a plurality of registers that represents a two-dimensional matrix coupled to the two-dimensional grid of processing elements, and
a coupling to a cache; and

a hardware processor core comprising:

a vector register(s),
a decoder to decode a single instruction into a decoded single instruction, the single instruction including a first field that identifies the two-dimensional matrix, a second field that identifies one or more elements of the two-dimensional matrix, and a third field that identifies the vector register(s), and
an execution circuit to execute the decoded single instruction to cause a store of the one or more elements from the plurality of registers that represents the two-dimensional matrix into the vector register(s) by a coupling of the hardware processor core to the matrix operations accelerator circuit that is separate from the coupling to the cache.

Example 2. The apparatus of example 1, wherein the one or more elements of the two-dimensional matrix is a proper subset of elements of the two-dimensional matrix, and the second field is an immediate of the single instruction that identifies the proper subset of elements of the two-dimensional matrix.

Example 3. The apparatus of example 1, wherein the one or more elements are a single row or a single column of the two-dimensional matrix identified by the second field, and the second field is a register of the hardware processor core.

Example 4. The apparatus of example 1, wherein the execution circuit is to generate a fault indication when a requested row or a requested column exceeds a number of rows or a number of columns of the two-dimensional matrix, respectively.

Example 5. The apparatus of example 1, wherein the execution circuit is to generate a fault indication when a number of elements in a requested row or a requested column of the two-dimensional matrix is less than a number of elements of the vector register.

Example 6. The apparatus of example 1, wherein the single instruction comprises a fourth field that identifies an offset into a requested row or a requested column of the two-dimensional matrix to source the one or more elements from the plurality of registers.

Example 7. The apparatus of example 1, further comprising conversion circuitry coupled to the coupling of the hardware processor core to the matrix operations accelerator circuit, and the execution circuit of the hardware processor core is to execute the decoded single instruction to convert the one or more elements from the plurality of registers that represents the two-dimensional matrix from a first number format to a second different number format, and cause the store of the one or more elements in the second different number format into the vector register.

Example 8. The apparatus of example 1, wherein the vector register comprises a plurality of vector registers, the one or more elements are all elements of the two-dimensional matrix, and the execution circuit is to execute the decoded single instruction to store the all elements from the plurality of registers that represents the two-dimensional matrix into the plurality of vector registers.

Example 9. A method comprising:

generating an output, from a two-dimensional grid of processing elements of a matrix operations accelerator circuit comprising a coupling to a cache, into a plurality of registers of the
matrix operations accelerator circuit that represents a two-dimensional matrix; decoding, with a decoder of a hardware processor core, a single instruction into a decoded single instruction, the single instruction including a first field that identifies the two-dimensional matrix, a second field that identifies one or more elements of the two-dimensional matrix,
and a third field that identifies a vector register of the hardware processor core; and executing the decoded single instruction with an execution circuit of the hardware processor core to cause a store of the one or more elements from the plurality of registers that represents the two-dimensional matrix into the vector register by a coupling of the hardware processor core to the matrix operations accelerator circuit that is separate from the coupling to the cache.

Example 10. The method of example 9, wherein the one or more elements of the two-dimensional matrix is a proper subset of elements of the two-dimensional matrix, and the second field is an immediate of the single instruction that identifies the proper subset of elements of the two-dimensional matrix.

Example 11. The method of example 9, wherein the one or more elements are a single row or a single column of the two-dimensional matrix identified by the second field, and the second field is a register of the hardware processor core.

Example 12. The method of example 9, further comprising generating, by the execution circuit, a fault indication when a requested row or a requested column exceeds a number of rows or a number of columns of the two-dimensional matrix, respectively.

Example 13. The method of example 9, generating, by the execution circuit, a fault indication when a number of elements in a requested row or a requested column of the two-dimensional matrix is less than a number of elements of the vector register.

Example 14. The method of example 9, wherein the single instruction comprises a fourth field that identifies an offset into a requested row or a requested column of the two-dimensional matrix to source the one or more elements from the plurality of registers.

Example 15. The method of example 9, wherein the executing further comprises converting the one or more elements from the plurality of registers that represents the two-dimensional matrix from a first number format to a second different number format with conversion circuitry coupled to the coupling of the hardware processor core to the matrix operations accelerator circuit, and cause the store of the one or more elements in the second different number format into the vector register.

Example 16. The method of example 9, wherein the vector register comprises a plurality of vector registers, the one or more elements are all elements of the two-dimensional matrix, and the executing comprises storing the all elements from the plurality of registers that represents the two-dimensional matrix into the plurality of vector registers.

Example 17. A non-transitory machine readable medium that stores code that when executed by a machine causes the machine to perform a method comprising:

generating an output, from a two-dimensional grid of processing elements of a matrix operations accelerator circuit comprising a coupling to a cache, into a plurality of registers of the matrix operations accelerator circuit that represents a two-dimensional matrix;

decoding, with a decoder of a hardware processor core, a single instruction into a decoded single instruction, the single instruction including a first field that identifies the two-dimensional matrix, a second field that identifies one or more elements of the two-dimensional matrix,

and a third field that identifies a vector register of the hardware processor core; and executing the decoded single instruction with an execution circuit of the hardware processor core to cause a store of the one or more elements from the plurality of registers that represents the two-dimensional matrix into the vector register by a coupling of the hardware processor core to the matrix operations accelerator circuit that is separate from the coupling to the cache.

Example 18. The non-transitory machine readable medium of example 17, wherein the one or more elements of the two-dimensional matrix is a proper subset of elements of the two-dimensional matrix, and the second field is an immediate of the single instruction that identifies the proper subset of elements of the two-dimensional matrix.

Example 19. The non-transitory machine readable medium of example 17, wherein the one or more elements are a single row or a single column of the two-dimensional matrix identified by the second field, and the second field is a register of the hardware processor core.

Example 20. The non-transitory machine readable medium of example 17, further comprising generating, by the execution circuit, a fault indication when a requested row or a requested column exceeds a number of rows or a number of columns of the two-dimensional matrix, respectively.

Example 21. The non-transitory machine readable medium of example 17, generating, by the execution circuit, a fault indication when a number of elements in a requested row or a requested column of the two-dimensional matrix is less than a number of elements of the vector register.

Example 22. The non-transitory machine readable medium of example 17, wherein the single instruction comprises a fourth field that identifies an offset into a requested row or a requested column of the two-dimensional matrix to source the one or more elements from the plurality of registers.

Example 23. The non-transitory machine readable medium of example 17, wherein the executing further comprises converting the one or more elements from the plurality of registers that represents the two-dimensional matrix from a first number format to a second different number format with conversion circuitry coupled to the coupling of the hardware processor core to the matrix operations accelerator circuit, and cause the store of the one or more elements in the second different number format into the vector register.

Example 24. The non-transitory machine readable medium of example 17, wherein the vector register comprises a plurality of vector registers, the one or more elements are all elements of the two-dimensional matrix, and the executing comprises storing the all elements from the plurality of registers that represents the two-dimensional matrix into the plurality of vector registers.

Example 25. An apparatus comprising:

a matrix operations accelerator circuit comprising:

a two-dimensional grid of processing elements,
a plurality of registers that represents a two-dimensional (e.g., input) matrix coupled to the two-dimensional grid of processing elements, and
a coupling to a cache; and

a hardware processor core comprising:

a vector register(s),
a decoder to decode a single instruction into a decoded single instruction, the single instruction including a first field that identifies the two-dimensional matrix, a second field that identifies a set of elements of the two-dimensional matrix, and a third field that identifies the vector register(s), and
an execution circuit to execute the decoded single instruction to cause a store of elements from the vector register(s) into corresponding elements of the plurality of registers that represents the set of elements of the two-dimensional matrix by a coupling of the hardware processor core to the matrix operations accelerator circuit that is separate from the coupling to the cache.

In yet another embodiment, an apparatus comprises a data storage device that stores code that when executed by a hardware processor causes the hardware processor to perform any method disclosed herein. An apparatus may be as described in the detailed description. A method may be as described in the detailed description.

Detailed Exemplary Systems. Processors, and Emulation

Detailed herein are examples of hardware, software, etc. to execute the above described instructions. For example, what is described below details aspects of instruction execution including various pipeline stages such as fetch, decode, schedule, execute, retire, etc.

Instruction Sets

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, November 2018; and see Intel® Architecture Instruction Set Extensions Programming Reference, October 2018).

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

**Generic Vector Friendly Instruction Format**

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

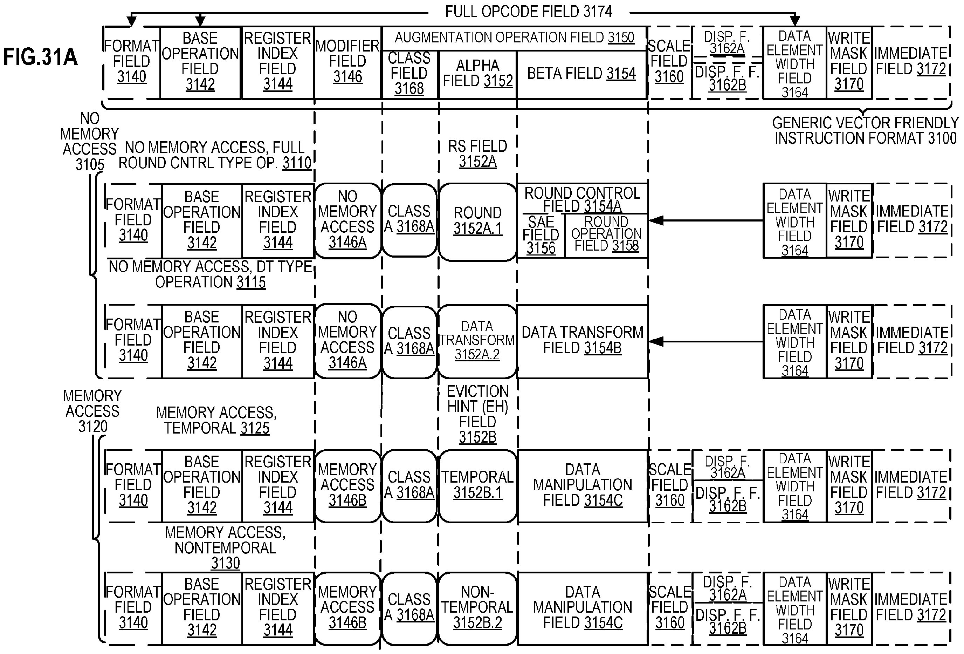

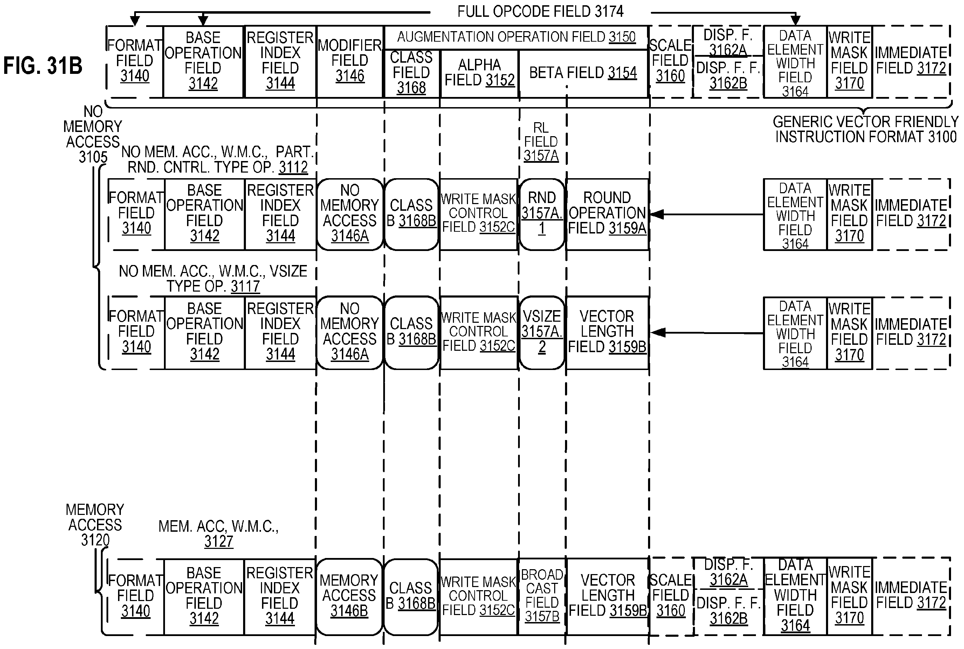

**Figures 31A-31B** are block diagrams illustrating a generic vector friendly instruction format and instruction templates thereof according to embodiments of the disclosure. **Figure 31A** is a block diagram illustrating a generic vector friendly instruction format and class A instruction templates thereof according to embodiments of the disclosure; while **Figure 31B** is a block diagram illustrating the generic vector friendly instruction format and class B instruction templates thereof according to embodiments of the disclosure. Specifically, a generic vector friendly instruction format 3100 for which are defined class A and class B instruction templates, both of which include no memory access 3105 instruction templates and memory access 3120 instruction templates. The term generic in the context of the vector friendly instruction format refers to the instruction format not being tied to any specific instruction set.

While embodiments of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 31A** include: 1) within the no memory access 3105 instruction templates there is shown a no memory access, full round control type operation 3110 instruction template and a no memory access, data transform type operation 3115 instruction template; and 2) within the memory access 3120 instruction templates there is shown a memory access, temporal 3125 instruction template and a memory access, non-temporal 3130 instruction template. The class B instruction templates in **Figure 31B** include: 1) within the no memory access 3105 instruction templates there is shown a no memory access, write mask control, partial round control type operation 3112 instruction template and a no memory access, write mask control, vsize type operation 3117 instruction template; and 2) within the memory access 3120 instruction templates there is shown a memory access, write mask control 3127 instruction template.

The generic vector friendly instruction format 3100 includes the following fields listed below in the order illustrated in **Figures 31A-31B.**

Format field 3140 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 3142 - its content distinguishes different base operations.

Register index field 3144 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 3146 - its content distinguishes occurrences of instructions in the generic vector instruction format that specify memory access from those that do not; that is, between no memory access 3105 instruction templates and memory access 3120 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 3150 - its content distinguishes which one of a variety of different operations to be performed in addition to the base operation. This field is context specific. In one embodiment of the disclosure, this field is divided into a class field 3168, an alpha field 3152, and a beta field 3154. The augmentation operation field 3150 allows common groups of operations to be performed in a single instruction rather than 2, 3, or 4 instructions.

Scale field 3160 - its content allows for the scaling of the index field's content for memory address generation (e.g., for address generation that uses 2scale * index + base).

Displacement Field 3162A- its content is used as part of memory address generation (e.g., for address generation that uses 2scale * index + base + displacement).

Displacement Factor Field 3162B (note that the juxtaposition of displacement field 3162A directly over displacement factor field 3162B indicates one or the other is used) - its content is used as part of address generation; it specifies a displacement factor that is to be scaled by the size of a memory access (N) - where N is the number of bytes in the memory access (e.g., for address generation that uses 2scale * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 3174 (described later herein) and the data manipulation field 3154C. The displacement field 3162A and the displacement factor field 3162B are optional in the sense that they are not used for the no memory access 3105 instruction templates and/or different embodiments may implement only one or none of the two.

Data element width field 3164 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 3170 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 3170 allows for partial vector operations, including loads, stores, arithmetic, logical, etc. While embodiments of the disclosure are described in which the write mask field's 3170 content selects one of a number of write mask registers that contains the write mask to be used (and thus the write mask field's 3170 content indirectly identifies that masking to be performed), alternative embodiments instead or additional allow the mask write field's 3170 content to directly specify the masking to be performed.

Immediate field 3172 - its content allows for the specification of an immediate. This field is optional in the sense that is it not present in an implementation of the generic vector friendly format that does not support immediate and it is not present in instructions that do not use an immediate.

Class field 3168 - its content distinguishes between different classes of instructions. With reference to **Figures 31A-B**, the contents of this field select between class A and class B instructions. In **Figures 31A-B**, rounded corner squares are used to indicate a specific value is present in a field (e.g., class A 3168A and class B 3168B for the class field 3168 respectively in **Figures 31A-B**).

**Instruction Templates of Class A**

In the case of the non-memory access 3105 instruction templates of class A, the alpha field 3152 is interpreted as an RS field 3152A, whose content distinguishes which one of the different augmentation operation types are to be performed (e.g., round 3152A. 1 and data transform 3152A.2 are respectively specified for the no memory access, round type operation 3110 and the no memory access, data transform type operation 3115 instruction templates), while the beta field 3154 distinguishes which of the operations of the specified type is to be performed. In the no memory access 3105 instruction templates, the scale field 3160, the displacement field 3162A, and the displacement scale filed 3162B are not present.

No-Memory Access Instruction Templates - Full Round Control Type Operation

In the no memory access full round control type operation 3110 instruction template, the beta field 3154 is interpreted as a round control field 3154A, whose content(s) provide static rounding. While in the described embodiments of the disclosure the round control field 3154A includes a suppress all floating point exceptions (SAE) field 3156 and a round operation control field 3158, alternative embodiments may support may encode both these concepts into the same field or only have one or the other of these concepts/fields (e.g., may have only the round operation control field 3158).

SAE field 3156 - its content distinguishes whether or not to disable the exception event reporting; when the SAE field's 3156 content indicates suppression is enabled, a given instruction does not report any kind of floating-point exception flag and does not raise any floating point exception handler.

Round operation control field 3158 - its content distinguishes which one of a group of rounding operations to perform (e.g., Round-up, Round-down, Round-towards-zero and Round-to-nearest). Thus, the round operation control field 3158 allows for the changing of the rounding mode on a per instruction basis. In one embodiment of the disclosure where a processor includes a control register for specifying rounding modes, the round operation control field's 3150 content overrides that register value.

No Memory Access Instruction Templates - Data Transform Type Operation

In the no memory access data transform type operation 3115 instruction template, the beta field 3154 is interpreted as a data transform field 3154B, whose content distinguishes which one of a number of data transforms is to be performed (e.g., no data transform, swizzle, broadcast).

In the case of a memory access 3120 instruction template of class A, the alpha field 3152 is interpreted as an eviction hint field 3152B, whose content distinguishes which one of the eviction hints is to be used (in **Figure 31A,** temporal 3152B.1 and non-temporal 3152B.2 are respectively specified for the memory access, temporal 3125 instruction template and the memory access, non-temporal 3130 instruction template), while the beta field 3154 is interpreted as a data manipulation field 3154C, whose content distinguishes which one of a number of data manipulation operations (also known as primitives) is to be performed (e.g., no manipulation; broadcast; up conversion of a source; and down conversion of a destination). The memory access 3120 instruction templates include the scale field 3160, and optionally the displacement field 3162A or the displacement scale field 3162B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Memory Access Instruction Templates - Temporal

Temporal data is data likely to be reused soon enough to benefit from caching. This is, however, a hint, and different processors may implement it in different ways, including ignoring the hint entirely.

Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

**Instruction Templates of Class B**

In the case of the instruction templates of class B, the alpha field 3152 is interpreted as a write mask control (Z) field 3152C, whose content distinguishes whether the write masking controlled by the write mask field 3170 should be a merging or a zeroing.

In the case of the non-memory access 3105 instruction templates of class B, part of the beta field 3154 is interpreted as an RL field 3157A, whose content distinguishes which one of the different augmentation operation types are to be performed (e.g., round 3157A. 1 and vector length (VSIZE) 3157A.2 are respectively specified for the no memory access, write mask control, partial round control type operation 3112 instruction template and the no memory access, write mask control, VSIZE type operation 3117 instruction template), while the rest of the beta field 3154 distinguishes which of the operations of the specified type is to be performed. In the no memory access 3105 instruction templates, the scale field 3160, the displacement field 3162A, and the displacement scale filed 3162B are not present.

In the no memory access, write mask control, partial round control type operation 3110 instruction template, the rest of the beta field 3154 is interpreted as a round operation field 3159A and exception event reporting is disabled (a given instruction does not report any kind of floating-point exception flag and does not raise any floating point exception handler).

Round operation control field 3159A - just as round operation control field 3158, its content distinguishes which one of a group of rounding operations to perform (e.g., Round-up, Round-down, Round-towards-zero and Round-to-nearest). Thus, the round operation control field 3159A allows for the changing of the rounding mode on a per instruction basis. In one embodiment of the disclosure where a processor includes a control register for specifying rounding modes, the round operation control field's 3150 content overrides that register value.

In the no memory access, write mask control, VSIZE type operation 3117 instruction template, the rest of the beta field 3154 is interpreted as a vector length field 3159B, whose content distinguishes which one of a number of data vector lengths is to be performed on (e.g., 128, 256, or 512 byte).

In the case of a memory access 3120 instruction template of class B, part of the beta field 3154 is interpreted as a broadcast field 3157B, whose content distinguishes whether or not the broadcast type data manipulation operation is to be performed, while the rest of the beta field 3154 is interpreted the vector length field 3159B. The memory access 3120 instruction templates include the scale field 3160, and optionally the displacement field 3162A or the displacement scale field 3162B.

With regard to the generic vector friendly instruction format 3100, a full opcode field 3174 is shown including the format field 3140, the base operation field 3142, and the data element width field 3164. While one embodiment is shown where the full opcode field 3174 includes all of these fields, the full opcode field 3174 includes less than all of these fields in embodiments that do not support all of them. The full opcode field 3174 provides the operation code (opcode).

The augmentation operation field 3150, the data element width field 3164, and the write mask field 3170 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the disclosure, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

**Exemplary Specific Vector Friendly Instruction Format**

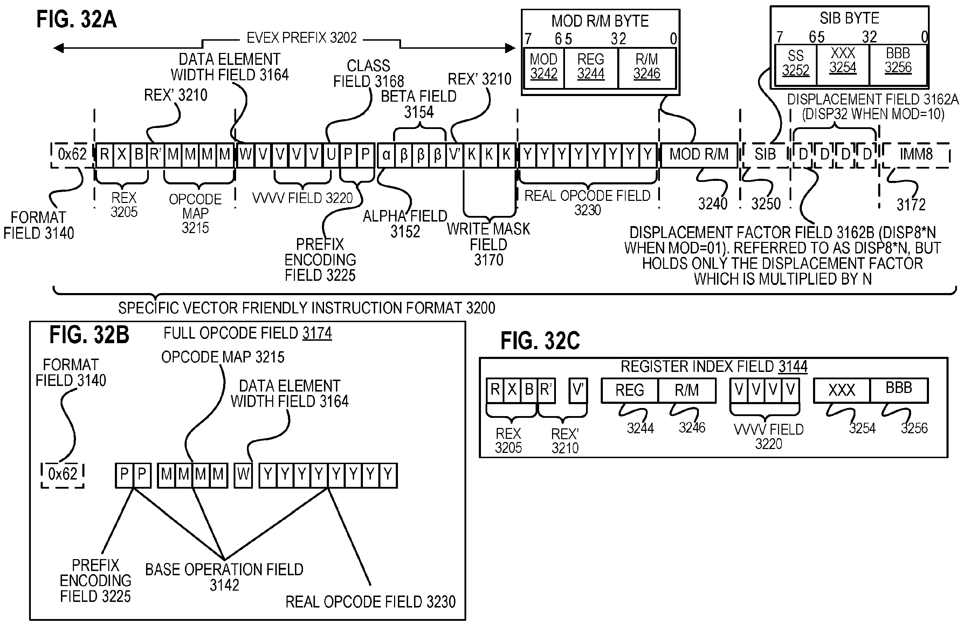

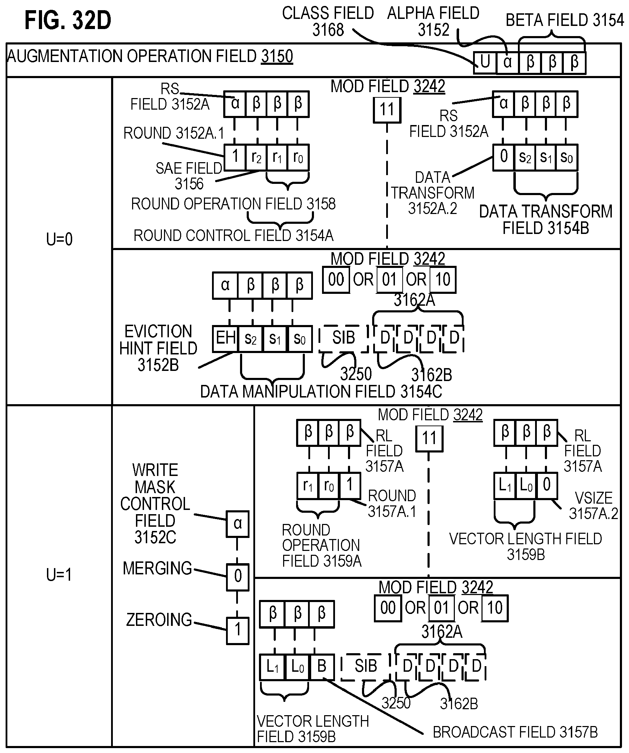

**Figure 32** is a block diagram illustrating an exemplary specific vector friendly instruction format according to embodiments of the disclosure. **Figure 32** shows a specific vector friendly instruction format 3200 that is specific in the sense that it specifies the location, size, interpretation, and order of the fields, as well as values for some of those fields. The specific vector friendly instruction format 3200 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 31** into which the fields from **Figure 32** map are illustrated.

It should be understood that, although embodiments of the disclosure are described with reference to the specific vector friendly instruction format 3200 in the context of the generic vector friendly instruction format 3100 for illustrative purposes, the disclosure is not limited to the specific vector friendly instruction format 3200 except where claimed. For example, the generic vector friendly instruction format 3100 contemplates a variety of possible sizes for the various fields, while the specific vector friendly instruction format 3200 is shown as having fields of specific sizes. By way of specific example, while the data element width field 3164 is illustrated as a one bit field in the specific vector friendly instruction format 3200, the disclosure is not so limited (that is, the generic vector friendly instruction format 3100 contemplates other sizes of the data element width field 3164).

The generic vector friendly instruction format 3100 includes the following fields listed below in the order illustrated in **Figure 32A.**

EVEX Prefix (Bytes 0-3) 3202 - is encoded in a four-byte form.

Format Field 3140 (EVEX Byte 0, bits [7:0]) - the first byte (EVEX Byte 0) is the format field 3140 and it contains 0x62 (the unique value used for distinguishing the vector friendly instruction format in one embodiment of the disclosure).

The second-fourth bytes (EVEX Bytes 1-3) include a number of bit fields providing specific capability.

REX field 3205 (EVEX Byte 1, bits [7-5]) - consists of a EVEX.R bit field (EVEX Byte 1, bit [7] - R), EVEX.X bit field (EVEX byte 1, bit [6] - X), and 3157BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 3110 - this is the first part of the REX' field 3110 and is the EVEX.R' bit field (EVEX Byte 1, bit [4] - R') that is used to encode either the upper 16 or lower 16 of the extended 32 register set. In one embodiment of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 3215 (EVEX byte 1, bits [3:0] - mmmm) - its content encodes an implied leading opcode byte (0F, OF 38, or OF 3).

Data element width field 3164 (EVEX byte 2, bit [7] - W) - is represented by the notation EVEX.W. EVEX.W is used to define the granularity (size) of the datatype (either 32-bit data elements or 64-bit data elements).

EVEX.vvvv 3220 (EVEX Byte 2, bits [6:3]-vvvv)- the role of EVEX.ww may include the following: 1) EVEX.vvvv encodes the first source register operand, specified in inverted (Is complement) form and is valid for instructions with 2 or more source operands; 2) EVEX.vvw encodes the destination register operand, specified in Is complement form for certain vector shifts; or 3) EVEX.vwv does not encode any operand, the field is reserved and should contain 1111b. Thus, EVEX.vvvv field 3220 encodes the 4 low-order bits of the first source register specifier stored in inverted (Is complement) form. Depending on the instruction, an extra different EVEX bit field is used to extend the specifier size to 32 registers.

EVEX.U 3168 Class field (EVEX byte 2, bit [2]-U) - If EVEX.U = 0, it indicates class A or EVEX.U0; if EVEX.U = 1, it indicates class B or EVEX.U1.

Prefix encoding field 3225 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decode circuit's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 3152 (EVEX byte 3, bit [7] - EH; also known as EVEX.EH, EVEX.rs, EVEX.RL, EVEX.write mask control, and EVEX.N; also illustrated with $\alpha$) - as previously described, this field is context specific.

Beta field 3154 (EVEX byte 3, bits [6:4]-SSS, also known as EVEX.s2-0, EVEX.r2-0, EVEX.rr1, EVEX.LL0, EVEX.LLB; also illustrated with $\beta\beta\beta$) - as previously described, this field is context specific.

REX' field 3110 - this is the remainder of the REX' field and is the EVEX. V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv

Write mask field 3170 (EVEX byte 3, bits [2:0]-kkk) - its content specifies the index of a register in the write mask registers as previously described. In one embodiment of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 3230 (Byte 4) is also known as the opcode byte. Part of the opcode is specified in this field.

MOD R/M Field 3240 (Byte 5) includes MOD field 3242, Reg field 3244, and R/M field 3246. As previously described, the MOD field's 3242 content distinguishes between memory access and non-memory access operations. The role of Reg field 3244 can be summarized to two situations: encoding either the destination register operand or a source register operand, or be treated as an opcode extension and not used to encode any instruction operand. The role of R/M field 3246 may include the following: encoding the instruction operand that references a memory address, or encoding either the destination register operand or a source register operand.

Scale, Index, Base (SIB) Byte (Byte 6) - As previously described, the scale field's 3150 content is used for memory address generation. SIB.xxx 3254 and SIB.bbb 3256 - the contents of these fields have been previously referred to with regard to the register indexes Xxxx and Bbbb.

Displacement field 3162A (Bytes 7-10) - when MOD field 3242 contains 10, bytes 7-10 are the displacement field 3162A, and it works the same as the legacy 32-bit displacement (disp32) and works at byte granularity.

Displacement factor field 3162B (Byte 7) - when MOD field 3242 contains 01, byte 7 is the displacement factor field 3162B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 3162B is a reinterpretation of disp8; when using displacement factor field 3162B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 3162B substitutes the legacy x86 instruction set 8-bit displacement. Thus, the displacement factor field 3162B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 3172 operates as previously described.

**Full Opcode Field**

**Figure 32B** is a block diagram illustrating the fields of the specific vector friendly instruction format 3200 that make up the full opcode field 3174 according to one embodiment of the disclosure. Specifically, the full opcode field 3174 includes the format field 3140, the base operation field 3142, and the data element width (W) field 3164. The base operation field 3142 includes the prefix encoding field 3225, the opcode map field 3215, and the real opcode field 3230.

**Register Index Field**

**Figure 32C** is a block diagram illustrating the fields of the specific vector friendly instruction format 3200 that make up the register index field 3144 according to one embodiment of the disclosure. Specifically, the register index field 3144 includes the REX field 3205, the REX' field 3210, the MODR/M.reg field 3244, the MODR/M.r/m field 3246, the VVVV field 3220, xxx field 3254, and the bbb field 3256.

**Augmentation Operation Field**

**Figure 32D** is a block diagram illustrating the fields of the specific vector friendly instruction format 3200 that make up the augmentation operation field 3150 according to one embodiment of the disclosure. When the class (U) field 3168 contains 0, it signifies EVEX.U0 (class A 3168A); when it contains 1, it signifies EVEX.U1 (class B 3168B). When U=0 and the MOD field 3242 contains 11 (signifying a no memory access operation), the alpha field 3152 (EVEX byte 3, bit [7] - EH) is interpreted as the rs field 3152A. When the rs field 3152A contains a 1 (round 3152A.1), the beta field 3154 (EVEX byte 3, bits [6:4]- SSS) is interpreted as the round control field 3154A. The round control field 3154A includes a one bit SAE field 3156 and a two bit round operation field 3158. When the rs field 3152A contains a 0 (data transform 3152A.2), the beta field 3154 (EVEX byte 3, bits [6:4]- SSS) is interpreted as a three bit data transform field 3154B. When U=0 and the MOD field 3242 contains 00, 01, or 10 (signifying a memory access operation), the alpha field 3152 (EVEX byte 3, bit [7] - EH) is interpreted as the eviction hint (EH) field 3152B and the beta field 3154 (EVEX byte 3, bits [6:4]- SSS) is interpreted as a three bit data manipulation field 3154C.

When U=1, the alpha field 3152 (EVEX byte 3, bit [7] - EH) is interpreted as the write mask control (Z) field 3152C. When U=1 and the MOD field 3242 contains 11 (signifying a no memory access operation), part of the beta field 3154 (EVEX byte 3, bit [4]- S0) is interpreted as the RL field 3157A; when it contains a 1 (round 3157A.1) the rest of the beta field 3154 (EVEX byte 3, bit [6-5]- $S_{2-1}$) is interpreted as the round operation field 3159A, while when the RL field 3157A contains a 0 (VSIZE 3157.A2) the rest of the beta field 3154 (EVEX byte 3, bit [6-5]- $S_{2-1}$) is interpreted as the vector length field 3159B (EVEX byte 3, bit [6-5]- $L_{1-0}$). When U=1 and the MOD field 3242 contains 00, 01, or 10 (signifying a memory access operation), the beta field 3154 (EVEX byte 3, bits [6:4]- SSS) is interpreted as the vector length field 3159B (EVEX byte 3, bit [6-5]- $L_{1-0}$) and the broadcast field 3157B (EVEX byte 3, bit [4]-B).

## Exemplary Register Architecture

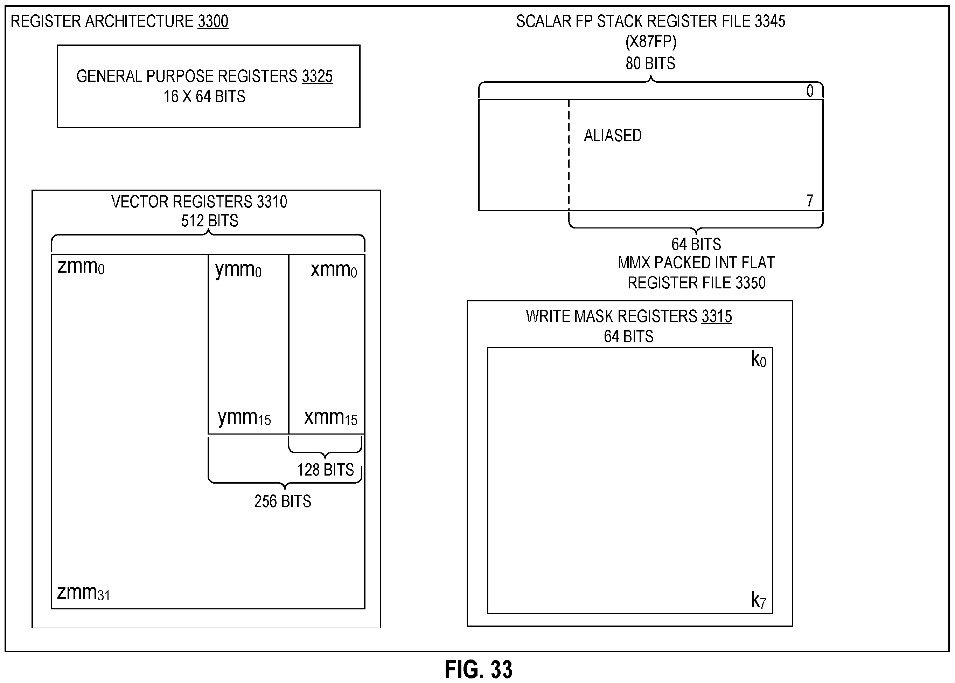

**Figure 33** is a block diagram of a register architecture 3300 according to one embodiment of the disclosure. In the embodiment illustrated, there are 32 vector registers 3310 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 3200 operates on these overlaid register file as illustrated in the below tables.

| Adjustable Vector Length | Class | Operations | Registers |
|---|---|---|---|
| Instruction Templates that do not include the vector length field 3159B | A (Figure 31A; U=0) | 3110,3115, 3125,3130 | zmm registers (the vector length is 64 byte) |
| | B (Figure 31B; U=1) | 3112 | zmm registers (the vector length is 64 byte) |
| Instruction templates that do include the vector length field 3159B | B (Figure 31B; U=1) | 3117, 3127 | zmm, ymm, or xmm registers (the vector length is 64 byte, 32 byte, or 16 byte) depending on the vector length field 3159B |

In other words, the vector length field 3159B selects between a maximum length and one or more other shorter lengths, where each such shorter length is half the length of the preceding length; and instructions templates without the vector length field 3159B operate on the maximum vector length. Further, in one embodiment, the class B instruction templates of the specific vector friendly instruction format 3200 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 3315 - in the embodiment illustrated, there are 8 write mask registers (k0 through k7), each 64 bits in size. In an alternate embodiment, the write mask registers 3315 are 16 bits in size. As previously described, in one embodiment of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 3325 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 3345, on which is aliased the MMX packed integer flat register file 3350 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the disclosure may use wider or narrower registers. Additionally, alternative embodiments of the disclosure may use more, less, or different register files and registers.

## Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

**Exemplary Core Architectures**

**In-order and out-of-order core block diagram**

**Figure 34A** is a block diagram illustrating both an exemplary in-order pipeline and an exemplary register renaming, out-of-order issue/execution pipeline according to embodiments of the disclosure. Figure 34B is a block diagram illustrating both an exemplary embodiment of an in-order architecture core and an exemplary register renaming, out-of-order issue/execution architecture core to be included in a processor according to embodiments of the disclosure. The solid lined boxes in **Figures 34A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 34A,** a processor pipeline 3400 includes a fetch stage 3402, a length decode stage 3404, a decode stage 3406, an allocation stage 3408, a renaming stage 3410, a scheduling (also known as a dispatch or issue) stage 3412, a register read/memory read stage 3414, an execute stage 3416, a write back/memory write stage 3418, an exception handling stage 3422, and a commit stage 3424.

**Figure 34B** shows processor core 3490 including a front end unit 3430 coupled to an execution engine unit 3450, and both are coupled to a memory unit 3470. The core 3490 may be a reduced instruction set computing (RISC) core, a complex instruction set computing (CISC) core, a very long instruction word (VLIW) core, or a hybrid or alternative core type. As yet another option, the core 3490 may be a special-purpose core, such as, for example, a network or communication core, compression engine, coprocessor core, general purpose computing graphics processing unit (GPGPU) core, graphics core, or the like.

The front end unit 3430 includes a branch prediction unit 3432 coupled to an instruction cache unit 3434, which is coupled to an instruction translation lookaside buffer (TLB) 3436, which is coupled to an instruction fetch unit 3438, which is coupled to a decode unit 3440. The decode unit 3440 (e.g., decode circuit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 3440 may be implemented using various different mechanisms. Examples of suitable mechanisms include, but are not limited to, look-up tables, hardware implementations, programmable logic arrays (PLAs), microcode read only memories (ROMs), etc. In one embodiment, the core 3490 includes a microcode ROM or other medium that stores microcode for certain macro-instructions (e.g., in decode unit 3440 or otherwise within the front end unit 3430). The decode unit 3440 is coupled to a rename/allocator unit 3452 in the execution engine unit 3450.

The execution engine unit 3450 includes the rename/allocator unit 3452 coupled to a retirement unit 3454 and a set of one or more scheduler unit(s) 3456. The scheduler unit(s) 3456 represents any number of different schedulers, including reservations stations, central instruction window, etc. The scheduler unit(s) 3456 is coupled to the physical register file(s) unit(s) 3458. Each of the physical register file(s) units 3458 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 3458 comprises a vector registers unit, a write mask registers unit, and a scalar registers unit. These register units may provide architectural vector registers, vector mask registers, and general purpose registers. The physical register file(s) unit(s) 3458 is overlapped by the retirement unit 3454 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 3454 and the physical register file(s) unit(s) 3458 are coupled to the execution cluster(s) 3460. The execution cluster(s) 3460 includes a set of one or more execution units 3462 (e.g., execution circuits) and a set of one or more memory access units 3464. The execution units 3462 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 3456, physical register file(s) unit(s) 3458, and execution cluster(s) 3460 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 3464). It should also be understood that where separate pipelines are used, one or more of these pipelines may be out-of-order issue/execution and the rest in-order.

The set of memory access units 3464 is coupled to the memory unit 3470, which includes a data TLB unit 3472 coupled to a data cache unit 3474 coupled to a level 2 (L2) cache unit 3476. In one exemplary embodiment, the memory access units 3464 may include a load unit, a store address unit, and a store data unit, each of which is coupled to the data TLB unit 3472 in the memory unit 3470. The instruction cache unit 3434 is further coupled to a level 2 (L2) cache unit 3476 in the memory unit 3470. The L2 cache unit 3476 is coupled to one or more other levels of cache and eventually to a main memory.

By way of example, the exemplary register renaming, out-of-order issue/execution core architecture may implement the pipeline 3400 as follows: 1) the instruction fetch 3438 performs the fetch and length decoding stages 3402 and 3404; 2) the decode unit 3440 performs the decode stage 3406; 3) the rename/allocator unit 3452 performs the allocation stage 3408 and renaming stage 3410; 4) the scheduler unit(s) 3456 performs the schedule stage 3412; 5) the physical register file(s) unit(s) 3458 and the memory unit 3470 perform the register read/memory read stage 3414; the execution cluster 3460 perform the execute stage 3416; 6) the memory unit 3470 and the physical register file(s) unit(s) 3458 perform the write back/memory write stage 3418; 7) various units may be involved in the exception handling stage 3422; and 8) the retirement unit 3454 and the physical register file(s) unit(s) 3458 perform the commit stage 3424.

The core 3490 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 3490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyper-Threading technology).

While register renaming is described in the context of out-of-order execution, it should be understood that register renaming may be used in an in-order architecture. While the illustrated embodiment of the processor also includes separate instruction and data cache units 3434/3474 and a shared L2 cache unit 3476, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

## Specific Exemplary In-Order Core Architecture

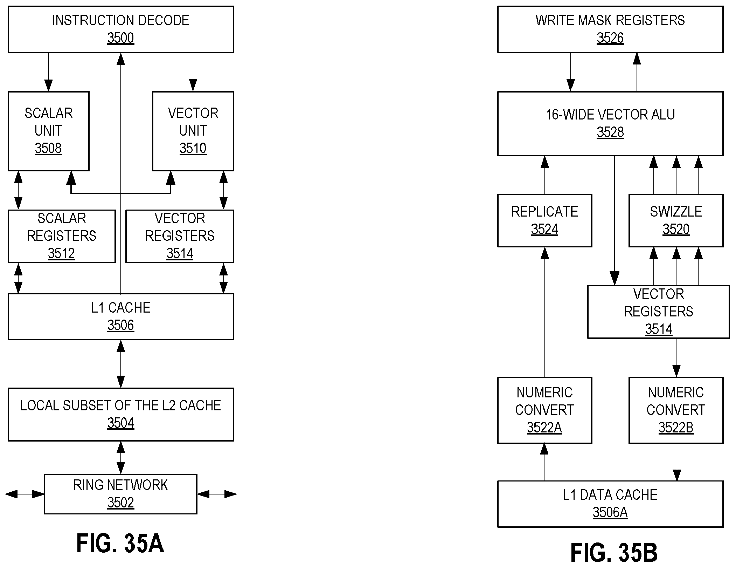

**Figures 35A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 35A** is a block diagram of a single processor core, along with its connection to the on-die interconnect network 3502 and with its local subset of the Level 2 (L2) cache 3504, according to embodiments of the disclosure. In one embodiment, an instruction decode unit 3500 supports the x86 instruction set with a packed data instruction set extension. An L1 cache 3506 allows low-latency accesses to cache memory into the scalar and vector units. While in one embodiment (to simplify the design), a scalar unit 3508 and a vector unit 3510 use separate register sets (respectively, scalar registers 3512 and vector registers 3514) and data transferred between them is written to memory and then read back in from a level 1 (L1) cache 3506, alternative embodiments of the disclosure may use a different approach (e.g., use a single register set or include a communication path that allow data to be transferred between the two register files without being written and read back).

The local subset of the L2 cache 3504 is part of a global L2 cache that is divided into separate local subsets, one per processor core. Each processor core has a direct access path to its own local subset of the L2 cache 3504. Data read by a processor core is stored in its L2 cache subset 3504 and can be accessed quickly, in parallel with other processor cores accessing their own local L2 cache subsets. Data written by a processor core is stored in its own L2 cache subset 3504 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 35B** is an expanded view of part of the processor core in **Figure 35A** according to embodiments of the disclosure. **Figure 35B** includes an L1 data cache 3506A part of the L1 cache 3504, as well as more detail regarding the vector unit 3510 and the vector registers 3514. Specifically, the vector unit 3510 is a 16-wide vector processing unit (VPU) (see the 16-wide ALU 3528), which executes one or more of integer, single-precision float, and double-precision float instructions. The VPU supports swizzling the register inputs with swizzle unit 3520, numeric conversion with numeric convert units 3522A-B, and replication with replication unit 3524 on the memory input. Write mask registers 3526 allow predicating resulting vector writes.

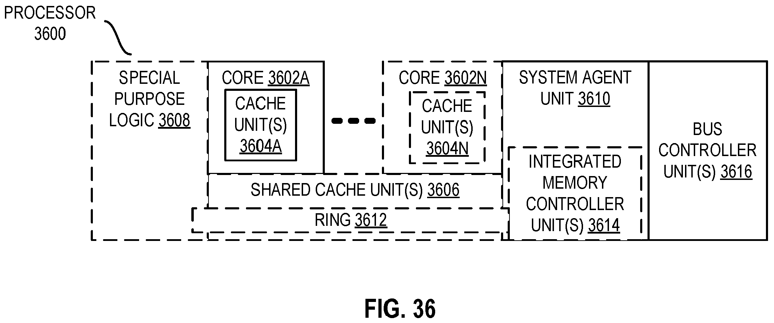

**Figure 36** is a block diagram of a processor 3600 that may have more than one core, may have an integrated memory controller, and may have integrated graphics according to embodiments of the disclosure. The solid lined boxes in **Figure 36** illustrate a processor 3600 with a single core 3602A, a system agent 3610, a set of one or more bus controller units 3616, while the optional addition of the dashed lined boxes illustrates an alternative processor 3600 with multiple cores 3602A-N, a set of one or more integrated memory controller unit(s) 3614 in the system agent unit 3610, and special purpose logic 3608.

Thus, different implementations of the processor 3600 may include: 1) a CPU with the special purpose logic 3608 being integrated graphics and/or scientific (throughput) logic (which may include one or more cores), and the cores 3602A-N being one or more general purpose cores (e.g., general purpose in-order cores, general purpose out-of-order cores, a combination of the two); 2) a coprocessor with the cores 3602A-N being a large number of special purpose cores intended primarily for graphics and/or scientific (throughput); and 3) a coprocessor with the cores 3602A-N being a large number of general purpose in-order cores. Thus, the processor 3600 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 3600 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 3606, and external memory (not shown) coupled to the set of integrated memory controller units 3614. The set of shared cache units 3606 may include one or more mid-level caches, such as level 2 (L2), level 3 (L3), level 4 (L4), or other levels of cache, a last level cache (LLC), and/or combinations thereof. While in one embodiment a ring based interconnect unit 3612 interconnects the integrated graphics logic 3608, the set of shared cache units 3606, and the system agent unit 3610/integrated memory controller unit(s) 3614, alternative embodiments may use any number of well-known techniques for interconnecting such units. In one embodiment, coherency is maintained between one or more cache units 3606 and cores 3602-A-N.

In some embodiments, one or more of the cores 3602A-N are capable of multithreading. The system agent 3610 includes those components coordinating and operating cores 3602A-N. The system agent unit 3610 may include for example a power control unit (PCU) and a display unit. The PCU may be or include logic and components needed for regulating the power state of the cores 3602A-N and the integrated graphics logic 3608. The display unit is for driving one or more externally connected displays.

The cores 3602A-N may be homogenous or heterogeneous in terms of architecture instruction set; that is, two or more of the cores 3602A-N may be capable of execution the same instruction set, while others may be capable of executing only a subset of that instruction set or a different instruction set.

**Exemplary Computer Architectures**

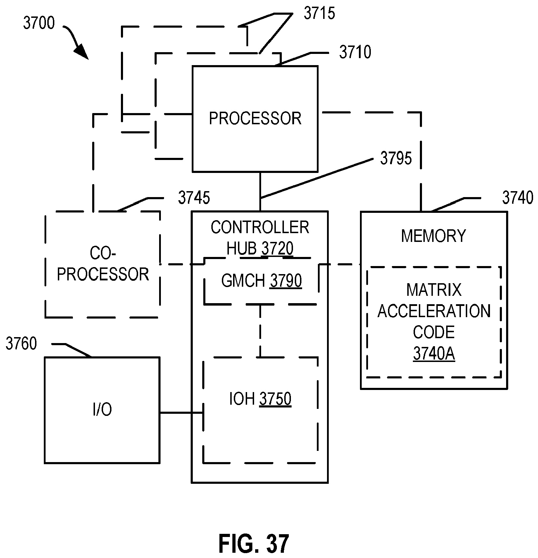

**Figures 37-40** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 37,** shown is a block diagram of a system 3700 in accordance with one embodiment of the present disclosure. The system 3700 may include one or more processors 3710, 3715, which are coupled to a controller hub 3720. In one embodiment the controller hub 3720 includes a graphics memory controller hub (GMCH) 3790 and an Input/Output Hub (IOH) 3750 (which may be on separate chips); the GMCH 3790 includes memory and graphics controllers to which are coupled memory 3740 and a coprocessor 3745; the IOH 3750 is couples input/output (I/O) devices 3760 to the GMCH 3790. Alternatively, one or both of the memory and graphics controllers are integrated within the processor (as described herein), the memory 3740 and the coprocessor 3745 are coupled directly to the processor 3710, and the controller hub 3720 in a single chip with the IOH 3750. Memory 3740 may include matrix acceleration code 3740A, for example, that stores code that when executed causes a processor to perform any method of this disclosure.

The optional nature of additional processors 3715 is denoted in Figure 37 with broken lines. Each processor 3710, 3715 may include one or more of the processing cores described herein and may be some version of the processor 3600.

The memory 3740 may be, for example, dynamic random access memory (DRAM), phase change memory (PCM), or a combination of the two. For at least one embodiment, the controller hub 3720 communicates with the processor(s) 3710, 3715 via a multi-drop bus, such as a frontside bus (FSB), point-to-point interface such as Quickpath Interconnect (QPI), or similar connection 3795.

In one embodiment, the coprocessor 3745 is a special-purpose processor, such as, for example, a high-throughput MIC processor, a network or communication processor, compression engine, graphics processor, GPGPU, embedded processor, or the like. In one embodiment, controller hub 3720 may include an integrated graphics accelerator.

There can be a variety of differences between the physical resources 3710, 3715 in terms of a spectrum of metrics of merit including architectural, microarchitectural, thermal, power consumption characteristics, and the like.

In one embodiment, the processor 3710 executes instructions that control data processing operations of a general type. Embedded within the instructions may be coprocessor instructions. The processor 3710 recognizes these coprocessor instructions as being of a type that should be executed by the attached coprocessor 3745. Accordingly, the processor 3710 issues these coprocessor instructions (or control signals representing coprocessor instructions) on a coprocessor bus or other interconnect, to coprocessor 3745. Coprocessor(s) 3745 accept and execute the received coprocessor instructions.

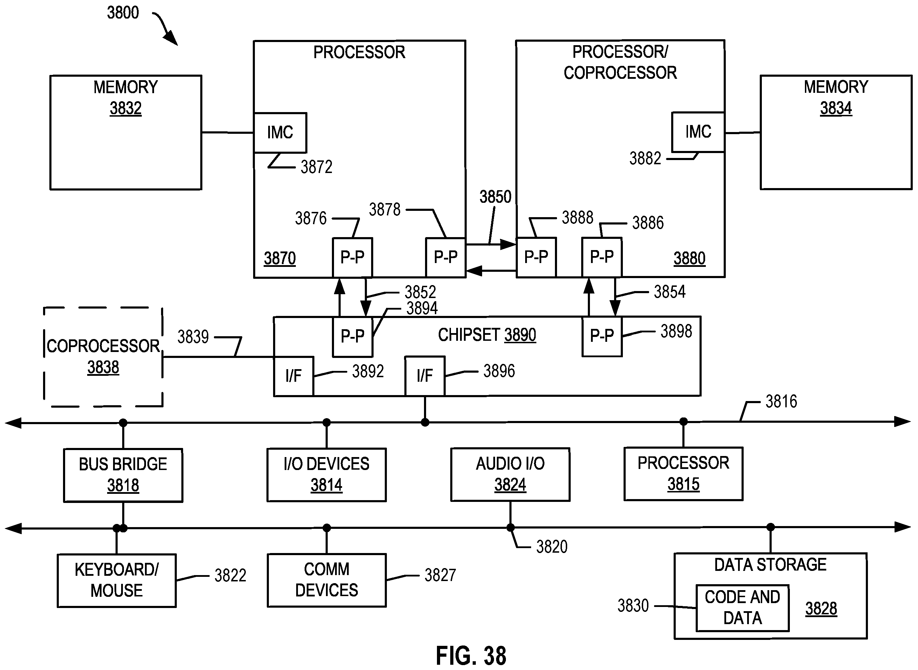

Referring now to **Figure 38,** shown is a block diagram of a first more specific exemplary system 3800 in accordance with an embodiment of the present disclosure. As shown in **Figure 38,** multiprocessor system 3800 is a point-to-point interconnect system, and includes a first processor 3870 and a second processor 3880 coupled via a point-to-point interconnect 3850. Each of processors 3870 and 3880 may be some version of the processor 3600. In one embodiment of the disclosure, processors 3870 and 3880 are respectively processors 3710 and 3715, while coprocessor 3838 is coprocessor 3745. In another embodiment, processors 3870 and 3880 are respectively processor 3710 coprocessor 3745.

Processors 3870 and 3880 are shown including integrated memory controller (IMC) units 3872 and 3882, respectively. Processor 3870 also includes as part of its bus controller units point-to-point (P-P) interfaces 3876 and 3878; similarly, second processor 3880 includes P-P interfaces 3886 and 3888. Processors 3870, 3880 may exchange information via a point-to-point (P-P) interface 3850 using P-P interface circuits 3878, 3888. As shown in **Figure 38,** IMCs 3872 and 3882 couple the processors to respective memories, namely a memory 3832 and a memory 3834, which may be portions of main memory locally attached to the respective processors.

Processors 3870, 3880 may each exchange information with a chipset 3890 via individual P-P interfaces 3852, 3854 using point to point interface circuits 3876, 3894, 3886, 3898. Chipset 3890 may optionally exchange information with the coprocessor 3838 via a high-performance interface 3839. In one embodiment, the coprocessor 3838 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 3890 may be coupled to a first bus 3816 via an interface 3896. In one embodiment, first bus 3816 may be a Peripheral Component Interconnect (PCI) bus, or a bus such as a PCI Express bus or another third generation I/O interconnect bus, although the scope of the present disclosure is not so limited.

As shown in **Figure 38,** various I/O devices 3814 may be coupled to first bus 3816, along with a bus bridge 3818 which couples first bus 3816 to a second bus 3820. In one embodiment, one or more additional processor(s) 3815, such as coprocessors, high-throughput MIC processors, GPGPU's, accelerators (such as, e.g., graphics accelerators or digital signal processing (DSP) units), field programmable gate arrays, or any other processor, are coupled to first bus 3816. In one embodiment, second bus 3820 may be a low pin count (LPC) bus. Various devices may be coupled to a second bus 3820 including, for example, a keyboard and/or mouse 3822, communication devices 3827 and a storage unit 3828 such as a disk drive or other mass storage device which may include instructions/code and data 3830, in one embodiment. Further, an audio I/O 3824 may be coupled to the second bus 3820. Note that other architectures are possible. For example, instead of the point-to-point architecture of **Figure 38,** a system may implement a multi-drop bus or other such architecture.

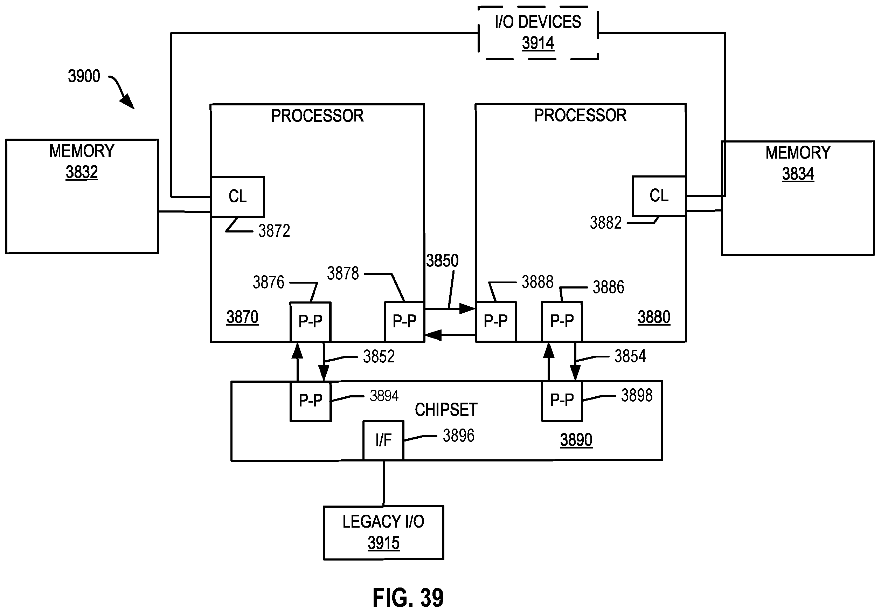

Referring now to **Figure 39,** shown is a block diagram of a second more specific exemplary system 3900 in accordance with an embodiment of the present disclosure. Like elements in **Figures 38 and 39** bear like reference numerals, and certain aspects of **Figure 38** have been omitted from **Figure 39** in order to avoid obscuring other aspects of **Figure 39.**

**Figure 39** illustrates that the processors 3870, 3880 may include integrated memory and I/O control logic ("CL") 3872 and 3882, respectively. Thus, the CL 3872, 3882 include integrated memory controller units and include I/O control logic. **Figure 39** illustrates that not only are the memories 3832, 3834 coupled to the CL 3872, 3882, but also that I/O devices 3914 are also coupled to the control logic 3872, 3882. Legacy I/O devices 3915 are coupled to the chipset 3890.

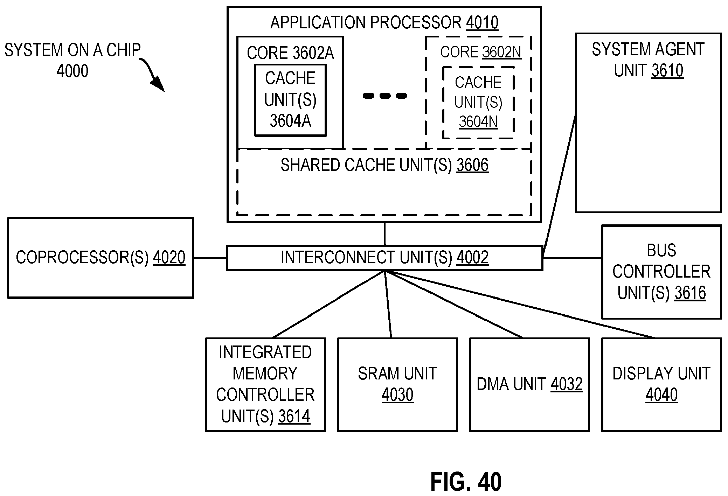

Referring now to **Figure 40,** shown is a block diagram of a SoC 4000 in accordance with an embodiment of the present disclosure. Similar elements in **Figure 36** bear like reference numerals. Also, dashed lined boxes are optional features on more advanced SoCs. In **Figure 40,** an interconnect unit(s) 4002 is coupled to: an application processor 4010 which includes a set of one or more cores 3602A-N and shared cache unit(s) 3606; a system agent unit 3610; a bus controller unit(s) 3616; an integrated memory controller unit(s) 3614; a set or one or more coprocessors 4020 which may include integrated graphics logic, an image processor, an audio processor, and a video processor; an static random access memory (SRAM) unit 4030; a direct memory access (DMA) unit 4032; and a display unit 4040 for coupling to one or more external displays. In one embodiment, the coprocessor(s) 4020 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 3830 illustrated in **Figure 38,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

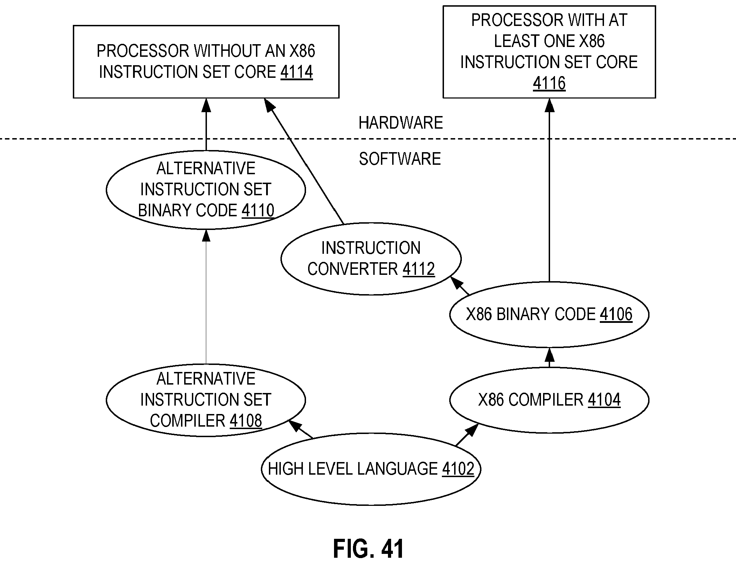

**Figure 41** is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. **Figure 41** shows a program in a high level language 4102 may be compiled using an x86 compiler 4104 to generate x86 binary code 4106 that may be natively executed by a processor with at least one x86 instruction set core 4116. The processor with at least one x86 instruction set core 4116 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 4104 represents a compiler that is operable to generate x86 binary code 4106 (e.g., object code) that can, with or without additional linkage processing, be executed on the processor with at least one x86 instruction set core 4116. Similarly, **Figure 41** shows the program in the high level language 4102 may be compiled using an alternative instruction set compiler 4108 to generate alternative instruction set binary code 4110 that may be natively executed by a processor without at least one x86 instruction set core 4114 (e.g., a processor with cores that execute the MIPS instruction set of MIPS Technologies of Sunnyvale, CA and/or that execute the ARM instruction set of ARM Holdings of Sunnyvale, CA). The instruction converter 4112 is used to convert the x86 binary code 4106 into code that may be natively executed by the processor without an x86 instruction set core 4114. This converted code is not likely to be the same as the alternative instruction set binary code 4110 because an instruction converter capable of this is difficult to make; however, the converted code will accomplish the general operation and be made up of instructions from the alternative instruction set. Thus, the instruction converter 4112 represents software, firmware, hardware, or a combination thereof that, through emulation, simulation or any other process, allows a processor or other electronic device that does not have an x86 instruction set processor or core to execute the x86 binary code 4106.

**Claims**

1. An apparatus comprising:

   a matrix operations accelerator circuit comprising:

   a two-dimensional grid of processing elements,
   a plurality of registers that represents a two-dimensional matrix coupled to the two-dimensional grid of processing elements, and
   a coupling to a cache; and

   a hardware processor core comprising:

   a vector register,
   a decoder to decode a single instruction into a decoded single instruction, the single instruction including a first field that identifies the two-dimensional matrix, a second field that identifies a set of elements of the two-dimensional matrix, and a third field that identifies the vector register, and
   an execution circuit to execute the decoded single instruction to cause a store of the set of elements from the plurality of registers that represents the two-dimensional matrix into the vector register by a coupling of the hardware processor core to the matrix operations accelerator circuit that is separate from the coupling to the cache.

2. The apparatus of claim 1, wherein the set of elements of the two-dimensional matrix is a proper subset of elements of the two-dimensional matrix, and the second field is an immediate of the single instruction that identifies the proper subset of elements of the two-dimensional matrix.

3. The apparatus of claim 1, wherein the set of elements are a single row or a single column of the two-dimensional matrix identified by the second field, and the second field is a register of the hardware processor core.

4. The apparatus of any one of claims 1-3, wherein the execution circuit is to generate a fault indication when a requested row or a requested column exceeds a number of rows or a number of columns of the two-dimensional matrix, respectively.

5. The apparatus of any one of claims 1-4, wherein the execution circuit is to generate a fault indication when a number of elements in a requested row or a requested column of the two-dimensional matrix is less than a number of elements of the vector register.

6. The apparatus of claim 1, wherein the single instruction comprises a fourth field that identifies an offset into a requested row or a requested column of the two-dimensional matrix to source the set of elements from the plurality of registers.

7. The apparatus of any one of claims 1-6, further comprising conversion circuitry coupled to the coupling of the hardware processor core to the matrix operations accelerator circuit, and the execution circuit of the hardware processor core is to execute the decoded single instruction to convert the set of elements from the plurality of registers that represents the two-dimensional matrix from a first number format to a second different number format, and cause the store of the set of elements in the second different number format into the vector register.

8. The apparatus of claim 1, wherein the vector register comprises a plurality of vector registers, the set of elements are all elements of the two-dimensional matrix, and the execution circuit is to execute the decoded single instruction to store the all elements from the plurality of registers that represents the two-dimensional matrix into the plurality of vector registers.

9. A method comprising:

generating an output, from a two-dimensional grid of processing elements of a matrix operations accelerator circuit comprising a coupling to a cache, into a plurality of registers of the matrix operations accelerator circuit that represents a two-dimensional matrix;
decoding, with a decoder of a hardware processor core, a single instruction into a decoded single instruction, the single instruction including a first field that identifies the two-dimensional matrix, a second field that identifies a set of elements of the two-dimensional matrix, and a third field that identifies a vector register of the hardware processor core; and
executing the decoded single instruction with an execution circuit of the hardware processor core to cause a store of the set of elements from the plurality of registers that represents the two-dimensional matrix into the vector register by a coupling of the hardware processor core to the matrix operations accelerator circuit that is separate from the coupling to the cache.

10. The method of claim 9, wherein the set of elements of the two-dimensional matrix is a proper subset of elements of the two-dimensional matrix, and the second field is an immediate of the single instruction that identifies the proper subset of elements of the two-dimensional matrix.

11. The method of claim 9, wherein the set of elements are a single row or a single column of the two-dimensional matrix identified by the second field, and the second field is a register of the hardware processor core.

12. The method of any one of claims 9-11, further comprising generating, by the execution circuit, a fault indication when a requested row or a requested column exceeds a number of rows or a number of columns of the two-dimensional matrix, respectively.

13. The method of any one of claims 9-12, generating, by the execution circuit, a fault indication when a number of elements in a requested row or a requested column of the two-dimensional matrix is less than a number of elements of the vector register.

14. The method of claim 9, wherein the single instruction comprises a fourth field that identifies an offset into a requested row or a requested column of the two-dimensional matrix to source the set of elements from the plurality of registers.

15. The method of any one of claims 9-14, wherein the executing further comprises converting the set of elements from the plurality of registers that represents the two-dimensional matrix from a first number format to a second different number format with conversion circuitry coupled to the coupling of the hardware processor core to the matrix operations accelerator circuit, and cause the store of the set of elements in the second different number format into the vector register.

Tile t0
K=8, N=32,
Size = 4B, pair=no
104

Tile t1
K=8, N=32,
Size = 4B, pair=no
106

Tile t2
K=8, N=16,
Size = 8B, pair=no
108

Tile t3
K=8, N=16,
Size = 8B, pair=no
110

Load /
Store

| t0 | t1 | t2 | t3 |

Application Memory 102

**FIG. 1A**

Tile t4L
K=8, N=32,
Size = 4B, pair=yes
124

Tile t4R
K=8, N=32,
Size = 4B, pair=yes
126

Tile t5L
K=8, N=16,
Size = 8B, pair=yes
128

Tile t5R
K=8, N=16,
Size = 8B, pair=yes
130

Load /
Store

| t4L | t4R | t5L | t5R |

Application Memory 122

**FIG. 1B**

MEMORY
ADDRESS          MEMORY

(A)

| | | | |
|---|---|---|---|
| A | B | C | D |
| E | F | G | H |
| I | J | K | L |

0
N+1
N+2

} TILE

REGISTERS

(B)

| | | | |
|---|---|---|---|
| A | B | C | D |
| E | F | G | H |
| I | J | K | L |

REG 0
REG 1
REG 2

} TILE

FMA
STORAGE

(C)

| | | | |
|---|---|---|---|
| A | B | C | D |
| E | F | G | H |
| I | J | K | L |

} TILE

**FIG. 2**

EP 3 929 736 A1

**FIG. 3**

MATRIX OPERATIONS ACCELERATOR 307

FMA GRID 309

T1 (B)

C += A X B

A & C

B

C

DATA BUFFERS 305

T0 (A)

T1 (B)

T2 (C)

TILE MANIPULATION OPERATIONS

TILE LOAD/STORE

LOAD TILE DATA

STORE TILE DATA

COMMANDS 311

HOST PROCESSOR/ PROCESSINGING SYSTEM 301

COHERENT MEMORY INTERFACE 303

MEMORY
403

PROCESSOR
401

MATRIX
OPERATIONS
CIRCUITRY
405

FIG. 4

MATRIX
OPERATIONS
CIRCUITRY
505

PROCESSOR
501

TILE
MEMORY
507

HOST
MEMORY
503

FIG. 5

**FIG. 6**

EP 3 929 736 A1

SIGNED
SOURCE 1
ELEMENTS
701

| 3 | 2 |
|---|---|
| 3 | 2 |

| 3 | 2 |
|---|---|
| 0 | -1 |

SIGNED
SOURCE 2
ELEMENTS
703

MULTIPLIER
705

MULTIPLIER
707

INIT/
PREVIOUS
RESULT
709

| 1 |
|---|

ADDER
711

ADDER
713

ITERATION
RESULT
715

| -1 |
|---|

FIG. 7

FIG. 8

FIG. 9

FIG. 10

ACCUMULATOR 2X INPUT SIZES 1101

| SOURCES | BITS | ACCUMULATOR | BITS |
|---------|------|-------------|------|
| BYTE | 8 | WORD/HPFP | 16 |
| WORD | 16 | INT32/SPFP | 32 |
| SPFP/INT32 | 32 | INT64/DPFP | 64 |

ACCUMULATOR 4X INPUT SIZES 1103

| SOURCES | BITS | ACCUMULATOR | BITS |
|---------|------|-------------|------|
| BYTE | 8 | INT32/SPFP | 32 |
| WORD | 16 | INT64/DPFP | 64 |

ACCUMULATOR 8X INPUT SIZES 1105

| SOURCES | BITS | ACCUMULATOR | BITS |
|---------|------|-------------|------|
| BYTE | 8 | INT64/DPFP | 64 |

FIG. 11

CORE 0
1201

CORE 1
1203

MAT. OP.
SUPPORT
1251

MATRIX
OPERATIONS
CIRCUITRY
1211

RING
1245

MEMORY
CONTROLLER 1
1223

MEMORY
CONTROLLER N
1225

MEMORY
1233

MATRIX
OPERATIONS
CIRCUITRY
1213

CORE N
1207

CORE 2
1205

MEMORY
1231

**FIG. 12**

Core
1390

INSTRUCTION STORAGE 1301

BRANCH/DECODE CIRCUITRY 1303

MICROCODE 1305

ALLOCATE/RENAME 1307

SCHEDULER CIRCUITRY 1309

PHYSICAL REGISTER FILES 1315

RETIREMENT CIRCUIT 1317

EXECUTION CIRCUITRY 1311

MATRIX OPERATIONS CIRCUITRY 1327

SCALAR CIRCUITRY 1321

VECTOR/SIMD CIRCUITRY 1323

MEMORY ACCESS CIRCUITRY 1325

CACHE 1313

FIG. 13

FIG. 14

EP 3 929 736 A1

$$A = \begin{bmatrix} A_{11} & A_{12} & A_{13} \\ A_{21} & A_{22} & A_{23} \end{bmatrix}$$

| ADDR | VALUE |
|------|-------|
| 0 | $A_{11}$ |
| 1 | $A_{12}$ |
| 2 | $A_{13}$ |
| 3 | $A_{21}$ |
| 4 | $A_{22}$ |
| 5 | $A_{23}$ |

ROW MAJOR

| ADDR | VALUE |
|------|-------|
| 0 | $A_{11}$ |
| 1 | $A_{21}$ |
| 2 | $A_{12}$ |
| 3 | $A_{22}$ |
| 4 | $A_{13}$ |
| 5 | $A_{23}$ |

COLUMN MAJOR

FIG. 15

C
1601

A
1603

B
1605

```
TILECONFIG [RAX]
// ASSUME SOME OUTER LOOPS DRIVING THE CACHE TILING (NOT SHOWN)
{
TILELOAD TMM0, RSI+RDI // SRCDST, RSI POINTS TO C, RDI HAS
TILELOAD TMM1, RSI+RDI+N // SECOND TILE OF C, UNROLLING IN SIMD DIMENSION N
MOV KK, 0
LOOP:
TILELOAD TMM2, R8+R9 // SRC2 IS STRIDED LOAD OF A, REUSED FOR 2 TMMA INSTR.
TILELOAD TMM3, R10+R11 // SRC1 IS STRIDED LOAD OF B
TMMAPS TMM0, TMM2, TMM3 // UPDATE LEFT TILE OF C
TILELOAD TMM3, R10+R11+N // SRC1 LOADED WITH B FROM NEXT RIGHTMOST TILE
TMMAPS TMM1, TMM2, TMM3 // UPDATE RIGHT TILE OF C
ADD R8, K // UPDATE POINTERS BY CONSTANTS KNOWN OUTSIDE OF LOOP
ADD R10, K*R11
ADD KK, K
CMP KK, LIMIT
JNE LOOP
TILESTORE RSI+RDI, TMM0 // UPDATE THE C MATRIX IN MEMORY
TILESTORE RSI+RDI+M, TMM1
} // END OF OUTER LOOP
TILERELEASE // RETURN TILES TO INIT STATE
```

FIG. 16

CONFIGURE USAGE OF MATRICES (TILES) 1701

LOAD AT LEAST ONE MATRIX (TILE) FROM MEMORY 1703

PERFORM AT LEAST ONE MATRIX (TILE) OPERATION 1705

STORE AT LEAST ONE MATRIX (TILE) TO MEMORY 1707

CONTEXT SWITCH 1709

FIG. 17

MEMORY 1801

TILE DESCRIPTION 1803

PROCESSOR/CORE 1805

INSTRUCTION
EXECUTION
RESOURCES
1811

TILE
CONFIGURATIONS 1817

PALETTE
TABLE 1813

REGISTER(S)
1819

DATA

**FIG. 18**

| PALETTE ID 1901 | STARTM 1903 |
|:---:|:---:|
| STARTP 1905 | PAIR INDICATORS 1907 |
| 0 | 0 |
| 0 | 0 |

. . .

| 0 | 0 |
|:---:|:---:|
| TMM0 ROWS 1913 | TMM0 COLUMNS 1915 |
| TMM1 ROWS | TMM1 COLUMNS |
| ▪ ▪ ▪ | |
| TMM15 ROWS | TMM15 COLUMNS |
| 0 | |

# FIG. 19

REGISTERS 1819

| TMM0 CONFIG 2001 | STARTP 2011 | |
| . . . | | STATUS 2015 |
| TMMN CONFIG 2003 | STARTROW 2013 | |

**FIG. 20(A)**

REGISTERS 1819

| TMM0 ROW CONFIG 2021 | TMM0 COL. CONFIG 2023 | STARTP 2011 | STATUS 2015 |
| . . . | . . . | | |
| TMMN ROW CONFIG | TMMN COL. CONFIG | STARTROW 2013 | |

**FIG. 20(B)**

REGISTERS 1819

| TMM CONFIGS 2031 | STARTP 2011 | STARTROW 2013 | STATUS 2015 |

**FIG. 20(C)**

REGISTERS 1819

| TMM CONFIGS 2031 | | |
| STARTP 2011 | STARTROW 2013 | STATUS 2015 |

**FIG. 20(D)**

FIG. 21

**FIG. 22**

HARDWARE
PROCESSOR
2300

MATRIX OPERATIONS
ACCELERATOR 2207

DATA BUFFERS
(E.G., REGISTERS)
2205

T0 (A)

T1 (B)

T2 (C)

STORAGE 2302

TILE TO VECTOR REGISTER
INSTRUCTION(S) /
VECTOR REGISTER TO TILE
INSTRUCTION(S)
2304

DATA
SELECTION
FIELD(S)
2306

DECODER
2308

DECODED
INST.

REG.
RENAME /
REG.
ALLOC. /
SCHED
2310

EXECUTION
CIRCUIT 2314

WRITE
BACK 2316

REGISTERS / MEMORY
2312

VECTOR REGISTER(S) 2219

**FIG. 23**

EP 3 929 736 A1

2400

FETCH AN INSTRUCTION HAVING A FIRST FIELD THAT IDENTIFIES A PLURALITY OF REGISTERS THAT REPRESENTS A TWO-DIMENSIONAL MATRIX OF A MATRIX OPERATIONS ACCELERATOR CIRCUIT, A SECOND FIELD THAT IDENTIFIES A SET OF ELEMENTS OF THE TWO-DIMENSIONAL MATRIX, AND A THIRD FIELD THAT IDENTIFIES A VECTOR REGISTER OF A PROCESSOR 2402

DECODE THE INSTRUCTION INTO A DECODED INSTRUCTION 2404

RETRIEVE DATA ASSOCIATED WITH THE FIRST FIELD (E.G., AND THE SECOND FIELD) 2406

SCHEDULE THE DECODED INSTRUCTION FOR EXECUTION 2408

EXECUTE THE DECODED INSTRUCTION TO CAUSE A STORE OF THE SET OF ELEMENTS FROM THE PLURALITY OF REGISTERS THAT REPRESENTS THE TWO-DIMENSIONAL MATRIX INTO THE VECTOR REGISTER BY A COUPLING OF THE PROCESSOR TO THE MATRIX OPERATIONS ACCELERATOR CIRCUIT THAT IS SEPARATE FROM A COUPLING TO A MEMORY (E.G., CACHE) 2410

COMMIT A RESULT OF THE EXECUTED INSTRUCTION 2412

**FIG. 24**

Instruction 2501

| Opcode<br>TILEMOVROWE<br><br>2502 | Destination<br>Location<br><br>2504 | Second<br>Destination<br>Location<br>2506 | Source<br>Location<br><br>2508 | Subset of<br>Source<br><br>2510 |
|---|---|---|---|---|

2500

SOURCE (E.G., OUTPUT C) TILE (16 x 32) 2205

|  | col0 | col1 | col2 | col13 | col14 | col15 | col16 | col29 | col30 | col31 |
|---|---|---|---|---|---|---|---|---|---|---|
| row0 | 0.0 | 0.1 | 0.2 | 0.13 | 0.14 | 0.15 | 0.16 | 0.29 | 0.30 | 0.31 |
| row1 | 1.0 | 1.1 | 1.2 | 1.13 | 1.14 | 1.15 | 1.16 | 1.29 | 1.30 | 1.31 |
| row2 | 2.0 | 2.1 | 2.2 | 2.13 | 2.14 | 2.15 | 2.16 | 2.29 | 2.30 | 2.31 |
| row3 | 3.0 | 3.1 | 3.2 | 3.13 | 3.14 | 3.15 | 3.16 | 3.29 | 3.30 | 3.31 |
| row12 | 12.0 | 12.1 | 12.2 | 12.13 | 12.14 | 12.15 | 12.16 | 12.29 | 12.30 | 12.31 |
| row13 | 13.0 | 13.1 | 13.2 | 13.13 | 13.14 | 13.15 | 13.16 | 13.29 | 13.30 | 13.31 |
| row14 | 14.0 | 14.1 | 14.2 | 14.13 | 14.14 | 14.15 | 14.16 | 14.29 | 14.30 | 14.31 |
| row15 | 15.0 | 15.1 | 15.2 | 15.13 | 15.14 | 15.15 | 15.16 | 15.29 | 15.30 | 15.31 |

Execution
Circuit
2314

DESTINATION VECTOR REGISTER 2219

| 0.0 | 0.1 | 0.2 | 0.3 | 0.4 | 0.5 | 0.6 | 0.7 | 0.8 | 0.9 | 0.10 | 0.11 | 0.12 | 0.13 | ... | 0.31 |
|---|---|---|---|---|---|---|---|---|---|---|---|---|---|---|---|

FIG. 25

Instruction 2601

| Opcode TILEMOVALLE | Destination Location | Last Destination Location | Source Location |
|---|---|---|---|
| 2602 | 2604 | 2606 | 2608 |

SOURCE (E.G., OUTPUT C) TILE (16 x 32) 2205

|  | col0 | col1 | col2 | col13 | col14 | col15 | col16 | col29 | col30 | col31 |
|---|---|---|---|---|---|---|---|---|---|---|
| row0 | 0.0 | 0.1 | 0.2 | 0.13 | 0.14 | 0.15 | 0.16 | 0.29 | 0.30 | 0.31 |
| row1 | 1.0 | 1.1 | 1.2 | 1.13 | 1.14 | 1.15 | 1.16 | 1.29 | 1.30 | 1.31 |
| row2 | 2.0 | 2.1 | 2.2 | 2.13 | 2.14 | 2.15 | 2.16 | 2.29 | 2.30 | 2.31 |
| row3 | 3.0 | 3.1 | 3.2 | 3.13 | 3.14 | 3.15 | 3.16 | 3.29 | 3.30 | 3.31 |
| row12 | 12.0 | 12.1 | 12.2 | 12.13 | 12.14 | 12.15 | 12.16 | 12.29 | 12.30 | 12.31 |
| row13 | 13.0 | 13.1 | 13.2 | 13.13 | 13.14 | 13.15 | 13.16 | 13.29 | 13.30 | 13.31 |
| row14 | 14.0 | 14.1 | 14.2 | 14.13 | 14.14 | 14.15 | 14.16 | 14.29 | 14.30 | 14.31 |
| row15 | 15.0 | 15.1 | 15.2 | 15.13 | 15.14 | 15.15 | 15.16 | 15.29 | 15.30 | 15.31 |

Execution Circuit 2314

| 0.0 | 0.1 | 0.2 | 0.3 | 0.4 | 0.5 | 0.6 | 0.7 | 0.8 | 0.9 | 0.10 | 0.11 | 0.12 | 0.13 | ... | 0.31 |
|---|---|---|---|---|---|---|---|---|---|---|---|---|---|---|---|
| 1.0 | 1.1 | 1.2 | 1.3 | 1.4 | 1.5 | 1.6 | 1.7 | 1.8 | 1.9 | 1.10 | 1.11 | 1.12 | 1.13 | ... | 1.31 |
| . | . | . |  |  |  |  |  |  |  |  |  |  |  |  |  |
| . | . | . |  |  |  |  |  |  |  |  |  |  |  |  |  |
| 15.0 | 15.1 | 15.2 | 15.3 | 15.4 | 15.5 | 15.6 | 15.7 | 15.8 | 15.9 | 15.10 | 15.11 | 15.12 | 15.13 | ... | 15.31 |

DESTINATION VECTOR REGISTER 2219A
DESTINATION VECTOR REGISTER 2219B
DESTINATION VECTOR REGISTER 2219P

2600

FIG. 26

**FIG. 27**

FIG. 28

2900 ⬎

FETCH AN INSTRUCTION HAVING A FIRST FIELD THAT IDENTIFIES A PLURALITY OF REGISTERS THAT REPRESENTS A TWO-DIMENSIONAL MATRIX OF A MATRIX OPERATIONS ACCELERATOR CIRCUIT, A SECOND FIELD THAT IDENTIFIES A SET OF ELEMENTS OF THE TWO-DIMENSIONAL MATRIX, AND A THIRD FIELD THAT IDENTIFIES A VECTOR REGISTER OF THE PROCESSOR 2902

↓

DECODE THE INSTRUCTION INTO A DECODED INSTRUCTION 2904

↓

RETRIEVE DATA ASSOCIATED WITH THE THIRD FIELD 2906

↓

SCHEDULE THE DECODED INSTRUCTION FOR EXECUTION 2908

↓

EXECUTE THE DECODED INSTRUCTION TO CAUSE A STORE OF ELEMENTS FROM THE VECTOR REGISTER INTO CORRESPONDING ELEMENTS OF THE PLURALITY OF REGISTERS THAT REPRESENTS THE SET OF ELEMENTS OF THE TWO-DIMENSIONAL MATRIX BY A COUPLING OF THE PROCESSOR TO THE MATRIX OPERATIONS ACCELERATOR CIRCUIT THAT IS SEPARATE FROM A COUPLING TO A MEMORY (E.G., CACHE) 2910

↓

COMMIT A RESULT OF THE EXECUTED INSTRUCTION 2912

FIG. 29

3000

Instruction 3001

| Opcode TILE16MOV 3002 | Destination Location 3004 | Source Location 3006 | Last Source Location 3008 | Subset of Destination 3010 |
|---|---|---|---|---|

DESTINATION (E.G., INPUT A OR B) TILE (16 x 32) 2205

Execution Circuitry 2314

|  | col0 | col1 | col2 | col13 | col14 | col15 | col16 | col29 | col30 | col31 |
|---|---|---|---|---|---|---|---|---|---|---|
| row0 | 0.0 | 0.1 | 0.2 | 0.13 | 0.14 | 0.15 | 0.16 | 0.29 | 0.30 | 0.31 |
| row1 | 1.0 | 1.1 | 1.2 | 1.13 | 1.14 | 1.15 | 1.16 | 1.29 | 1.30 | 1.31 |
| row2 | 2.0 | 2.1 | 2.2 | 2.13 | 2.14 | 2.15 | 2.16 | 2.29 | 2.30 | 2.31 |
| row3 | 3.0 | 3.1 | 3.2 | 3.13 | 3.14 | 3.15 | 3.16 | 3.29 | 3.30 | 3.31 |
| row12 | 12.0 | 12.1 | 12.2 | 12.13 | 12.14 | 12.15 | 12.16 | 12.29 | 12.30 | 12.31 |
| row13 | 13.0 | 13.1 | 13.2 | 13.13 | 13.14 | 13.15 | 13.16 | 13.29 | 13.30 | 13.31 |
| row14 | 14.0 | 14.1 | 14.2 | 14.13 | 14.14 | 14.15 | 14.16 | 14.29 | 14.30 | 14.31 |
| row15 | 15.0 | 15.1 | 15.2 | 15.13 | 15.14 | 15.15 | 15.16 | 15.29 | 15.30 | 15.31 |

| 0.0 | 0.1 | 0.2 | 0.3 | 0.4 | 0.5 | 0.6 | 0.7 | 0.8 | 0.9 | 0.10 | 0.11 | 0.12 | 0.13 | ... | 0.31 | ← SOURCE VECTOR REGISTER 2219A |
|---|---|---|---|---|---|---|---|---|---|---|---|---|---|---|---|---|
| 1.0 | 1.1 | 1.2 | 1.3 | 1.4 | 1.5 | 1.6 | 1.7 | 1.8 | 1.9 | 1.10 | 1.11 | 1.12 | 1.13 | ... | 1.31 | ← SOURCE VECTOR REGISTER 2219B |
| . |  |  |  |  |  |  |  |  |  |  |  |  |  |  |  |  |
| . |  |  |  |  |  |  |  |  |  |  |  |  |  |  |  |  |
| . |  |  |  |  |  |  |  |  |  |  |  |  |  |  |  |  |
| 15.0 | 15.1 | 15.2 | 15.3 | 15.4 | 15.5 | 15.6 | 15.7 | 15.8 | 15.9 | 15.10 | 15.11 | 15.12 | 15.13 | ... | 15.31 | ← SOURCE VECTOR REGISTER 2219P |

**FIG. 30**

70

**FIG.31A**

GENERIC VECTOR FRIENDLY INSTRUCTION FORMAT 3100

FULL OPCODE FIELD 3174

| FORMAT FIELD 3140 | BASE OPERATION FIELD 3142 | REGISTER INDEX FIELD 3144 | MODIFIER FIELD 3146 | AUGMENTATION OPERATION FIELD 3150 | | | SCALE FIELD 3160 | DISP. F. 3162A / DISP. F. F. 3162B | DATA ELEMENT WIDTH FIELD 3164 | WRITE MASK FIELD 3170 | IMMEDIATE FIELD 3172 |
|---|---|---|---|---|---|---|---|---|---|---|---|
| | | | | CLASS FIELD 3168 | ALPHA FIELD 3152 | BETA FIELD 3154 | | | | | |

NO MEMORY ACCESS 3105

**NO MEMORY ACCESS, FULL ROUND CNTRL TYPE OP. 3110**

RS FIELD 3152A

| FORMAT FIELD 3140 | BASE OPERATION FIELD 3142 | REGISTER INDEX FIELD 3144 | NO MEMORY ACCESS 3146A | CLASS A 3168A | ROUND 3152A.1 | ROUND CONTROL FIELD 3154A — SAE FIELD 3156 / ROUND OPERATION FIELD 3158 | DATA ELEMENT WIDTH FIELD 3164 | WRITE MASK FIELD 3170 | IMMEDIATE FIELD 3172 |
|---|---|---|---|---|---|---|---|---|---|

**NO MEMORY ACCESS, DT TYPE OPERATION 3115**

| FORMAT FIELD 3140 | BASE OPERATION FIELD 3142 | REGISTER INDEX FIELD 3144 | NO MEMORY ACCESS 3146A | CLASS A 3168A | DATA TRANSFORM 3152A.2 | DATA TRANSFORM FIELD 3154B | DATA ELEMENT WIDTH FIELD 3164 | WRITE MASK FIELD 3170 | IMMEDIATE FIELD 3172 |
|---|---|---|---|---|---|---|---|---|---|

MEMORY ACCESS 3120

**MEMORY ACCESS, TEMPORAL 3125**

EVICTION HINT (EH) FIELD 3152B

| FORMAT FIELD 3140 | BASE OPERATION FIELD 3142 | REGISTER INDEX FIELD 3144 | MEMORY ACCESS 3146B | CLASS A 3168A | TEMPORAL 3152B.1 | DATA MANIPULATION FIELD 3154C | SCALE FIELD 3160 | DISP. F. 3162A / DISP. F. F. 3162B | DATA ELEMENT WIDTH FIELD 3164 | WRITE MASK FIELD 3170 | IMMEDIATE FIELD 3172 |
|---|---|---|---|---|---|---|---|---|---|---|---|

**MEMORY ACCESS, NONTEMPORAL 3130**

| FORMAT FIELD 3140 | BASE OPERATION FIELD 3142 | REGISTER INDEX FIELD 3144 | MEMORY ACCESS 3146B | CLASS A 3168A | NON-TEMPORAL 3152B.2 | DATA MANIPULATION FIELD 3154C | SCALE FIELD 3160 | DISP. F. 3162A / DISP. F. F. 3162B | DATA ELEMENT WIDTH FIELD 3164 | WRITE MASK FIELD 3170 | IMMEDIATE FIELD 3172 |
|---|---|---|---|---|---|---|---|---|---|---|---|

EP 3 929 736 A1

FIG. 31B

FULL OPCODE FIELD 3174

| FORMAT FIELD 3140 | BASE OPERATION FIELD 3142 | REGISTER INDEX FIELD 3144 | MODIFIER FIELD 3146 | AUGMENTATION OPERATION FIELD 3150 | | | SCALE FIELD 3160 | DISP. F. 3162A / DISP. F. F. 3162B | DATA ELEMENT WIDTH FIELD 3164 | WRITE MASK FIELD 3170 | IMMEDIATE FIELD 3172 |
|---|---|---|---|---|---|---|---|---|---|---|---|
| | | | | CLASS FIELD 3168 | ALPHA FIELD 3152 | BETA FIELD 3154 | | | | | |

GENERIC VECTOR FRIENDLY INSTRUCTION FORMAT 3100

NO MEMORY ACCESS 3105

NO MEM. ACC., W.M.C., PART. RND. CNTRL. TYPE OP. 3112

RL FIELD 3157A

| FORMAT FIELD 3140 | BASE OPERATION FIELD 3142 | REGISTER INDEX FIELD 3144 | NO MEMORY ACCESS 3146A | CLASS B 3168B | WRITE MASK CONTROL FIELD 3152C | RND 3157A.1 | ROUND OPERATION FIELD 3159A | DATA ELEMENT WIDTH FIELD 3164 | WRITE MASK FIELD 3170 | IMMEDIATE FIELD 3172 |
|---|---|---|---|---|---|---|---|---|---|---|

NO MEM. ACC., W.M.C., VSIZE TYPE OP. 3117

| FORMAT FIELD 3140 | BASE OPERATION FIELD 3142 | REGISTER INDEX FIELD 3144 | NO MEMORY ACCESS 3146A | CLASS B 3168B | WRITE MASK CONTROL FIELD 3152C | VSIZE 3157A.2 | VECTOR LENGTH FIELD 3159B | DATA ELEMENT WIDTH FIELD 3164 | WRITE MASK FIELD 3170 | IMMEDIATE FIELD 3172 |
|---|---|---|---|---|---|---|---|---|---|---|

MEMORY ACCESS 3120

MEM. ACC, W.M.C., 3127

| FORMAT FIELD 3140 | BASE OPERATION FIELD 3142 | REGISTER INDEX FIELD 3144 | MEMORY ACCESS 3146B | CLASS B 3168B | WRITE MASK CONTROL FIELD 3152C | BROADCAST FIELD 3157B | VECTOR LENGTH FIELD 3159B | SCALE FIELD 3160 | DISP. F. 3162A / DISP. F. F. 3162B | DATA ELEMENT WIDTH FIELD 3164 | WRITE MASK FIELD 3170 | IMMEDIATE FIELD 3172 |
|---|---|---|---|---|---|---|---|---|---|---|---|---|

EP 3 929 736 A1

**FIG. 32A**

EVEX PREFIX 3202

DATA ELEMENT
WIDTH FIELD 3164

CLASS
FIELD 3168

REX' 3210

BETA FIELD
3154

REX' 3210

MOD R/M BYTE

| 7 | 65 | 32 | 0 |
|---|---|---|---|
| MOD 3242 | REG 3244 | R/M 3246 | |

SIB BYTE

| 7 | 65 | 32 | 0 |
|---|---|---|---|
| SS 3252 | XXX 3254 | BBB 3256 | |

DISPLACEMENT FIELD 3162A
(DISP32 WHEN MOD=10)

| 0x62 | R | X | B | R' | M | M | M | M | W | V | V | V | V | U | P | P | α | β | β | β | V' | K | K | K | Y | Y | Y | Y | Y | Y | Y | Y | MOD R/M | SIB | D | D | D | D | IMM8 |

FORMAT
FIELD 3140

REX
3205

OPCODE
MAP
3215

VVVV FIELD 3220

PREFIX
ENCODING
FIELD 3225

ALPHA FIELD
3152

WRITE MASK
FIELD
3170

REAL OPCODE FIELD
3230

3240    3250

3172

DISPLACEMENT FACTOR FIELD 3162B (DISP8*N
WHEN MOD=01). REFERRED TO AS DISP8*N, BUT
HOLDS ONLY THE DISPLACEMENT FACTOR
WHICH IS MULTIPLIED BY N

SPECIFIC VECTOR FRIENDLY INSTRUCTION FORMAT 3200

**FIG. 32B**

FULL OPCODE FIELD 3174

OPCODE MAP 3215

FORMAT
FIELD 3140

DATA ELEMENT
WIDTH FIELD 3164

| 0x62 | P | P | M | M | M | M | W | Y | Y | Y | Y | Y | Y | Y | Y |

PREFIX
ENCODING
FIELD 3225

BASE OPERATION FIELD
3142

REAL OPCODE FIELD 3230

**FIG. 32C**

REGISTER INDEX FIELD 3144

| R | X | B | R' | V' | REG | R/M | V | V | V | V | XXX | BBB |

REX
3205

REX'
3210

3244    3246

VVVV FIELD
3220

3254    3256

EP 3 929 736 A1

# FIG. 32D

CLASS FIELD 3168    ALPHA FIELD 3152    BETA FIELD 3154

REGISTER ARCHITECTURE 3300

GENERAL PURPOSE REGISTERS 3325
16 X 64 BITS

SCALAR FP STACK REGISTER FILE 3345
(X87FP)
80 BITS

ALIASED

64 BITS
MMX PACKED INT FLAT
REGISTER FILE 3350

WRITE MASK REGISTERS 3315
64 BITS

$k_0$

$k_7$

VECTOR REGISTERS 3310
512 BITS

$zmm_0$

$ymm_0$

$xmm_0$

$zmm_{31}$

$ymm_{15}$

$xmm_{15}$

128 BITS

256 BITS

FIG. 33

## FIG. 34A

PIPELINE 3400

| FETCH 3402 | LENGTH DECODING 3404 | DECODE 3406 | ALLOC. 3408 | RENAMING 3410 | SCHEDULE 3412 | REGISTER READ/ MEMORY READ 3414 | EXECUTE STAGE 3416 | WRITE BACK/ MEMORY WRITE 3418 | EXCEPTION HANDLING 3422 | COMMIT 3424 |
|---|---|---|---|---|---|---|---|---|---|---|

CORE 3490

**FIG. 34B**

FRONT END UNIT 3430

BRANCH PREDICTION UNIT 3432

INSTRUCTION CACHE UNIT 3434

INSTRUCTION TLB UNIT 3436

INSTRUCTION FETCH 3438

DECODE UNIT 3440

EXECUTION ENGINE UNIT 3450

RENAME / ALLOCATOR UNIT 3452

RETIREMENT UNIT 3454

SCHEDULER UNIT(S) 3456

PHYSICAL REGISTER FILES UNIT(S) 3458

EXECUTION UNIT(S) 3462

MEMORY ACCESS UNIT(S) 3464

EXECUTION CLUSTER(S) 3460

MEMORY UNIT 3470

PREFETCH CIRCUIT 3478

DATA TLB UNIT 3472

DATA CACHE UNIT 3474

L2 CACHE UNIT 3476

MEMORY 3480

EP 3 929 736 A1

**FIG. 35B**

WRITE MASK REGISTERS 3526

16-WIDE VECTOR ALU 3528

SWIZZLE 3520

VECTOR REGISTERS 3514

NUMERIC CONVERT 3522B

REPLICATE 3524

NUMERIC CONVERT 3522A

L1 DATA CACHE 3506A

**FIG. 35A**

INSTRUCTION DECODE 3500

VECTOR UNIT 3510

VECTOR REGISTERS 3514

SCALAR UNIT 3508

SCALAR REGISTERS 3512

L1 CACHE 3506

LOCAL SUBSET OF THE L2 CACHE 3504

RING NETWORK 3502

PROCESSOR
3600

| SPECIAL PURPOSE LOGIC 3608 | CORE 3602A<br>CACHE UNIT(S)<br>3604A | • • • | CORE 3602N<br>CACHE UNIT(S)<br>3604N | SYSTEM AGENT UNIT 3610 |  |
|---|---|---|---|---|---|
|  | SHARED CACHE UNIT(S) 3606 |  |  | INTEGRATED MEMORY CONTROLLER UNIT(S) 3614 | BUS CONTROLLER UNIT(S) 3616 |
|  | RING 3612 |  |  |  |  |

FIG. 36

**FIG. 37**

**FIG. 38**

FIG. 39

EP 3 929 736 A1

SYSTEM ON A CHIP
4000

**APPLICATION PROCESSOR 4010**

CORE 3602A

CACHE
UNIT(S)
3604A

• • •

CORE 3602N

CACHE
UNIT(S)
3604N

SHARED CACHE UNIT(S) 3606

SYSTEM AGENT
UNIT 3610

COPROCESSOR(S) 4020

INTERCONNECT UNIT(S) 4002

BUS
CONTROLLER
UNIT(S) 3616

INTEGRATED
MEMORY
CONTROLLER
UNIT(S) 3614

SRAM UNIT
4030

DMA UNIT 4032

DISPLAY UNIT
4040

**FIG. 40**

FIG. 41

EP 3 929 736 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 629 154 A2 (INTEL CORP [US]) 1 April 2020 (2020-04-01) * paragraphs [0074], [0078], [0099], [0118], [0137], [0139], [0155] * * figures 6,13,21 * ----- | 1-15 | INV. G06F9/30 G06F17/16 G06F9/38 |
| X | US 2018/276534 A1 (HENRY G GLENN [US]) 27 September 2018 (2018-09-27) * paragraphs [0060], [0063], [0065], [0075], [0141], [0142], [0186], [0293] * * figure 1 * ----- | 1,9 | |

TECHNICAL FIELDS
SEARCHED (IPC)

G06F

The present search report has been drawn up for all claims

| Place of search | Date of completion of the search | Examiner |
|---|---|---|
| The Hague | 3 June 2021 | Gratia, Romain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 21 4433

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2021

| Patent document cited in search report | | Publication date | Patent family member(s) | | Publication date |
|---|---|---|---|---|---|
| EP 3629154 | A2 | 01-04-2020 | CN | 110955454 A | 03-04-2020 |
| | | | EP | 3629154 A2 | 01-04-2020 |
| | | | US | 2020104135 A1 | 02-04-2020 |
| US 2018276534 | A1 | 27-09-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Intel® 64 and IA-32 Architectures Software Developer's Manual,* November 2018

- *Intel® Architecture Instruction Set Extensions Programming Reference,* October 2018